# EUROPEAN PATENT APPLICATION

(11) **EP 4 460 059 A1**
(43) Date of publication of application: **06.11.2024**
(21) Application number: 23746337.7
(22) Date of filing: 20.01.2023
(51) Int. Cl.: H04W 12/06, H04W 88/00, H04W 8/18

(54) **AUTHORIZATION METHOD AND APPARATUS**

(30) Priority: 29.01.2022 CN 202210112141
(71) Applicant: Huawei Technologies Co., Ltd., Shenzhen, Guangdong 518129 (CN)
(72) Inventor: WU, Yizhuang, Shenzhen, Guangdong 518129 (CN)
(74) Representative: Pfenning, Meinig & Partner mbB
(86) International application number: PCT/CN2023/073403
(87) International publication number: WO 2023/143459

(57) **Abstract**

This application provides an authorization method and an apparatus, to verify whether a terminal device is authorized to provide or use a specific relay service, and may be applied to fields such as a 4G system, a 5G system, and a future communication system, for example, a 6G system. The method includes: A policy control function network element receives an authorization request message from an access and mobility management function network element, and determines, based on proximity-based services authorization information of a terminal device, whether the terminal device is authorized to use a relay service code, where the authorization request message includes the relay service code from the terminal device, the authorization request message is for requesting to verify whether the terminal device is authorized to use the relay service code, the relay service code identifies a connection service provided by a relay device for a remote device, and the proximity-based services authorization information indicates a relay service with which the terminal device is authorized.

## Description

This application claims priority to Chinese Patent Application No. 202210112141.7, filed with the China National Intellectual Property Administration on January 29, 2022 and entitled "AUTHORIZATION METHOD AND APPARATUS", which is incorporated herein by reference in its entirety.

### TECHNICAL FIELD

This application relates to the communication field, and in particular, to an authorization method and an apparatus.

### BACKGROUND

With rapid development of mobile communication, users have increasingly high requirements for bandwidth. Device-to-device (device-to-device, D2D) communication allows direct communication between terminal devices, and can effectively improve spectrum resource utilization.

In the D2D communication, one terminal device (referred to as a remote terminal device) may obtain a service from a data network with assistance of the other terminal device (referred to as a relay terminal device). In other words, the remote terminal device may be connected to the network via the relay terminal device. The relay terminal device establishes a connection to a mobile network, a relay communication connection is established between the remote terminal device and the relay terminal device, and the relay terminal device may provide a relay service for the remote terminal device through the relay communication connection.

When the remote terminal device performs communication connection via the relay terminal device, no corresponding solution has been provided in the industry for how to ensure security of establishing the relay communication connection.

### SUMMARY

Embodiments of this application provide an authorization method and an apparatus, to ensure security of establishing a relay communication connection.

To achieve the foregoing objective, the following technical solutions are used in this application.

According to a first aspect, an authorization method is provided. The authorization method includes: A policy control function network element receives an authorization request message from an access and mobility management function network element, and determines, based on proximity-based services authorization information of a terminal device, whether the terminal device is authorized to use a relay service code, where the authorization request message includes the relay service code from the terminal device, the authorization request message is for requesting to verify whether the terminal device is authorized to use the relay service code, the relay service code identifies a connection service provided by a relay device for a remote device, the access and mobility management function network element serves the terminal device, and the proximity-based services authorization information indicates a relay service with which the terminal device is authorized.

Based on the authorization method provided in the first aspect, the policy control function network element obtains the relay service code from the terminal device by interacting with the access and mobility management function network element, and determines, based on the proximity-based services authorization information of the terminal device, whether the terminal device is authorized to use the relay service code, where the relay service code identifies the connection service provided by the relay device for the remote device. In this way, whether the terminal device is authorized to use a relay service identified by the relay service code can be verified, so that security of establishing a relay communication connection can be ensured.

In a possible design manner, the authorization request message further includes a public land mobile network identifier, the authorization request message indicates that the terminal device is a relay terminal device, and the determining, based on proximity-based services authorization information of a terminal device, whether the terminal device is authorized to use a relay service code may include: determining, based on the proximity-based services authorization information, whether the terminal device is authorized to use the relay service code and whether the terminal device is authorized to relay traffic in a public land mobile network corresponding to the public land mobile network identifier.

In this way, when the terminal device is the relay terminal device, whether the terminal device is authorized to provide the remote terminal device with the relay service identified by the relay service code and whether the terminal device is authorized to relay the traffic for the remote terminal device in the public land mobile network are verified, so that it can be ensured that the relay terminal device uses the authorized relay service code and relays the traffic for the remote terminal device in the authorized public land mobile network corresponding to the public land mobile network identifier. It may also be understood as that it is ensured that the relay terminal device uses the authorized relay service code to relay the traffic for the remote terminal device in the authorized public land mobile network corresponding to the public land mobile network identifier. In this way, security can be improved.

In a possible design manner, the determining, based on the proximity-based services authorization information, whether the terminal device is authorized to use the relay service code and whether the terminal device is authorized to relay traffic in a public land mobile network corresponding to the public land mobile network identifier includes: determining whether the proximity-based services authorization information includes the relay service code and the public land mobile network identifier, where if the proximity-based services authorization information includes the relay service code and the public land mobile network identifier, the terminal device is authorized to use the relay service code and is authorized to relay the traffic in the public land mobile network corresponding to the public land mobile network identifier; if the proximity-based services authorization information does not include the relay service code, the terminal device is not authorized to use the relay service code; or if the proximity-based services authorization information does not include the public land mobile network identifier, the terminal device is not authorized to relay the traffic in the public land mobile network corresponding to the public land mobile network identifier.

In other words, if the proximity-based services authorization information includes the relay service code and the public land mobile network identifier, it is determined that the terminal device is authorized to use the relay service code and is authorized to relay the traffic in the public land mobile network corresponding to the public land mobile network identifier. For the relay terminal device, being authorized to use the relay service code may be understood as that the terminal device is authorized to serve as the relay terminal device to provide the relay service corresponding to the relay service code.

In a possible design manner, the authorization request message indicates that the terminal device is a remote terminal device, and the determining, based on proximity-based services authorization information of a terminal device, whether the terminal device is authorized to use a relay service code may include: determining whether the proximity-based services authorization information includes the relay service code, where if the proximity-based services authorization information includes the relay service code, the terminal device serving as the remote terminal device is authorized to use the relay service code; or if the proximity-based services authorization information does not include the relay service code, the terminal device serving as the remote terminal device is not authorized to use the relay service code.

In this way, when the terminal device is the remote terminal device, whether the proximity-based services authorization information corresponding to the terminal device includes the relay service code is verified, so that it can be ensured that a relay terminal device uses an authorized remote service code. In this way, security can be improved. That the terminal device serving as the remote terminal device is authorized to use the relay service code may be understood as that the terminal device serves as the remote terminal device to use the relay service corresponding to the relay service code.

Optionally, the authorization request message indicates that the terminal device is a remote terminal device, and the determining, based on proximity-based services authorization information of a terminal device, whether the terminal device is authorized to use a relay service code may include: determining, based on proximity-based services authorization information corresponding to the terminal device serving as the remote terminal device, whether the terminal device is authorized to use the relay service code, where the proximity-based services authorization information may include the proximity-based services authorization information corresponding to the terminal device serving as the remote terminal device, and may further include proximity-based services authorization information corresponding to the terminal device serving as a relay terminal device.

Optionally, the authorization request message indicates that the terminal device is a relay terminal device, and the determining, based on proximity-based services authorization information of a terminal device, whether the terminal device is authorized to use a relay service code may include: determining, based on proximity-based services authorization information corresponding to the terminal device serving as the relay terminal device, whether the terminal device is authorized to use the relay service code, where the proximity-based services authorization information may include the proximity-based services authorization information corresponding to the terminal device serving as the relay terminal device, and may further include proximity-based services authorization information corresponding to the terminal device serving as a remote terminal device.

In other words, some information in the proximity-based services authorization information may be selected based on a type (the relay terminal device or the remote terminal device) of the terminal device, to determine whether the terminal device is authorized to use the relay service code.

In a possible design manner, the authorization method provided in the first aspect may further include: sending an authorization response message to the access and mobility management function network element, where the authorization response message may indicate whether the terminal device is authorized to use the relay service code. For example, the authorization response message may indicate being authorized or unauthorized, or the authorization response message may indicate an authorization success or an authorization failure.

In a possible design manner, the authorization request message further includes one or more of the following: terminal indication information, an identifier of the terminal device, and a context identifier of the terminal device, and the terminal indication information may indicate that the terminal device is the remote terminal device or the relay terminal device. For example, the terminal indication information may indicate that the terminal device serves as the remote terminal device to request verification or serves as the relay terminal device to request verification.

In a possible design manner, the proximity-based services authorization information is determined based on the identifier of the terminal device and/or the context identifier of the terminal device.

According to a second aspect, an authorization method is provided. The authorization method may include: receiving a non-access stratum request message from a terminal device, sending an authorization request message to a policy control function network element in response to the non-access stratum request message, and receiving an authorization response message from the policy control function network element, where the non-access stratum request message includes a relay service code, the relay service code identifies a connection service provided by a relay device for a remote device, the authorization request message includes the relay service code, the authorization request message is for requesting to verify whether the terminal device is authorized to use the relay service code, and the authorization response message indicates whether the terminal device is authorized to use the relay service code.

In a possible design manner, the authorization request message further includes a public land mobile network identifier.

In a possible design manner, that the authorization response message indicates whether the terminal device is authorized to use the relay service code is specifically: indicating whether the terminal device is authorized to use the relay service code and whether the terminal device is authorized to relay traffic in a public land mobile network corresponding to the public land mobile network identifier. It may be further understood as indicating whether a relay terminal device is authorized to use the authorized relay service code to relay the traffic for the remote device in the public land mobile network corresponding to the public land mobile network identifier.

In a possible design manner, the non-access stratum request message further includes a proximity-based services key identifier; and when the authorization response message indicates that the terminal device is authorized to use the relay service code and is authorized to relay the traffic in the public land mobile network corresponding to the public land mobile network identifier, the authorization method provided in the second aspect further includes: sending an authentication server function network element identifier get request message to a unified data management network element, where the authentication server function network element identifier get request message may include the proximity-based services key identifier.

In a possible design manner, when the authorization response message indicates that the terminal device is authorized to use the relay service code, the authorization method provided in the second aspect further includes: sending a proximity-based services request message to an authentication server function network element, where the proximity-based services request message may include the relay service code.

In a possible design manner, when the authorization response message indicates that the terminal device is not authorized to use the relay service code and/or is not authorized to relay the traffic in the public land mobile network corresponding to the public land mobile network identifier, the authorization method provided in the second aspect further includes: sending a non-access stratum response message to the terminal device, where the non-access stratum response message may indicate a request failure.

In a possible design manner, when the terminal device is a relay terminal device, the authorization method provided in the second aspect further includes: determining, based on proximity-based services subscription information of the terminal device, whether the terminal device is authorized to serve as a remote terminal device or the relay terminal device.

In a possible design manner, when the terminal device is a remote terminal device, the authorization method provided in the second aspect further includes: determining, based on proximity-based services subscription information of the terminal device, whether the terminal device is authorized to serve as the remote terminal device.

In a possible design manner, the authorization method provided in the second aspect may further include: determining, based on the non-access stratum request message, whether the terminal device is the relay terminal device or the remote terminal device.

In a possible design manner, the authorization request message further includes one or more of the following: terminal indication information, an identifier of the terminal device, and a context identifier of the terminal device, and the terminal indication information may indicate that the terminal device is the remote terminal device or the relay terminal device.

In addition, for technical effects of the authorization method in the second aspect, refer to the technical effects of the authorization method in any possible implementation of the first aspect. Details are not described herein again.

According to a third aspect, an authorization method is provided. The authorization method includes: obtaining a relay service code of a terminal device, and determining, based on proximity-based services authorization information of the terminal device, whether the terminal device is authorized to use the relay service code, where the relay service code identifies a connection service provided by a relay device for a remote device, and the proximity-based services authorization information indicates a relay service with which the terminal device is authorized.

Based on the method provided in the third aspect, an access and mobility management function network element obtains the relay service code of the terminal device, and determines, based on the proximity-based services authorization information of the terminal device, whether the terminal device is authorized to use the relay service code, where the relay service code identifies the connection service provided by the relay device for the remote device. In this way, whether the terminal device is authorized to use a relay service identified by the relay service code can be verified, so that security of establishing a relay communication connection can be ensured.

In a possible design manner, the terminal device is a remote terminal device, and the determining, based on proximity-based services authorization information of the terminal device, whether the terminal device is authorized to use the relay service code may include: determining whether the proximity-based services authorization information includes the relay service code, where if the proximity-based services authorization information includes the relay service code, the terminal device serving as the remote terminal device is authorized to use the relay service code; or if the proximity-based services authorization information does not include the relay service code, the terminal device serving as the remote terminal device is not authorized to use the relay service code. In this way, when the terminal device is the remote terminal device, whether the proximity-based services authorization information corresponding to the terminal device includes the relay service code is verified, so that it can be ensured that a relay terminal device uses the authorized relay service code. In this way, security can be improved.

In a possible design manner, the authorization method provided in the third aspect may include: when the terminal device serving as the remote terminal device is authorized to use the relay service code, sending a proximity-based services request message to an authentication server function network element, where the proximity-based services request message may include the relay service code.

In this way, after an authorization check on the terminal device succeeds (that is, the terminal device is authorized to use the relay service code), the access and mobility management function network element triggers a proximity-based services key identifier derivation process to the authentication server function network element, so that it can be ensured that the authentication server function network element derives a proximity-based services key identifier corresponding to the authorized terminal device, and security can be improved.

In a possible design manner, the terminal device is a relay terminal device, and the determining, based on proximity-based services authorization information of the terminal device, whether the terminal device is authorized to use the relay service code may include: determining, based on the proximity-based services authorization information, whether the terminal device is authorized to use the relay service code and whether the terminal device is authorized to relay traffic in a public land mobile network corresponding to a public land mobile network identifier, where the public land mobile network identifier is an identifier of a network served by an access and mobility management function network element. In this way, when the terminal device is the relay terminal device, whether the terminal device is authorized to use the relay service identified by the relay service code and whether the terminal device is authorized to use proximity-based services in the public land mobile network are verified, so that it can be ensured that the relay terminal device uses the authorized relay service code and public land mobile network identifier. In this way, security can be improved.

In a possible design manner, the determining, based on the proximity-based services authorization information, whether the terminal device is authorized to use the relay service code and whether the terminal device is authorized to relay traffic in a public land mobile network corresponding to a public land mobile network identifier may include: determining whether the proximity-based services authorization information includes the relay service code and the public land mobile network identifier, where if the proximity-based services authorization information includes the relay service code and the public land mobile network identifier, the terminal device is authorized to use the relay service code and is authorized to relay the traffic in the public land mobile network corresponding to the public land mobile network identifier; if the proximity-based services authorization information does not include the relay service code, the terminal device is not authorized to use the relay service code; or if the proximity-based services authorization information does not include the public land mobile network identifier, the terminal device is not authorized to relay the traffic in the public land mobile network corresponding to the public land mobile network identifier.

In other words, if the proximity-based services authorization information includes the relay service code and the public land mobile network identifier, it is determined that the terminal device is authorized to use the relay service code and is authorized to relay the traffic in the public land mobile network corresponding to the public land mobile network identifier.

In a possible design manner, the authorization method provided in the third aspect may include: when the terminal device is authorized to use the relay service code and is authorized to relay the traffic in the public land mobile network corresponding to the public land mobile network identifier, sending an authentication server function network element identifier get request message or a key get request message to a unified data management network element, where the authentication server function network element identifier get request message may include a proximity-based services key identifier or a subscription concealed identifier, and the key get request message may include the proximity-based services key identifier or the subscription concealed identifier.

In this way, a corresponding key is obtained and the relay communication connection is established only when an authorization check on the terminal device succeeds (that is, the terminal device is authorized to use the relay service code and is authorized to relay the traffic in the public land mobile network corresponding to the public land mobile network identifier). In this way, security can be improved.

In a possible design manner, the authorization method provided in the third aspect may include: when the terminal device is not authorized to use the relay service code and/or is not authorized to relay the traffic in the public land mobile network corresponding to the public land mobile network identifier, sending a non-access stratum response message to the terminal device, where the non-access stratum response message may indicate a request failure. In this way, if the terminal device is not authorized to use the relay service code and/or is not authorized to relay the traffic in the public land mobile network corresponding to the public land mobile network identifier, the terminal device is notified of the request failure, and key derivation is not performed, so that the security of establishing the relay communication connection can be improved.

In a possible design manner, the obtaining a relay service code of a terminal device may include: receiving a non-access stratum request message from the terminal device, where the non-access stratum request message may include the relay service code. In this way, in a process in which the terminal device triggers a key request, the access and mobility management function network element can verify whether the terminal device is authorized to use the relay service code to provide or obtain the relay service.

In a possible design manner, the obtaining a relay service code of a terminal device may include: receiving an authorization request message from the unified data management network element, where the authorization request message may include the relay service code, and the authorization request message is for requesting to verify whether the terminal device is authorized to use the relay service code. In this way, the unified data management network element may request the authorization check from the access and mobility management function network element, and trigger the access and mobility management function network element to check whether the terminal device is authorized to use the relay service code.

In a possible design manner, the authorization method provided in the third aspect may include: determining, based on proximity-based services subscription information of the terminal device, whether the terminal device is authorized to serve as the relay terminal device. In this way, the access and mobility management function network element may determine whether the terminal device is authorized to serve as the relay terminal device. In this way, security can be improved.

In a possible design manner, the determining, based on proximity-based services authorization information of the terminal device, whether the terminal device is authorized to use the relay service code may include: when the terminal device is authorized to serve as the remote terminal device or the relay terminal device, determining, based on the proximity-based services authorization information of the terminal device, whether the terminal device is authorized to use the relay service code. In this way, a case in which when the terminal device is not authorized to serve as the remote terminal device or the relay terminal device, the access and mobility management function network element determines whether the terminal device is authorized to use the relay service code can be avoided. In this way, power consumption can be reduced.

In a possible design manner, the authorization method provided in the third aspect may include: sending an authorization response message to the unified data management network element, where the authorization response message may indicate whether the terminal device is authorized to use the relay service code. For example, the authorization response message may indicate being authorized or unauthorized, or the authorization response message may indicate an authorization success or an authorization failure.

In a possible design manner, the authorization method provided in the third aspect may include: receiving a communication message from a policy control function network element, where the communication message may include the proximity-based services authorization information. In other words, the proximity-based services authorization information may be obtained by the access and mobility management function network element from the policy control function network element.

For example, the proximity-based services authorization information may be sent by the policy control function network element to the access and mobility management function network element in a registration process of the terminal device or in a process in which the terminal device actively requests a policy, may be actively delivered by the policy control function network element to the access and mobility management function network element after the policy control function network element detects a policy update, or may be actively requested by the access and mobility management function network element.

Optionally, the communication message may further include a policy container, the policy container may include proximity-based services policy information, and the proximity-based services policy information is used by the terminal device to obtain a proximity-based services communication service.

In a possible design manner, the authorization method provided in the third aspect may include: sending an authorization information request message to the policy control function network element, where the authorization information request message may be for requesting the proximity-based services authorization information of the terminal device. In this way, the access and mobility management function network element may actively request the proximity-based services authorization information from the policy control function network element.

According to a fourth aspect, an authorization method is provided. The authorization method includes: receiving an authentication server function network element identifier get request message from an access and mobility management function network element, sending an authorization request message to an access and mobility management function network element determined based on a proximity-based services key identifier or a subscription concealed identifier, and receiving an authorization response message from the access and mobility management function network element determined based on the proximity-based services key identifier or the subscription concealed identifier, where the authentication server function network element identifier get request message includes the proximity-based services key identifier and a relay service code, or the authentication server function network element identifier get request message includes the subscription concealed identifier and a relay service code; and the relay service code identifies a connection service provided by a relay device for a remote device, the authorization request message includes the relay service code, the authorization request message is for requesting to verify whether a terminal device is authorized to use the relay service code, and the authorization response message indicates whether the terminal device is authorized to use the relay service code.

In a possible design manner, the authorization method provided in the fourth aspect may include: determining, based on proximity-based services subscription information of the terminal device, whether the terminal device is authorized to serve as a remote terminal device.

In a possible design manner, the sending an authorization request message to an access and mobility management function network element determined based on a proximity-based services key identifier or a subscription concealed identifier includes: when the terminal device is authorized to serve as the remote terminal device, sending the authorization request message to the access and mobility management function network element determined based on the proximity-based services key identifier or the subscription concealed identifier.

In a possible design manner, when the authorization response message indicates that the terminal device is authorized to use the relay service code, the authorization method provided in the fourth aspect may include: sending an authentication server function network element identifier get response message to the access and mobility management function network element, where the authentication server function network element identifier get response message may include an authentication server function network element instance identifier.

In a possible design manner, when the authorization response message indicates that the terminal device is authorized to use the relay service code, the authorization method provided in the fourth aspect may include: sending a proximity-based services request message to an authentication server function network element, where the proximity-based services request message may include the subscription permanent identifier, the relay service code, and a nonce.

In a possible design manner, the authorization method provided in the fourth aspect may include: receiving a proximity-based services response message from the authentication server function network element, and sending a key get response message to the access and mobility management function network element, where the proximity-based services response message may include a key and a freshness parameter, and the key get response message includes the key and the freshness parameter.

In addition, for technical effects of the authorization method in the fourth aspect, refer to the technical effects of the authorization method in any possible implementation of the second aspect. Details are not described herein again.

According to a fifth aspect, an authorization method is provided. The authorization method includes: receiving a policy control create request message or a policy control update request message from an access and mobility management function network element, sending a policy control create response message or a policy control update response message to the access and mobility management function network element, and sending a communication message to the access and mobility management function network element, where the policy control create request message includes a subscription permanent identifier of a terminal device and a policy container of the terminal device, the policy control update request message includes the policy container of the terminal device, the policy container of the terminal device includes one or more of the following: a policy section identifier, an operating system identifier, an indication indicating that the terminal device supports an access network discovery and selection policy, and an indication of a proximity-based services policy provision request, the policy control create response message includes a policy control request trigger parameter, the communication message includes proximity-based services authorization information and the policy container that are of the terminal device, the proximity-based services authorization information indicates a relay service with which the terminal device is authorized, the policy container may include proximity-based services policy information, and the proximity-based services policy information is used by the terminal device to obtain a proximity-based services communication service.

In addition, for technical effects of the authorization method in the fifth aspect, refer to the technical effects of the authorization method in any possible implementation of the second aspect. Details are not described herein again.

According to a sixth aspect, an authorization method is provided. The authorization method includes: determining that proximity-based services policy information of a terminal device is updated, and sending a communication message to an access and mobility management function network element, where the communication message includes proximity-based services authorization information and a policy container that are of the terminal device, the proximity-based services authorization information indicates a relay service with which the terminal device is authorized, the policy container may include proximity-based services policy information, and the proximity-based services policy information is used by the terminal device to obtain a proximity-based services communication service.

In addition, for technical effects of the authorization method in the sixth aspect, refer to the technical effects of the authorization method in any possible implementation of the second aspect. Details are not described herein again.

According to a seventh aspect, an authorization method is provided. The authorization method includes: receiving an authorization information request message from an access and mobility management function network element, and sending a communication message to the access and mobility management function network element, where the authorization information request message is for requesting proximity-based services authorization information of a terminal device, the communication message includes the proximity-based services authorization information of the terminal device, the proximity-based services authorization information indicates a relay service with which the terminal device is authorized, and proximity-based services policy information is used by the terminal device to obtain a proximity-based services communication service.

In a possible design solution, the communication message further includes authorization indication information, and the authorization indication information may indicate that the proximity-based services authorization information is proximity-based services authorization information corresponding to the terminal device serving as a relay terminal device or a remote terminal device.

In addition, for technical effects of the authorization method in the seventh aspect, refer to the technical effects of the authorization method in any possible implementation of the second aspect. Details are not described herein again.

According to an eighth aspect, a communication apparatus is provided. The communication apparatus includes a transceiver module and a processing module.

The transceiver module is configured to receive an authorization request message from an access and mobility management function network element, where the authorization request message includes a relay service code from a terminal device, the authorization request message is for requesting to verify whether the terminal device is authorized to use the relay service code, and the relay service code identifies a connection service provided by a relay device for a remote device.

The processing module is configured to determine, based on proximity-based services authorization information of the terminal device, whether the terminal device is authorized to use the relay service code, where the proximity-based services authorization information indicates a relay service with which the terminal device is authorized.

In a possible design manner, the authorization request message further includes a public land mobile network identifier, and the processing module is further configured to determine, based on the proximity-based services authorization information, whether the terminal device is authorized to use the relay service code and whether the terminal device is authorized to relay traffic in a public land mobile network corresponding to the public land mobile network identifier.

In a possible design manner, the processing module is further configured to determine whether the proximity-based services authorization information includes the relay service code and the public land mobile network identifier, where if the proximity-based services authorization information includes the relay service code and the public land mobile network identifier, the terminal device is authorized to use the relay service code and is authorized to relay the traffic in the public land mobile network corresponding to the public land mobile network identifier; if the proximity-based services authorization information does not include the relay service code, the terminal device is not authorized to use the relay service code; or if the proximity-based services authorization information does not include the public land mobile network identifier, the terminal device is not authorized to relay the traffic in the public land mobile network corresponding to the public land mobile network identifier.

In a possible design manner, the authorization request message indicates that the terminal device is a remote terminal device, and the processing module is further configured to determine whether the proximity-based services authorization information includes the relay service code, where if the proximity-based services authorization information includes the relay service code, the terminal device serving as the remote terminal device is authorized to use the relay service code; or if the proximity-based services authorization information does not include the relay service code, the terminal device serving as the remote terminal device is not authorized to use the relay service code.

In a possible design manner, the transceiver module is further configured to send an authorization response message to the access and mobility management function network element, where the authorization response message indicates whether the terminal device is authorized to use the relay service code.

In a possible design manner, the authorization request message further includes one or more of the following: terminal indication information, an identifier of the terminal device, and a context identifier of the terminal device, and the terminal indication information indicates that the terminal device is the remote terminal device or a relay terminal device.

In a possible design manner, the proximity-based services authorization information is determined based on the identifier of the terminal device and/or the context identifier of the terminal device.

It should be noted that, the transceiver module in the eighth aspect may include a receiving module and a sending module. The receiving module is configured to receive data and/or signaling from the access and mobility management function network element. The sending module is configured to send data and/or signaling to the access and mobility management function network element. A specific implementation of the transceiver module is not specifically limited in this application.

Optionally, the communication apparatus in the eighth aspect may further include a storage module. The storage module stores a program or instructions. When the processing module executes the program or the instructions, the communication apparatus in the eighth aspect is enabled to perform the method in the first aspect.

It should be noted that the communication apparatus in the eighth aspect may be a policy control function network element, or may be a chip (system) or another component or assembly that may be disposed in the policy control function network element. This is not limited in this application.

In addition, for technical effects of the communication apparatus in the eighth aspect, refer to the technical effects of the authorization method in any possible implementation of the first aspect. Details are not described herein again.

According to a ninth aspect, a communication apparatus is provided. The communication apparatus includes a sending module and a receiving module.

The receiving module is configured to receive a non-access stratum request message from a terminal device, where the non-access stratum request message includes a relay service code, and the relay service code identifies a connection service provided by a relay device for a remote device.

The sending module is configured to send an authorization request message to a policy control function network element in response to the non-access stratum request message, where the authorization request message includes the relay service code, and the authorization request message is for requesting to verify whether the terminal device is authorized to use the relay service code.

The receiving module is further configured to receive an authorization response message from the policy control function network element, where the authorization response message indicates whether the terminal device is authorized to use the relay service code.

In a possible design manner, the authorization request message may further include a public land mobile network identifier.

In a possible design manner, that the authorization response message indicates whether the terminal device is authorized to use the relay service code may be specifically: indicating whether the terminal device is authorized to use the relay service code and whether the terminal device is authorized to relay traffic in a public land mobile network corresponding to the public land mobile network identifier.

In a possible design manner, the non-access stratum request message may further include a proximity-based services key identifier, and the sending module is further configured to send an authentication server function network element identifier get request message to a unified data management network element, where the authentication server function network element identifier get request message may include the proximity-based services key identifier.

In a possible design manner, the sending module is further configured to: when the authorization response message indicates that the terminal device is authorized to use the relay service code, send a proximity-based services request message to an authentication server function network element, where the proximity-based services request message may include the relay service code.

In a possible design manner, the sending module is further configured to: when the authorization response message indicates that the terminal device is not authorized to use the relay service code and/or is not authorized to relay the traffic in the public land mobile network corresponding to the public land mobile network identifier, send a non-access stratum response message to the terminal device, where the non-access stratum response message indicates a request failure.

In a possible design manner, the communication apparatus provided in the ninth aspect further includes a processing module. The processing module is configured to: when the terminal device is a relay terminal device, determine, based on proximity-based services subscription information of the terminal device, whether the terminal device is authorized to serve as the relay terminal device.

In a possible design manner, the communication apparatus provided in the ninth aspect further includes a processing module. The processing module is further configured to: when the terminal device is a remote terminal device, determine, based on proximity-based services subscription information of the terminal device, whether the terminal device is authorized to serve as the remote terminal device.

In a possible design manner, the processing module is further configured to determine, based on the non-access stratum request message, whether the terminal device is the relay terminal device or the remote terminal device.

In a possible design manner, the authorization request message may further include one or more of the following: terminal indication information, an identifier of the terminal device, and a context identifier of the terminal device, and the terminal indication information may indicate that the terminal device is the remote terminal device or the relay terminal device.

It should be noted that the receiving module and the sending module may be separately disposed, or may be integrated into one module, namely, a transceiver module. Specific implementations of the receiving module and the sending module are not specifically limited in this application.

Optionally, the communication apparatus in the ninth aspect may further include a storage module. The storage module stores a program or instructions. When the processing module executes the program or the instructions, the communication apparatus in the ninth aspect is enabled to perform the method in the second aspect.

It should be noted that the communication apparatus in the ninth aspect may be an access and mobility management function network element, or may be a chip (system) or another component or assembly that may be disposed in the access and mobility management function network element. This is not limited in this application.

In addition, for technical effects of the communication apparatus in the ninth aspect, refer to the technical effects of the authorization method in any possible implementation of the second aspect. Details are not described herein again.

According to a tenth aspect, a communication apparatus is provided. The communication apparatus includes a transceiver module and a processing module.

The transceiver module is configured to obtain a relay service code of a terminal device, where the relay service code identifies a connection service provided by a relay device for a remote device.

The processing module is configured to determine, based on proximity-based services authorization information of the terminal device, whether the terminal device is authorized to use the relay service code, where the proximity-based services authorization information indicates a relay service with which the terminal device is authorized.

In a possible design manner, the terminal device is a remote terminal device, and the processing module is configured to determine whether the proximity-based services authorization information includes the relay service code, where if the proximity-based services authorization information includes the relay service code, the terminal device serving as the remote terminal device is authorized to use the relay service code; or if the proximity-based services authorization information does not include the relay service code, the terminal device serving as the remote terminal device is not authorized to use the relay service code.

In a possible design manner, the transceiver module is further configured to: when the terminal device serving as the remote terminal device is authorized to use the relay service code, send a proximity-based services request message to an authentication server function network element, where the proximity-based services request message may include the relay service code.

In a possible design manner, the terminal device serves as a relay terminal device, and the processing module is further configured to determine, based on the proximity-based services authorization information, whether the terminal device is authorized to use the relay service code and whether the terminal device is authorized to relay traffic in a public land mobile network corresponding to a public land mobile network identifier, where the public land mobile network identifier is an identifier of a network served by the communication apparatus.

In a possible design manner, the processing module is further configured to determine whether the proximity-based services authorization information includes the relay service code and the public land mobile network identifier, where if the proximity-based services authorization information includes the relay service code and the public land mobile network identifier, the terminal device is authorized to use the relay service code and is authorized to relay the traffic in the public land mobile network corresponding to the public land mobile network identifier; if the proximity-based services authorization information does not include the relay service code, the terminal device is not authorized to use the relay service code; or if the proximity-based services authorization information does not include the public land mobile network identifier, the terminal device is not authorized to relay the traffic in the public land mobile network corresponding to the public land mobile network identifier.

In a possible design manner, the transceiver module is further configured to: when the terminal device is authorized to use the relay service code and is authorized to relay the traffic in the public land mobile network corresponding to the public land mobile network identifier, sending an authentication server function network element identifier get request message or a key get request message to a unified data management network element, where the authentication server function network element identifier get request message may include a proximity-based services key identifier or a subscription concealed identifier, and the key get request message includes the proximity-based services key identifier or the subscription concealed identifier.

In a possible design manner, the transceiver module is further configured to: when the terminal device is not authorized to use the relay service code and/or is not authorized to relay the traffic in the public land mobile network corresponding to the public land mobile network identifier, send a non-access stratum response message to the terminal device, where the non-access stratum response message indicates a request failure.

In a possible design manner, the transceiver module is further configured to receive a non-access stratum request message from the terminal device, where the non-access stratum request message may include the relay service code.

In a possible design manner, the transceiver module is further configured to receive an authorization request message from the unified data management network element, where the authorization request message may include the relay service code, and the authorization request message is for requesting to verify whether the terminal device is authorized to use the relay service code.

In a possible design manner, the processing module is further configured to determine, based on proximity-based services subscription information of the terminal device, whether the terminal device is authorized to serve as the relay terminal device.

In a possible design manner, the processing module is further configured to: when the terminal device is authorized to serve as the remote terminal device or the relay terminal device, determine, based on the proximity-based services authorization information of the terminal device, whether the terminal device is authorized to use the relay service code.

In a possible design manner, the transceiver module is further configured to send an authorization response message to the unified data management network element, where the authorization response message may indicate whether the terminal device is authorized to use the relay service code.

In a possible design manner, the transceiver module is further configured to receive a communication message from a policy control function network element, where the communication message includes the proximity-based services authorization information.

In a possible design manner, the transceiver module is further configured to send an authorization information request message to the policy control function network element, where the authorization information request message may be for requesting the proximity-based services authorization information of the terminal device.

It should be noted that the transceiver module in the tenth aspect may include a receiving module and a sending module. The receiving module is configured to receive data and/or signaling from the terminal device, an access network device, the policy control function network element, the unified data management network element, and the authentication server function network element. The sending module is configured to send data and/or signaling to the terminal device, the access network device, the policy control function network element, the unified data management network element, and the authentication server function network element. A specific implementation of the transceiver module is not specifically limited in this application.

Optionally, the communication apparatus in the tenth aspect may further include a storage module. The storage module stores a program or instructions. When the processing module executes the program or the instructions, the communication apparatus in the tenth aspect is enabled to perform the method in the third aspect.

It should be noted that the communication apparatus in the tenth aspect may be an access and mobility management function network element, or may be a chip (system) or another component or assembly that may be disposed in the access and mobility management function network element. This is not limited in this application.

In addition, for technical effects of the communication apparatus in the tenth aspect, refer to the technical effects of the authorization method in any possible implementation of the third aspect. Details are not described herein again.

According to an eleventh aspect, a communication apparatus is provided. The authorization method includes a sending module and a receiving module.

The receiving module is configured to receive an authentication server function network element identifier get request message from an access and mobility management function network element, where the authentication server function network element identifier get request message includes a proximity-based services key identifier and a relay service code, or the authentication server function network element identifier get request message includes a subscription concealed identifier and a relay service code; and the relay service code identifies a connection service provided by a relay device for a remote device.

The sending module is configured to send an authorization request message to an access and mobility management function network element determined based on the proximity-based services key identifier or the subscription concealed identifier, where the authorization request message includes the relay service code, and the authorization request message is for requesting to verify whether a terminal device is authorized to use the relay service code.

The receiving module is further configured to receive an authorization response message from the access and mobility management function network element determined based on the proximity-based services key identifier or the subscription concealed identifier, where the authorization response message indicates whether the terminal device is authorized to use the relay service code.

In a possible design manner, the communication apparatus provided in the eleventh aspect may further include a processing module. The processing module is configured to determine, based on proximity-based services subscription information of the terminal device, whether the terminal device is authorized to serve as a remote terminal device.

In a possible design manner, the sending module is further configured to: when the terminal device is authorized to serve as the remote terminal device, send the authorization request message to the access and mobility management function network element determined based on the proximity-based services key identifier or the subscription concealed identifier.

In a possible design manner, the sending module is further configured to: when the authorization response message indicates that the terminal device is authorized to use the relay service code, send an authentication server function network element identifier get response message to the access and mobility management function network element, where the authentication server function network element identifier get response message may include an authentication server function network element instance identifier.

In a possible design manner, the sending module is further configured to: when the authorization response message indicates that the terminal device is authorized to use the relay service code, send a proximity-based services request message to an authentication server function network element, where the proximity-based services request message may include the subscription permanent identifier, the relay service code, and a nonce.

In a possible design manner, the receiving module is further configured to receive a proximity-based services response message from the authentication server function network element, where the proximity-based services response message may include a key and a freshness parameter.

The sending module is further configured to send a key get response message to the access and mobility management function network element, where the key get response message may include the key and the freshness parameter.

It should be noted that the receiving module and the sending module may be separately disposed, or may be integrated into one module, namely, a transceiver module. Specific implementations of the receiving module and the sending module are not specifically limited in this application.

Optionally, the communication apparatus in the eleventh aspect may further include a storage module. The storage module stores a program or instructions. When the processing module executes the program or the instructions, the communication apparatus in the eleventh aspect is enabled to perform the method in the fourth aspect.

It should be noted that the communication apparatus in the eleventh aspect may be a unified data management network element, or may be a chip (system) or another component or assembly that may be disposed in the unified data management network element. This is not limited in this application.

In addition, for technical effects of the communication apparatus in the eleventh aspect, refer to the technical effects of the authorization method in any possible implementation of the fourth aspect. Details are not described herein again.

According to a twelfth aspect, a communication apparatus is provided. The communication apparatus includes a sending module and a receiving module.

The receiving module is configured to receive a policy control create request message or a policy control update request message from an access and mobility management function network element, where the policy control create request message includes a subscription permanent identifier of a terminal device and a policy container of the terminal device, the policy control update request message includes the policy container of the terminal device, and the policy container of the terminal device includes one or more of the following: a policy section identifier, an operating system identifier, an indication indicating that the terminal device supports an access network discovery and selection policy, and an indication of a proximity-based services policy provision request.

The sending module is configured to send a policy control create response message or a policy control update response message to the access and mobility management function network element, where the policy control create response message includes a policy control request trigger parameter.

The sending module is configured to send a communication message to the access and mobility management function network element, where the communication message includes proximity-based services authorization information and the policy container that are of the terminal device, the proximity-based services authorization information indicates a relay service with which the terminal device is authorized, the policy container may include proximity-based services policy information, and the proximity-based services policy information is used by the terminal device to obtain a proximity-based services communication service.

It should be noted that the receiving module and the sending module may be separately disposed, or may be integrated into one module, namely, a transceiver module. Specific implementations of the receiving module and the sending module are not specifically limited in this application.

Optionally, the communication apparatus in the twelfth aspect may further include a storage module and a processing module. The storage module stores a program or instructions. When the processing module executes the program or the instructions, the communication apparatus in the twelfth aspect is enabled to perform the method in the fifth aspect.

It should be noted that the communication apparatus in the twelfth aspect may be a policy control function network element, or may be a chip (system) or another component or assembly that may be disposed in the policy control function network element. This is not limited in this application.

In addition, for technical effects of the communication apparatus in the twelfth aspect, refer to the technical effects of the authorization method in any possible implementation of the fifth aspect. Details are not described herein again.

According to a thirteenth aspect, a communication apparatus is provided. The communication apparatus includes a transceiver module and a processing module.

The processing module is configured to determine that proximity-based services policy information of a terminal device is updated.

The transceiver module is configured to send a communication message to an access and mobility management function network element, where the communication message includes proximity-based services authorization information and a policy container that are of the terminal device, the proximity-based services authorization information indicates a relay service with which the terminal device is authorized, the policy container may include proximity-based services policy information, and the proximity-based services policy information is used by the terminal device to obtain a proximity-based services communication service.

It should be noted that the transceiver module in the thirteenth aspect may include a receiving module and a sending module. The receiving module is configured to receive data and/or signaling from the access and mobility management function network element. The sending module is configured to send data and/or signaling to the access and mobility management function network element. A specific implementation of the transceiver module is not specifically limited in this application.

Optionally, the communication apparatus in the thirteenth aspect may further include a storage module. The storage module stores a program or instructions. When the processing module executes the program or the instructions, the communication apparatus in the thirteenth aspect is enabled to perform the method in the sixth aspect.

It should be noted that the communication apparatus in the thirteenth aspect may be a policy control function network element, or may be a chip (system) or another component or assembly that may be disposed in the policy control function network element. This is not limited in this application.

In addition, for technical effects of the communication apparatus in the thirteenth aspect, refer to the technical effects of the authorization method in any possible implementation of the sixth aspect. Details are not described herein again.

According to a fourteenth aspect, a communication apparatus is provided. The communication apparatus includes a sending module and a receiving module.

The receiving module is configured to receive an authorization information request message from an access and mobility management function network element, where the authorization information request message is for requesting proximity-based services authorization information of a terminal device.

The sending module is configured to send a communication message to the access and mobility management function network element, where the communication message includes the proximity-based services authorization information of the terminal device, the proximity-based services authorization information indicates a relay service with which the terminal device is authorized, and proximity-based services policy information is used by the terminal device to obtain a proximity-based services communication service.

In a possible design manner, the communication message may further include authorization indication information, and the authorization indication information may indicate that the proximity-based services authorization information is proximity-based services authorization information corresponding to the terminal device serving as a relay terminal device or a remote terminal device.

It should be noted that the receiving module and the sending module may be separately disposed, or may be integrated into one module, namely, a transceiver module. Specific implementations of the receiving module and the sending module are not specifically limited in this application.

Optionally, the communication apparatus in the fourteenth aspect may further include a storage module and a processing module. The storage module stores a program or instructions. When the processing module executes the program or the instructions, the communication apparatus in the fourteenth aspect is enabled to perform the method in the seventh aspect.

It should be noted that the communication apparatus in the fourteenth aspect may be a policy control function network element, or may be a chip (system) or another component or assembly that may be disposed in the policy control function network element. This is not limited in this application.

In addition, for technical effects of the communication apparatus in the fourteenth aspect, refer to the technical effects of the authorization method in any possible implementation of the seventh aspect. Details are not described herein again.

According to a fifteenth aspect, a communication apparatus is provided. The communication apparatus includes a processor. The processor is coupled to a memory, and the memory is configured to store a computer program.

The processor is configured to execute the computer program stored in the memory, so that the authorization method in any possible implementation of the first aspect to the seventh aspect is performed.

In a possible design, the communication apparatus in the fifteenth aspect may further include a transceiver. The transceiver may be a transceiver circuit or an input/output port. The transceiver may be used by the communication apparatus to communicate with another device.

It should be noted that the input port may be configured to implement the receiving functions in the first aspect to the seventh aspect, and the output port may be configured to implement the sending functions in the first aspect to the seventh aspect.

In this application, the communication apparatus in the fifteenth aspect may be an access and mobility management function network element, a policy control function network element, a unified data management network element, or a chip or a chip system disposed inside the access and mobility management function network element, the policy control function network element, or the unified data management network element.

In addition, for technical effects of the communication apparatus in the fifteenth aspect, refer to the technical effects of the authorization method in any implementation of the first aspect to the seventh aspect. Details are not described herein again.

According to a sixteenth aspect, a communication system is provided. The communication system includes the communication apparatus in the eighth aspect and the communication apparatus in the ninth aspect. Alternatively, the communication system includes the communication apparatus in the tenth aspect and the communication apparatus in the eleventh aspect, and may further include the communication apparatus in the twelfth aspect, the communication apparatus in the thirteenth aspect, or the communication apparatus in the fourteenth aspect.

Alternatively, the communication system includes the communication apparatus in the eighth aspect and configured to implement the method in the first aspect and the communication apparatus in the ninth aspect and configured to implement the method in the second aspect. Alternatively, the communication system includes the communication apparatus in the tenth aspect and configured to implement the method in the third aspect and the communication apparatus in the eleventh aspect and configured to implement the method in the fourth aspect, and may further include the communication apparatus in the twelfth aspect and configured to implement the method in the fifth aspect, the communication apparatus in the thirteenth aspect and configured to implement the method in the sixth aspect, or the communication apparatus in the fourteenth aspect and configured to implement the method in the seventh aspect.

For example, the communication system may include an access and mobility management function network element and a policy control function network element. Alternatively, the communication system may include an access and mobility management function network element and a unified data management network element, and may further include a policy control function network element.

According to a seventeenth aspect, a chip system is provided. The chip system includes a logic circuit and an input/output port. The logic circuit is configured to implement the processing functions in the first aspect to the seventh aspect, and the input/output port is configured to implement the receiving and sending functions in the first aspect to the seventh aspect. Specifically, the input port may be configured to implement the receiving functions in the first aspect to the seventh aspect, and the output port may be configured to implement the sending functions in the first aspect to the seventh aspect.

In a possible design, the chip system further includes a memory, and the memory is configured to store program instructions and data for implementing the functions in the first aspect to the seventh aspect.

The chip system may consist of a chip, or may include the chip and another discrete device.

According to an eighteenth aspect, a computer-readable storage medium is provided. The computer-readable storage medium stores a computer program or instructions. When the computer program or the instructions are run on a computer, the authorization method in any possible implementation of the first aspect to the seventh aspect is enabled to be performed.

According to a nineteenth aspect, a computer program product is provided, and includes a computer program or instructions. When the computer program or the instructions are run on a computer, the authorization method in any possible implementation of the first aspect to the seventh aspect is enabled to be performed.

### BRIEF DESCRIPTION OF DRAWINGS

FIG. 1 is a diagram of an architecture of a communication system according to an embodiment of this application;
FIG. 2 is a diagram of an architecture of a communication system used in a 5G communication network according to an embodiment of this application;
FIG. 3 is a diagram of a layer-3 relay architecture according to an embodiment of this application;
FIG. 4 is a diagram of a layer-2 relay architecture according to an embodiment of this application;
FIG. 5 is a schematic flowchart of an authorization method according to an embodiment of this application;
FIG. 6 is a schematic flowchart of another authorization method according to an embodiment of this application;
FIG. 7 is a schematic flowchart of still another authorization method according to an embodiment of this application;
FIG. 8a is a schematic flowchart of still another authorization method according to an embodiment of this application;
FIG. 8b is a schematic flowchart of still another authorization method according to an embodiment of this application;
FIG. 8c is a schematic flowchart of still another authorization method according to an embodiment of this application;
FIG. 9a is a schematic flowchart of still another authorization method according to an embodiment of this application;
FIG. 9b is a schematic flowchart of still another authorization method according to an embodiment of this application;
FIG. 10A and FIG. 10B are a schematic flowchart of still another authorization method according to an embodiment of this application;
FIG. 11A and FIG. 11B are a schematic flowchart of still another authorization method according to an embodiment of this application;
FIG. 12A and FIG. 12B are a schematic flowchart of still another authorization method according to an embodiment of this application;
FIG. 13 is a diagram of a structure of a communication apparatus according to an embodiment of this application;
FIG. 14 is a diagram of a structure of another communication apparatus according to an embodiment of this application; and
FIG. 15 is a diagram of a structure of still another communication apparatus according to an embodiment of this application.

### DESCRIPTION OF EMBODIMENTS

The following describes technical solutions in this application with reference to accompanying drawings.

The technical solutions in embodiments of this application may be applied to various communication systems such as a universal mobile telecommunications system (universal mobile telecommunications system, UMTS), a wireless local area network (wireless local area network, WLAN), a wireless fidelity (wireless fidelity, Wi-Fi) system, a wired network, a vehicle to everything (vehicle to everything, V2X) communication system, a D2D communication system, an internet of vehicles communication system, a 4th generation (4th generation, 4G) mobile communication system, for example, a long term evolution (long term evolution, LTE) system or a worldwide interoperability for microwave access (worldwide interoperability for microwave access, WiMAX) system, a 5th generation (5th generation, 5G) mobile communication system, for example, a new radio (new radio, NR) system, and a future communication system, for example, a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are for representing giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "of (of)", "corresponding, related (corresponding, related)", and "corresponding (corresponding)" may be interchangeably used sometimes. It should be noted that meanings expressed by the terms are consistent when differences between the terms are not emphasized.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

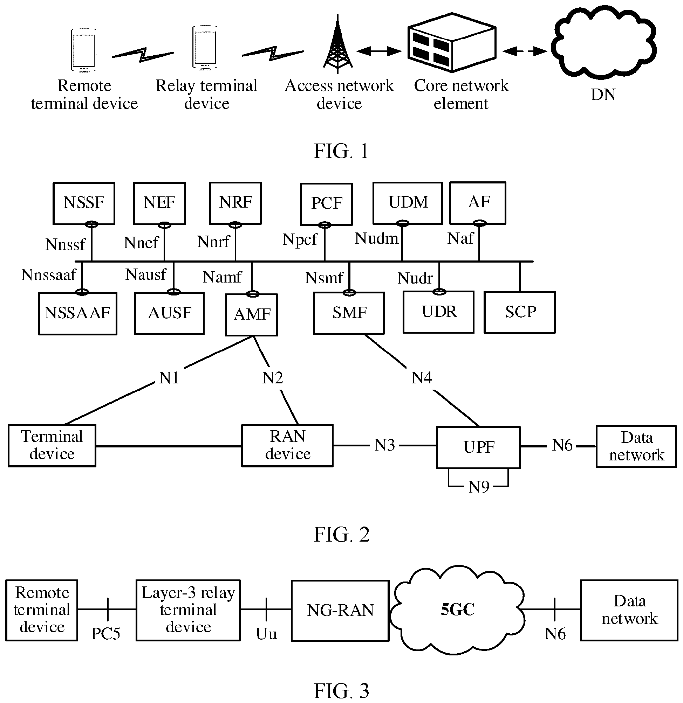

For ease of understanding embodiments of this application, a communication system shown in FIG. 1 is first used as an example to describe in detail a communication system applicable to embodiments of this application. For example, FIG. 1 is a diagram of an architecture of a communication system to which an authorization method provided in embodiments of this application is applicable.

As shown in FIG. 1, the communication system includes a core network element, and may further include a remote terminal device, a relay terminal device, and an access network device.

The core network element may be responsible for maintaining subscription data of a mobile network, and provides functions such as session management, mobility management, policy management, and security authentication for a terminal device.

The relay terminal device (relay user equipment, relay UE) is a terminal device that supports proximity-based services (proximity-based services, ProSe), supports the remote terminal device in connecting to a network, and may provide a relay service for the remote terminal device. For example, the relay terminal device may be a terminal device or an integrated access and backhaul (integrated access and backhaul, IAB) node. The IAB node includes a mobile terminal (mobile terminal, MT) and a distributed unit (distributed unit, DU). It should be noted that the relay terminal device may be referred to as a proximity-based services terminal device-to-network relay (ProSe UE-to-network relay), a terminal device-to-network relay (UE-to-network relay), a relay, or the like. A name of the relay terminal device is not limited in this application.

The remote terminal device (remote UE) is a terminal device that supports the proximity-based services (proximity-based services, ProSe), and supports communication with a data network via the relay terminal device. It should be noted that the remote terminal device may be referred to as a proximity-based services remote device (ProSe remote UE), a remote end, or the like. A name of the relay terminal device is not limited in this application.

The access network device is a device that is located on a network side of the communication system and that has a wireless transceiver function, or a chip or a chip system that may be disposed in the device. The access network device includes but is not limited to an access point (access point, AP), for example, a home gateway, a router, a server, a switch, or a network bridge, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless relay node, a wireless backhaul node, a transmission point (transmission and reception point, TRP, or transmission point, TP), or the like in a wireless fidelity (wireless fidelity, Wi-Fi) system; or may be a gNB or a transmission point (TRP or TP) in a 5G system, for example, a new radio (new radio, NR) system, or one antenna panel or a group of antenna panels (including a plurality of antenna panels) of a base station in a 5G system; may be a network node constituting a gNB or a transmission point, for example, a baseband unit (BBU) or a distributed unit (distributed unit, DU), a road side unit (road side unit, RSU) having a base station function, or the like; or may be a satellite, or a base station in various forms in the future. Optionally, the access network device is mainly responsible for functions such as radio resource management, quality of service (quality of service, QoS) management, and data compression and encryption on an air interface side.

Optionally, the communication system shown in FIG. 1 is applicable to a currently discussed communication network, or is applicable to another future network, or the like. This is not specifically limited in embodiments of this application.

For example, the communication system shown in FIG. 1 is used in a 5G communication network. As shown in FIG. 2, the 5G communication network may include a terminal device, a core network element, a (radio) access network ((radio) access network, (R)AN) device, and a data network (data network, DN).

As shown in FIG. 2, the core network element may include but is not limited to one or more of the following: a user plane function (user plane function, UPF) network element, an access and mobility management function (access and mobility management function, AMF) network element, a session management function (session management function, SMF) network element, an authentication server function (authentication server function, AUSF) network element, a network slice selection function (network slice selection function, NSSF) network element, a network exposure function (network exposure function, NEF) network element, a network repository function (network repository function, NRF), a policy control function (policy control function, PCF) network element, a unified data management (unified data management, UDM) network element, an application function (application function, AF) network element, a network slice-specific and standalone non-public network authentication and authorization function (network slice-specific and standalone non-public network authentication and authorization function, NSSAAF) network element, a service communication proxy (service communication proxy, SCP) network element, and a unified data repository (unified data repository, UDR) network element.

The terminal device accesses the 5G network via the (R)AN device, and the terminal device communicates with the AMF through an N1 interface (N1 for short). The (R)AN device may communicate with the AMF through an N2 interface (N2 for short). The (R)AN device may communicate with the UPF through an N3 interface (N3 for short). The SMF communicates with the UPF through an N4 interface (N4 for short), and the UPF accesses the data network through an N6 interface (N6 for short). In addition, control plane functions such as the AUSF, the AMF, the SMF, the NSSF, the NEF, the NRF, the PCF, the UDM, the NSSAAF, the UDR, and the AF shown in FIG. 2 may interact with each other through corresponding service-oriented interfaces Nausf, Namf, Nsmf, Nnssf, Nnef, Nnrf, Npcf, Nudm, Nnssaaf, Nudr, and Naf.

The AMF network element is mainly responsible for mobility management in a mobile network, for example, user location update, registration of a user with a network, and user handover. The AMF network element may obtain a 5G non-access stratum (Non-access stratum, NAS) security context, and the 5G NAS security context is for protecting a NAS message. The AMF network element may be configured to determine whether the terminal device is authorized to serve as a remote terminal device or a relay terminal device, and the AMF network element may be configured to determine whether the terminal device is authorized to use a relay service code.

The PCF network element mainly supports providing of a unified policy framework to control network behavior and providing of a policy rule for a control layer network function, and is responsible for obtaining user subscription information related to a policy decision. The PCF network element may provide a policy, for example, a quality of service (quality of service, QoS) policy, a slice selection policy, and proximity-based services authorization information, for the AMF network element and the SMF network element. The PCF network element may be configured to determine whether the terminal device is authorized to use the relay service code.

The AUSF network element may be configured to perform security authentication on the terminal device.

The UDM network element may be configured to store user data, for example, subscription data (for example, proximity-based services subscription information) and authentication/authorization data.

The SMF network element is mainly responsible for session management in the mobile network, for example, session establishment, modification, and release, for example, allocating an internet protocol (internet protocol, IP) address to the user and selecting a UPF that provides a packet forwarding function.

The UPF network element is responsible for forwarding and receiving user data in the terminal device. The UPF network element may receive the user data from the data network, and transmit the user data to the terminal device via the RAN device. The UPF network element may further receive the user data from the terminal device via the RAN device, and forward the user data to the data network. A transmission resource and a scheduling function that are used by the UPF network element to serve the terminal device are managed and controlled by the SMF network element.

The NSSF network element is mainly responsible for network slice selection, and may determine, based on slice selection assistance information, subscription information, and the like of the terminal device, a network slice instance that the terminal device is allowed to access.

The NEF network element may be configured to support capability and event exposure, and may support secure interaction between a 3GPP network and a third-party application.

The NRF network element supports registration and discovery of a network function.

The AF network element mainly supports interaction with a 3GPP core network to provide a service, for example, affecting a data routing decision and a policy control function, or providing some third-party services for a network side.

A main function of the NSSAAF network element is an intermediate network element that connects an internal network element of the 3GPP network and an external authentication server.

The UDR network element may be configured to store the proximity-based services authorization information.

The SCP network element may be configured to implement communication forwarding between network functions, and may be further configured to implement load balancing, network function selection, and the like.

The data network may be an external network of an operator, or may be a network controlled by the operator, and is configured to provide a service for the terminal device.

The terminal device may also be referred to as user equipment (User Equipment, UE), a user apparatus, an access terminal, a subscriber unit, a subscriber station, a mobile station (mobile station, MS), a remote station, a remote terminal, a mobile device, a user terminal, a terminal, a terminal unit, a terminal station, a terminal apparatus, a wireless communication device, a user agent, or a user apparatus.

For example, the terminal device (for example, the relay terminal device and the remote terminal device shown in FIG. 1) in embodiments of this application may be a mobile phone (mobile phone), a wireless data card, a personal digital assistant (personal digital assistant, PDA) computer, a laptop computer (laptop computer), a tablet computer (Pad), an uncrewed aerial vehicle, a computer with a wireless transceiver function, a machine type communication (machine type communication, MTC) terminal, a virtual reality (virtual reality, VR) terminal device, an augmented reality (augmented reality, AR) terminal device, an internet of things (internet of things, IoT) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal (for example, a game console, a smart television, a smart speaker, a smart refrigerator, or fitness equipment) in a smart home (smart home), a vehicle-mounted terminal, or an RSU having a terminal function. The access terminal may be a cellular phone (cellular phone), a cordless phone, a session initiation protocol (session initiation protocol, SIP) phone, a wireless local loop (wireless local loop, WLL) station, a personal digital assistant (personal digital assistant, PDA), a handheld device (handset) with a wireless communication function, a computing device or another processing device connected to a wireless modem, a wearable device, or the like.

For another example, the terminal device in embodiments of this application may be an express delivery terminal (for example, a device that can monitor a location of a cargo vehicle or a device that can monitor a temperature and humidity of cargo) in intelligent logistics, a wireless terminal (for example, a wearable device that can collect related data of poultry and livestock) in intelligent agriculture, a wireless terminal (for example, a smart elevator, a fire monitoring device, or a smart meter) in intelligent architecture, a wireless terminal (for example, a wearable device that can monitor a physiological status of a person or an animal) in intelligent healthcare, a wireless terminal (for example, an intelligent bus, an intelligent vehicle, a shared bicycle, a charging pile monitoring device, intelligent traffic lights, or an intelligent monitoring and intelligent parking device) in intelligent transportation, or a wireless terminal (for example, a vending machine, a self-checkout machine, or an unattended store) in intelligent retail. For another example, the terminal device in this application may be an in-vehicle module, an automobile module, an onboard component, an automotive chip, or an on board unit that is built in a vehicle as one or more components or units. The vehicle may implement a method provided in this application by using the in-vehicle module, the automobile module, the onboard component, the automotive chip, or the on board unit that is built in the vehicle.

It should be noted that the authorization method provided in embodiments of this application is applicable to the communication system shown in FIG. 1. For specific implementation, refer to the following method embodiments. Details are not described herein again.

It should be noted that, the solutions in embodiments of this application may alternatively be applied to another communication system, and a corresponding name may alternatively be replaced with a name of a corresponding function in the another communication system.

It should be understood that FIG. 1 is merely a simplified diagram of an example for ease of understanding. The communication system may further include another network device and/or another terminal device that are/is not shown in FIG. 1.

To make embodiments of this application clearer, the following uniformly describes some content and concepts related to embodiments of this application.

### First item: a relay service and a relay service code:

For example, the relay service is a connection service provided by a relay device for a remote device.

For example, the relay service may include a layer-3 relay service and a layer-2 relay service. The layer-3 relay service may be a layer-3 relay service provided by the relay device for the remote device, and the layer-2 relay service may be a layer-2 relay service provided by the relay device for the remote device.

For example, the relay service code (relay service code, RSC) may identify the connection service provided by the relay device for the remote device. For example, the relay service code may identify the layer-3 relay service or the layer-2 relay service.

It should be noted that the relay device may be referred to as a relay terminal device, and the remote device may be referred to as a remote terminal device. This is not limited in this application.

For example, a layer-3 relay device relays traffic for the remote device at an IP layer. After registering with a network, the layer-3 relay device may actively establish a relay protocol data unit (protocol data unit, PDU) session. Alternatively, a relay PDU session may be established based on needs after the remote device requests to initiate a layer-3 relay connection request to the relay device. The relay PDU session is for relaying traffic of the remote device, and may be for signaling between the relay terminal device and the network, or may be for data exchanged between the relay terminal device and the data network.

A layer-2 relay device relays traffic for the remote device at a layer 2. The layer-2 relay terminal device may be configured to forward an RRC message between the remote terminal device and an access network device, a NAS message between the remote terminal device and a core network, and the like, and the L2 relay terminal device does not have a capability of processing an RRC message of the remote device.

FIG. 3 is a diagram of a layer-3 relay architecture according to an embodiment of this application.

As shown in FIG. 3, a PC5 connection is established between a remote terminal device and a layer-3 relay terminal device, and a connection (for example, a Uu connection between the layer-3 relay terminal device and a next generation radio access network (next generation RAN, NG-RAN) device) is established between the layer-3 relay terminal device and a mobile network, so that the remote terminal device obtains a service through the PC5 connection and the connection that is established between the layer-3 relay terminal device and the mobile network. The layer-3 relay terminal device may be located in a home public land mobile network (public land mobile network, PLMN), or may be located in a visited PLMN.

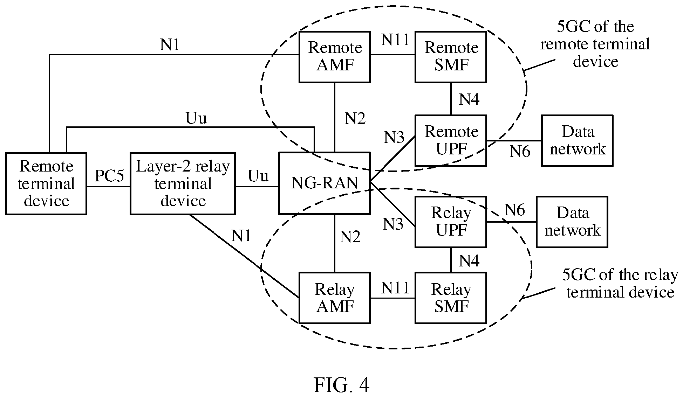

FIG. 4 is a diagram of a layer-2 relay architecture according to an embodiment of this application.

As shown in FIG. 4, in the layer-2 relay architecture, an air interface (for example, Uu interface) connection is established between a remote terminal device and an access network, and the remote terminal device and a layer-2 relay terminal device may be served by different PLMNs, or may be served by a same PLMN. It should be understood that FIG. 4 is merely a simplified diagram of an example for ease of understanding, and the architecture may further include another device. As shown in FIG. 4, when the remote terminal device and the layer-2 relay terminal device are served by the different PLMNs, remote may be added before a name of a network element that serves the remote terminal device, and relay may be added before a name of a network element that serves the relay terminal device. For example, an AMF network element that serves the remote terminal device may be referred to as a remote AMF network element, and an AMF network element that serves the relay terminal device may be referred to as a relay AMF network element.

### Second item: an AMF network element, a remote AMF network element, and a relay AMF network element:

In embodiments of this application, a network element that serves a remote terminal device and a network element that serves a relay terminal device may be the same or different, which depends on whether network elements selected by an access network device of the remote terminal device and an access network device of the relay terminal device are the same.

The AMF network element is used as an example. Whether an AMF network element that serves the remote terminal device and an AMF network element that serves the relay terminal device are the same depends on whether AMF network elements selected by the access network device of the remote terminal device and the access network device of the relay terminal device are the same. For example, if the remote terminal device and the relay terminal device access a network in a same PLMN, and are located in an area served by a same AMF network element, the AMF network element that serves the remote terminal device and the AMF network element that serves the relay terminal device may be the same.

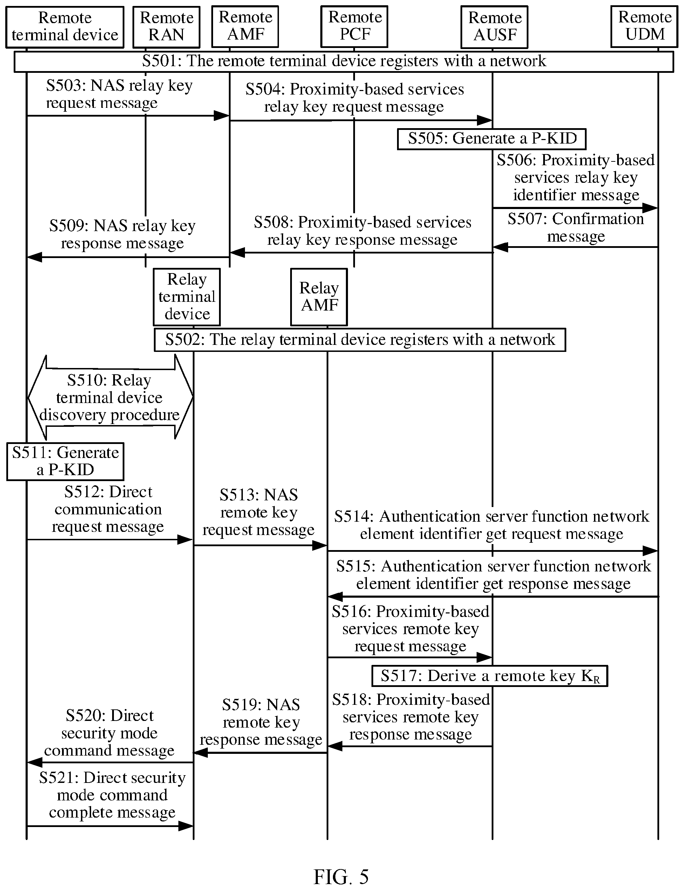

The authorization method (for example, the following methods shown in FIG. 5 to FIG. 12B) provided in embodiments of this application is applicable to a scenario in which the network element that serves the remote terminal device and the network element that serves the relay terminal device are the same or different. It should be noted that a name of a network element in embodiments of this application does not limit an application scenario of the network element.

The AMF network element is used as an example. The AMF network element in embodiments of this application may be an AMF network element that serves the remote terminal device and the relay terminal device, the AMF network element that serves the remote terminal device, or the AMF network element that serves the relay terminal device. The remote AMF network element in embodiments of this application may be the AMF network element that serves the remote terminal device. For example, when the AMF network element that serves the remote terminal device and the AMF network element that serves the relay terminal device are not a same AMF network element, the AMF network element that serves the remote terminal device may be referred to as the remote AMF network element. For another example, when the AMF network element that serves the remote terminal device and the AMF network element that serves the relay terminal device are a same AMF network element, the AMF network element may be referred to as the remote AMF network element when serving the remote terminal device.

The relay AMF network element in embodiments of this application may be the AMF network element that serves the relay terminal device. For example, when the AMF network element that serves the remote terminal device and the AMF network element that serves the relay terminal device are not a same AMF network element, the AMF network element that serves the relay terminal device may be referred to as the relay AMF network element. For another example, when the AMF network element that serves the remote terminal device and the AMF network element that serves the relay terminal device are a same AMF network element, the AMF network element may be referred to as the relay AMF network element when serving the relay terminal device.

For example, the AMF network element that serves the remote terminal device may provide access and mobility management for the remote terminal device, and an AUSF network element that serves the remote terminal device stores a key kausf of the remote terminal device. The AMF network element that serves the relay terminal device may provide access and mobility management for the relay terminal device, and an AUSF network element that serves the relay terminal device stores a key kausf of the relay terminal device. Network elements (for example, an SMF network element, a UPF network element, a PCF network element, and a UDM network element) are not listed one by one herein. The descriptions provided by using the AMF network element as an example in the second item are also applicable to other network elements (for example, the SMF network element, the UPF network element, the PCF network element, and the UDM network element).

### Third item: a proximity-based services key identifier, a subscription concealed identifier, and a subscription permanent identifier:

For example, a format of the proximity-based services key identifier (ProSe key identifier, P-KID) may include a network access identifier (network access identifier, NAI) format.

When the format of the P-KID is the NAI format, the P-KID may include user name information and domain information. For example, the P-KID may be username@realm.

The user name information in the P-KID may include a routing indicator (routing indicator, RID) and a proximity-based services temporary terminal device identifier (ProSe temporary UE identifier, P-TID). The domain information in the P-KID may include a home network identifier. For example, a realm part includes the home network identifier.

For example, the P-KID may be username@example. An example (example) part is not limited. For example, the example part may include the home network identifier.

Optionally, an AMF network element may determine an AUSF network element based on RID information, and the AUSF network element may determine a UDM network element based on the RID information. When the RID information is a default value, the AMF may select any AUSF instance in a home network, or the AUSF may select any UDM instance in the home network. When the RID information is not a default value, the AMF network element may determine the AUSF network element based on the RID information, and the AUSF network element may determine the UDM network element based on the RID information. The AUSF instance or UDM instance for selection is stored locally or obtained from an NRF network element.

In some embodiments, the P-TID may be generated based on Kausf, FC, P0, L0, P1, and L1. The intermediate key Kausf is used as a key K, and parameters FC, P0, L0, P1, and L1 are used as an input S of a key derivation function. Optionally, FC is configured by the 3GPP; P0=Subscription permanent identifier (subscription permanent identifier, SUPI); L0=Length of the SUPI; and P1=RSC, and L1=Length of the RSC. Kausf may alternatively be replaced with another key, for example, a key further derived from Kausf or a new key generated through authentication. This is not limited herein.

Optionally, the subscription concealed identifier (subscription concealed identifier, SUCI) may be generated by a terminal device, and the subscription permanent identifier is obtained by decrypting the subscription concealed identifier. The proximity-based services key identifier may be a temporary identity of the terminal device, the subscription permanent identifier may be a permanent identity of the terminal device, and the subscription concealed identifier is obtained through encryption of the subscription permanent identifier.

### Fourth item: Proximity-based services authorization information and proximity-based services policy information:

For example, the proximity-based services authorization information may be determined by a policy control function network element based on an identifier of a terminal device and/or a context identifier of the terminal device. The proximity-based services authorization information may indicate a relay service with which the terminal device is authorized.

For example, the proximity-based services policy information is obtained by the terminal device from a network. The proximity-based services policy information may include an authorization policy, and may further include a relay terminal device discovery policy/parameter. The proximity-based services policy information may be used by the terminal device to obtain a proximity-based services communication service, and may indicate whether the terminal device is authorized to serve as a relay device, a remote device, or the like.

In some embodiments, the proximity-based services authorization information may include a relay service code. The proximity-based services authorization information may indicate that the terminal device is authorized to use the relay service code, or the proximity-based services authorization information may indicate that the terminal device is authorized to use or provide a relay service corresponding to the relay service code.

For example, if proximity-based services authorization information of a terminal device 1 includes {an RSC 1 and an RSC 2} of a remote terminal device and {an RSC 3 and an RSC 4} of a relay terminal device, the proximity-based services authorization information indicates that the terminal device 1 serving as the remote terminal device is authorized to use the RSC 1 and the RSC 2, and the terminal device 1 serving as the relay terminal device is authorized to use the RSC 3 and the RSC 4. That is, the terminal device 1 may serve as the relay terminal device to provide the remote device with relay services corresponding to the RSC 3 and the RSC 4.

It should be noted that the terminal device may be authorized to serve as one of the remote terminal device or the relay terminal device. If the terminal device is authorized to serve only as the remote terminal device, the proximity-based services authorization information includes information for detecting whether the terminal device is authorized to serve as the remote terminal device to use the relay service corresponding to the relay service code. For example, the terminal device 1 is authorized to serve only as the remote terminal device, and the proximity-based services authorization information of the terminal device 1 may include {the RSC 1 and the RSC 2} of the remote terminal device.

If the terminal device is authorized to serve only as the relay terminal device, the proximity-based services authorization information includes information for detecting whether the terminal device is authorized to serve as the relay terminal device to provide the relay service corresponding to the relay service code. For example, the terminal device 1 is authorized to serve only as the relay terminal device, and the proximity-based services authorization information of the terminal device 1 may include {the RSC 3 and the RSC 4} of the relay terminal device.

For example, if proximity-based services authorization information corresponding to the terminal device 1 serving as the remote terminal device includes the RSC 1 and the RSC 2, the proximity-based services authorization information indicates that the terminal device 1 serving as the remote terminal device is authorized to use the RSC 1 and the RSC 2. If proximity-based services authorization information corresponding to the terminal device 1 serving as the relay terminal device includes the RSC 3 and the RSC 4, the proximity-based services authorization information indicates that the terminal device 1 serving as the relay terminal device is authorized to use the RSC 3 and the RSC 4.

Optionally, the proximity-based services authorization information may further include a public land mobile network identifier PLMN ID. The proximity-based services authorization information may indicate that the terminal device is authorized to relay traffic (relay traffic) in a PLMN corresponding to the PLMN ID.

For example, relaying the traffic means that the relay device relays the traffic for the remote device. The proximity-based services authorization information may indicate that the terminal device is authorized to relay the traffic for the remote device in the PLMN corresponding to the PLMN ID.

For example, if the proximity-based services authorization information of the terminal device 1 includes a PLMN ID 1 and a PLMN ID 2, the proximity-based services authorization information may indicate that the terminal device 1 is authorized to relay the traffic in a PLMN corresponding to the PLMN ID 1 and is authorized to relay the traffic in a PLMN corresponding to the PLMN ID 2.

For example, if the proximity-based services authorization information of the terminal device 1 includes {the RSC 1 and the RSC 2} of the remote terminal device, {the RSC 3 and the RSC 4} of the relay terminal device, a PLMN ID 1, and a PLMN ID 2, the proximity-based services authorization information may indicate that the terminal device 1 serving as the remote terminal device is authorized to use the RSC 1 and the RSC 2, that the terminal device 1 serving as the relay terminal device is authorized to use the RSC 3 and the RSC 4, and that the terminal device 1 is authorized to relay the traffic in a PLMN corresponding to the PLMN ID 1 and is authorized to relay the traffic in a PLMN corresponding to the PLMN ID 2.

In some embodiments, the proximity-based services authorization information may indicate that the terminal device is authorized to provide, in the PLMN corresponding to the PLMN ID, the relay service corresponding to the relay service code.

For example, the proximity-based services authorization information may further include the RSC and a PLMN ID corresponding to the RSC. In other words, there may be a correspondence between the RSC and the PLMN ID.

For example, the proximity-based services authorization information of the terminal device 1 may include the PLMN ID 1 (the RSC 3) and the PLMN ID 2 (the RSC 4). The proximity-based services authorization information may indicate that the terminal device 1 is authorized to provide, in the PLMN corresponding to the PLMN ID 1, a relay service corresponding to the RSC 3 and is authorized to provide, in the PLMN corresponding to the PLMN ID 2, a relay service corresponding to the RSC 4.

For another example, the proximity-based services authorization information of the terminal device 1 may include {a PLMN ID 3 (the RSC 1) and a PLMN ID 4 (the RSC 2)} of the remote terminal device and {the PLMN ID 1 (the RSC 3) and the PLMN ID 2 (the RSC 4)} of relay terminal device. In this case, the proximity-based services authorization information indicates that the terminal device 1 serving as the remote terminal device is authorized to provide, in a PLMN corresponding to the PLMN ID 3, a relay service corresponding to the RSC 1, the terminal device 1 serving as the remote terminal device is authorized to provide, in a PLMN corresponding to the PLMN ID 4, a relay service corresponding to the RSC 2, the terminal device 1 serving as the relay terminal device is authorized to provide, in the PLMN corresponding to the PLMN ID 1, the relay service corresponding to the RSC 3, and the terminal device 1 serving as the relay terminal device is authorized to provide, in the PLMN corresponding to the PLMN ID 2, the relay service corresponding to the RSC 4.

It should be noted that one PLMN ID may correspond to a plurality of RSCs, and one RSC may correspond to a plurality of PLMN IDs. This is not limited in this application.

In some embodiments, the authorization policy may include the PLMN ID.

Optionally, the public land mobile network identifier may indicate that the terminal device is authorized to relay the traffic in the PLMN corresponding to the public land mobile network identifier.

In some embodiments, the relay terminal device discovery policy/parameter may include one or more of the following: a user information identifier, the relay service code, and a terminal device-to-network relay indicator (UE-to-network relay layer indicator(s)).

Optionally, the user information identifier may be for group member discovery or relay discovery.

Optionally, the terminal device-to-network relay indicator may indicate that a specific relay service code provides a layer-2 relay service or a layer-3 relay service.

For example, the relay service code corresponds to the terminal device-to-network relay indicator.

For example, the relay service code 1 corresponds to a terminal device-to-network relay indicator 1, and the terminal device-to-network relay indicator 1 may indicate that the relay service code 1 provides the layer-2 relay service. The relay service code 2 corresponds to a terminal device-to-network relay indicator 2, and the terminal device-to-network relay indicator 2 may indicate that the relay service code 2 provides the layer-3 relay service.

It should be noted that one terminal device-to-network relay indicator may correspond to one or more relay service codes. This is not limited in this application.

It should be noted that names of the proximity-based services authorization information and the proximity-based services policy information are not limited in this application.

### Fifth item: proximity-based services subscription information:

For example, the proximity-based services subscription information may indicate an authorized proximity-based services service, for example, proximity-based services direct discovery, proximity-based services direct communication, or serving as a relay device. The proximity-based services subscription information may be stored in a UDM network element.

Optionally, the proximity-based services subscription information may be for determining whether a terminal device supports use of the proximity-based services service, whether the terminal device is authorized to serve as a remote terminal device or a relay terminal device, or whether the terminal device is authorized to use (use) the relay terminal device (equivalent to serving as the remote terminal device) or serve as (serve as) the relay terminal device. Whether the terminal device is authorized to serve as the remote terminal device may be whether the terminal device is authorized to use a service provided by the relay terminal device. Whether the terminal device is authorized to serve as the relay terminal device may be whether the terminal device is authorized to relay traffic for the remote terminal device.

For example, FIG. 5 is a schematic flowchart of an authorization method according to an embodiment of this application. FIG. 5 illustrates a solution in which a PC5 secure connection is established by using a signaling plane. The authorization method is applicable to the communication system shown in FIG. 1.

As shown in FIG. 5, the authorization method includes the following steps.

S501: A remote terminal device registers with a network.

Optionally, the remote terminal device may obtain service authorization and proximity-based services policy information from the network. For a specific implementation of the proximity-based services policy information of the remote terminal device, refer to the foregoing descriptions. Details are not described herein again.

S502: A relay terminal device registers with a network.

Optionally, the relay terminal device may obtain service authorization and proximity-based services policy information from the network. For a specific implementation of the proximity-based services policy information of the relay terminal device, refer to the foregoing descriptions. Details are not described herein again.

S503: The remote terminal device sends a NAS relay key request message to a remote AMF network element. Accordingly, the remote AMF network element receives the NAS relay key request message from the remote terminal device.

Optionally, the NAS relay key request message may include a relay service code.

Optionally, the remote terminal device obtains, based on preconfigured proximity-based services policy information or the proximity-based services policy information from the network, a relay service code that a terminal device serving as the remote device is authorized to use.

S504: The remote AMF network element sends a proximity-based services relay key request message to a remote AUSF network element. Accordingly, the remote AUSF network element receives the proximity-based services relay key request message from the remote AMF network element.

Optionally, the proximity-based services relay key request (Kasuf_ProSe_Relay Key request) message may include the relay service code.

S505: The remote AUSF network element generates a P-KID.

For example, a P-TID may be generated by the remote AUSF network element based on an intermediate key Kausf, FC, P0, L0, P1, and L1. For a specific implementation, refer to the foregoing corresponding implementation. Details are not described herein again.

S506: The remote AUSF network element sends a proximity-based services relay key identifier message to a remote UDM network element. Accordingly, the remote UDM network element receives the proximity-based services relay key identifier message from the remote AUSF network element.

For example, a proximity-based services relay key identifier management (Kudm_ProSe_RelayKeyID management) message may include the P-KID.

S507: The remote UDM network element sends a confirmation message to the remote AUSF network element. Accordingly, the remote AUSF network element receives the confirmation message from the remote UDM network element.

S508: The remote AUSF network element sends a proximity-based services relay key response message to the remote AMF network element. Accordingly, the remote AMF network element receives the proximity-based services relay key response message from the remote AUSF network element.

S509: The remote AMF network element sends a NAS relay key response message to the remote terminal device. Accordingly, the remote terminal device receives the NAS relay key response message from the remote AMF network element.

S510: When the remote terminal device determines to perform communication by using the relay terminal device, perform a relay terminal device discovery procedure.

It should be noted that S510 may be performed at any moment after S509.

S511: The remote terminal device generates a P-KID.

For example, a P-TID may be generated based on Kausf, FC, P0, L0, P1, and L1. For a specific implementation, refer to the foregoing corresponding implementation. Details are not described herein again.

S512: The remote terminal device sends a direct communication request message to the relay terminal device. Accordingly, the relay terminal device receives the direct communication request message from the remote terminal device.

For example, the direct communication request message may include the P-KID, the relay service code, and a nonce 1 (nonce 1).

S513: The relay terminal device sends a NAS remote key request message to a relay AMF network element. Accordingly, the relay AMF network element receives the NAS remote key request message from the relay terminal device.

For example, the NAS remote key request message may include the P-KID, the relay service code, and the nonce 1.

S514: The relay AMF network element checks whether the relay terminal device is authorized to serve as a relay; and if the relay terminal device is authorized to serve as the relay, the relay AMF network element discovers the remote UDM network element, and sends an authentication server function network element identifier get request message to the remote UDM network element. Accordingly, the remote UDM network element receives the authentication server function network element identifier get request message from the relay AMF network element.

For example, the authentication server function network element identifier get request (Nudm_AUSFID_Get request) message includes the P-KID.

S515: The remote UDM network element sends an authentication server function network element identifier get response message to the relay AMF network element. Accordingly, the relay AMF network element receives the authentication server function network element identifier get response message from the remote UDM network element.

For example, the authentication server function network element identifier get response (Nudm_AUSFID_Get response) message may include an AUSF instance ID of an AUSF that serves the remote terminal device.

S516: The relay AMF network element sends a proximity-based services remote key request message to the remote AUSF network element. Accordingly, the remote AUSF network element receives the proximity-based services remote key request message from the relay AMF network element.

For example, the proximity-based services remote key request (Nausf_ProSe_Remote Key request) message may include the P-KID, the relay service code, and the nonce 1.

S517: The remote AUSF network element derives a remote key K_{R}.

Optionally, the remote AUSF network element generates a freshness parameter, and derives the remote key K_{R} based on the intermediate key Kausf, the relay service code, the freshness parameter, and the nonce 1.

S518: The remote AUSF network element sends a proximity-based services remote key response message to the relay AMF network element. Accordingly, the relay AMF network element receives the proximity-based services remote key response message from the remote AUSF network element.

For example, the proximity-based services remote key response (Nausf_ProSe_Remote Key response) message may include the remote key K_{R} and the freshness parameter.

S519: The relay AMF network element sends a NAS remote key response message to the relay terminal device. Accordingly, the relay terminal device receives the NAS remote key response message from the relay AMF network element.

For example, the NAS remote key response (NAS Remote Key response) message may include the remote key K_{R} and the freshness parameter.

S520: The relay terminal device sends a direct security mode command message to the remote terminal device. Accordingly, the remote terminal device receives the direct security mode command message from the relay terminal device.

For example, the direct security mode command message may include the freshness parameter and a nonce 2.

S521: The remote terminal device sends a direct security mode command complete message to the relay terminal device. Accordingly, the relay terminal device receives the direct security mode command complete message from the remote terminal device.

Optionally, the remote terminal device derives K_{R}: generates a freshness parameter, and derives a remote key K_{R} based on the intermediate key Kausf, the relay service code, the freshness parameter, and the nonce 2.

Optionally, integrity protection is performed on the direct security mode command complete message, and a key for the integrity protection is generated based on K_{R}.

The authorization method shown in FIG. 5 may be for verifying whether the relay terminal device is authorized to serve as a relay-type terminal device. However, no solution is provided for how to verify whether a terminal device is authorized to serve as a remote terminal device and how to verify whether the terminal device is authorized to use a relay service code, and security of establishing a relay communication connection cannot be ensured.

For example, for the remote terminal device, whether the terminal device is authorized to use the relay service code may be whether the remote terminal device is authorized to use a connection service corresponding to the relay service code. For the relay terminal device, whether the terminal device is authorized to use the relay service code may be whether the relay terminal device is authorized to provide the connection service corresponding to the relay service code.

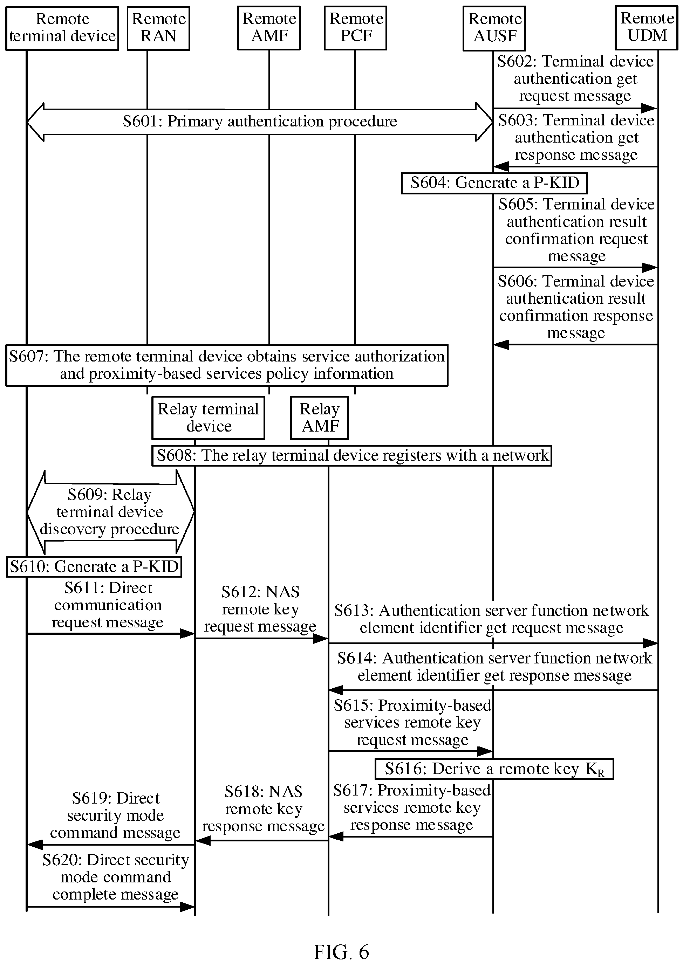

For example, FIG. 6 is a schematic flowchart of another authorization method according to an embodiment of this application. FIG. 6 illustrates a solution in which a PC5 secure connection is established by using a signaling plane. A difference between the method shown in FIG. 6 and the method shown in FIG. 5 lies in: After a remote terminal device initiates a registration request, a remote AMF network element triggers a primary authentication procedure; and after the primary authentication procedure is successfully completed, a remote AUSF network element generates a P-KID, and the remote terminal device obtains service authorization and proximity-based services policy information. The authorization method is applicable to the communication system shown in FIG. 1.

As shown in FIG. 6, the authorization method includes the following steps.

S601: After the remote terminal device sends a registration request message to the remote AMF network element, the remote AMF network element triggers the primary authentication procedure.

S602: The remote AUSF network element sends a terminal device authentication get request message to a remote UDM network element. Accordingly, the remote UDM network element receives the terminal device authentication get request message from the remote AUSF network element.

Optionally, the terminal device authentication get request message may be for requesting authentication data (for example, an authentication vector) from the remote UDM network element.

For example, the authentication data may be for primary authentication (Primary authentication) between a core network element and the terminal device.

For example, the terminal device authentication get request (Nudm_UEAuthentication_Get Request) message may include an SUPI or an SUCI. For example, if the remote AMF network element provides the SUCI for the remote AUSF network element, the terminal device authentication get request message carries the SUCI. If the remote AMF network element provides the SUPI for the remote AUSF network element, the terminal device authentication get request message carries the SUPI.

S603: The remote UDM network element sends a terminal device authentication get response message to the remote AUSF network element. Accordingly, the remote AUSF network element receives the terminal device authentication get response message from the remote UDM network element.

For example, the terminal device authentication get response (Num_UEAuthentication_Get Response) message may include the authentication vector.

Optionally, the terminal device authentication get response message may further include proximity-based services indication information and an RID.

For example, the proximity-based services (ProSe) indication information may indicate that the terminal device supports use of a proximity-based services service. For example, the proximity-based services indication information may indicate whether the terminal device is authorized to use proximity-based services direct discovery and/or proximity-based services direct communication, and may further indicate whether the terminal device is authorized to serve as a relay terminal device.

For example, the UDM determines, based on proximity-based services subscription information, whether the terminal device is authorized to use the proximity-based services service. If the terminal device is authorized to use the proximity-based services service, the UDM transfers the proximity-based services indication information to the AUSF.

Optionally, when the terminal device authentication get request message includes the proximity-based services indication information, the terminal device authentication get request message further includes the RID.

S604: The remote AUSF network element generates the P-KID.

Optionally, S604 may be performed after the primary authentication procedure in S601 is successfully completed, that is, after the AUSF determines that the authentication succeeds.

For example, a P-TID may be generated by the remote AUSF network element based on an intermediate key Kausf, FC, P0, L0, P1, and L1. For a specific implementation, refer to the foregoing corresponding implementation. Details are not described herein again.

Optionally, the intermediate key Kausf may be stored by the remote AUSF network element after the remote AUSF network element receives the proximity-based services indication information.

S605: The remote AUSF network element sends a terminal device authentication result confirmation request message to the remote UDM network element. Accordingly, the remote UDM network element receives the terminal device authentication result confirmation request message from the remote AUSF network element.

For example, the terminal device authentication result confirmation request (Nudm _UEAuthenticationResultConfirmation Request) message may include the P-KID.

S606: The remote UDM network element sends a terminal device authentication result confirmation response message to the remote AUSF network element. Accordingly, the remote AUSF network element receives the terminal device authentication result confirmation response message from the remote UDM network element.

S607: The remote terminal device obtains the service authorization and the proximity-based services policy information.

S608: The relay terminal device registers with a network.

Optionally, the relay terminal device may obtain service authorization and proximity-based services policy information from the network. For a specific implementation of the proximity-based services policy information of the relay terminal device, refer to the foregoing descriptions. Details are not described herein again.

It should be noted that S608 may be performed at any moment before S609.

S609: When the remote terminal device determines to perform communication by using the relay terminal device, perform a relay terminal device discovery procedure.

It should be noted that S609 may be performed at any moment after S608.

The authorization method shown in FIG. 6 may further include S610 to S620. For specific implementations of S610 to S620, refer to the specific implementations of S511 to S521. Details are not described herein again.

Similar to the method shown in FIG. 5, the authorization method shown in FIG. 6 may be for verifying whether the relay terminal device is authorized to serve as a relay-type terminal device. However, no solution is provided for how to verify whether the terminal device is authorized to serve as the remote terminal device and how to verify whether the terminal device is authorized to use a relay service code, and security of establishing a relay communication connection cannot be ensured.

An embodiment of this application provides an authorization method. Whether a terminal device is authorized to use a relay service code may be determined based on proximity-based services authorization information of the terminal device. The relay service code identifies a connection service provided by a relay device for a remote device. For example, a relay service code 1 may identify a layer-3 relay service 1. In this way, whether the terminal device is authorized to use or provide the layer-3 relay service 1 can be verified, so that security of establishing a relay communication connection can be ensured.

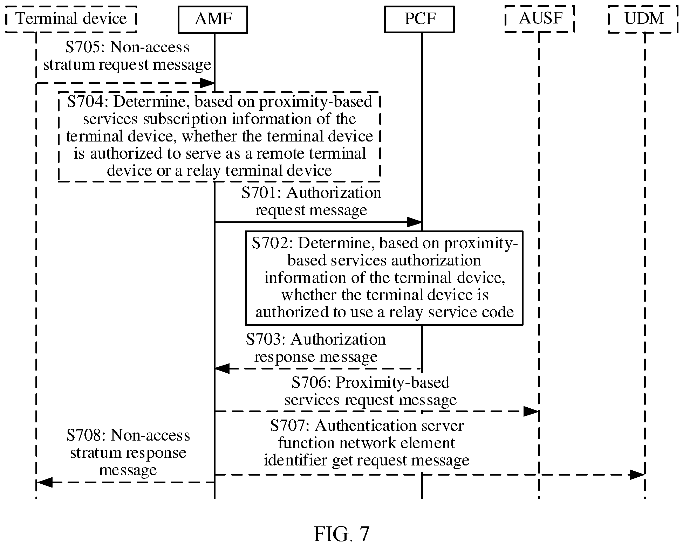

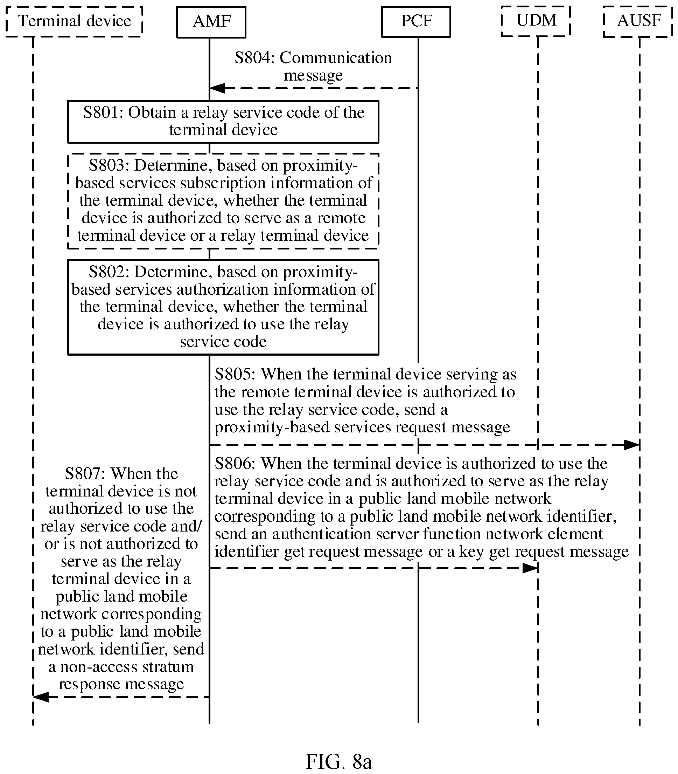

A step of determining whether the terminal device is authorized to use the relay service code may be performed by a policy control function network element or an access and mobility management function network element. In FIG. 7 below, an example in which the policy control function network element determines whether the terminal device is authorized to use the relay service code is used for description. In FIG. 8a below, an example in which the access and mobility management function network element determines whether the terminal device is authorized to use the relay service code is used for description.

For example, FIG. 7 is a schematic flowchart of still another authorization method according to an embodiment of this application. In FIG. 7, an example in which a policy control function network element determines whether a terminal device is authorized to use a relay service code is used for description. The method shown in FIG. 7 is applicable to the architectures shown in FIG. 1 to FIG. 4, and may be further applied to another network architecture and network architectures in various future forms. A corresponding name may alternatively be replaced with a name of a corresponding function in the another network architecture and the network architectures in the various future forms.

It should be noted that the method shown in FIG. 7 is applicable to a scenario in which a network element that serves a remote terminal device and a network element that serves a relay terminal device are the same or different. The terminal device may be the remote terminal device or the relay terminal device. An AMF network element may be referred to as a remote AMF network element or a relay AMF network element. The PCF network element may be referred to as a remote PCF network element or a relay PCF network element. An AUSF network element may be referred to as a remote AUSF network element or a relay AUSF network element. A UDM network element may be referred to as a remote UDM network element or a relay UDM network element.

As shown in FIG. 7, the authorization method includes the following steps.

S701: The access and mobility management function network element sends an authorization request message to the policy control function network element. Accordingly, the policy control function network element receives the authorization request message from the access and mobility management function network element.

For example, the authorization request message may be for requesting to verify whether the terminal device is authorized to use the relay service code.

For example, the authorization request message includes the relay service code from the terminal device. The access and mobility management function network element serves the terminal device.

For example, the relay service code may identify a connection service provided by a relay device for a remote device. For a specific implementation of the relay service code, refer to the descriptions in the foregoing first item. Details are not described herein again.

In some embodiments, the authorization request message may further include one or more of the following: terminal indication information, an identifier of the terminal device, a context identifier of the terminal device, and a public land mobile network identifier.

Optionally, the terminal indication information may indicate that the terminal device is the remote terminal device or the relay terminal device.

For example, the terminal indication information may indicate that the terminal device serves as the remote terminal device to request verification or serves as the relay terminal device to request the verification.

For example, when the terminal device is the relay terminal device, the authorization request message may further include a PLMN ID.

For example, the identifier of the terminal device or the context identifier of the terminal device may be for obtaining proximity-based services authorization information of the terminal device.

For example, the identifier of the terminal device may be an SUPI or an SUCI of the terminal device. The context identifier of the terminal device may be an identifier that is allocated by the PCF and that identifies a context of the terminal device. The context identifier of the terminal device is stored in the access and mobility management function network element.

Optionally, the public land mobile network identifier may be obtained by the access and mobility management function network element based on a network served by the access and mobility management function network element.

In some embodiments, the authorization request message may indicate that the terminal device is the relay terminal device, or the authorization request message may indicate that the terminal device is the remote terminal device.

Optionally, that the terminal device is the relay terminal device or the remote terminal device may be indicated by the terminal indication information, content included in the authorization request message, or different service operation names.

For example, if the authorization request message includes the relay service code, the authorization request message may indicate to verify whether the terminal device serving as the remote terminal device is authorized to use the relay service code.

For another example, if the authorization request message includes the relay service code and the public land mobile network identifier, the authorization request message may indicate to verify whether the terminal device serving as the relay terminal device is authorized to use the relay service code and whether the terminal device serving as the relay terminal device is authorized to relay traffic in a public land mobile network corresponding to the public land mobile network identifier.

In some embodiments, the PCF network element may determine, based on the authorization request message, whether a type of the terminal device is the relay terminal device or the remote terminal device.

For example, the PCF network element may determine the type of the terminal device based on the terminal indication information, the content included in the authorization request message, or the service operation names.

In a possible design method, S701 may include: When the terminal device is authorized to serve as the remote terminal device or the relay terminal device, the access and mobility management function network element sends the authorization request message to the policy control function network element.

It should be noted that the relay service code identifies the connection service provided by the relay device for the remote device. Only the relay terminal device or the remote terminal device can use the relay service code. When the terminal device is not authorized to serve as the remote terminal device or the relay terminal device, the terminal device definitely does not support use of the relay service code. In other words, if the terminal device is not authorized to serve as the remote terminal device or the relay terminal device, the terminal device is not authorized to use the relay service code.

In this way, when the terminal device is not authorized to serve as the remote terminal device or the relay terminal device, the AMF network element does not send the authorization request message to the PCF network element, so that the PCF network element can be prevented from determining whether the terminal device is authorized to use the relay service code (that is, avoiding performing S702 below). In this way, a resource waste can be wasted.

In a possible design method, the authorization method provided in this embodiment of this application may further include: S704: The access and mobility management function network element determines, based on proximity-based services subscription information of the terminal device, whether the terminal device is authorized to serve as the remote terminal device or the relay terminal device.

Optionally, the proximity-based services subscription information may indicate an authorized proximity-based services service, for example, proximity-based services direct discovery, proximity-based services direct communication, or serving as the relay device.

For example, the proximity-based services subscription information may be obtained by the AMF network element from the UDM network element. For example, the AMF network element obtains the proximity-based services subscription information from the UDM network element based on the identifier of the terminal device or the context identifier of the terminal device.

In some embodiments, when the terminal device is the relay terminal device, the access and mobility management function network element determines, based on the proximity-based services subscription information of the terminal device, whether the terminal device is authorized to serve as the relay terminal device.

For example, when the terminal device serves as the relay terminal device to request to verify whether the terminal device is authorized to use the relay service code, the AMF network element may determine, based on the proximity-based services subscription information, whether the terminal device is authorized to serve as the relay terminal device. If the AMF network element determines that the terminal device is authorized to serve as the relay terminal device, the AMF network element performs a subsequent step, for example, sends the authorization request message; or if the AMF network element determines that the terminal device is not authorized to serve as the relay terminal device, a request failure may be fed back to the terminal device.

In some embodiments, when the terminal device is the remote terminal device, the access and mobility management function network element determines, based on the proximity-based services subscription information of the terminal device, whether the terminal device is authorized to serve as the remote terminal device.

For example, when the terminal device serves as the remote terminal device to request to verify whether the terminal device is authorized to use the relay service code, the AMF network element may determine, based on the proximity-based services subscription information, whether the terminal device is authorized to serve as the remote terminal device. If the AMF network element determines that the terminal device is authorized to serve as the remote terminal device, the AMF network element performs a subsequent step, for example, sends the authorization request message; or if the AMF network element determines that the terminal device is not authorized to serve as the remote terminal device, a request failure may be fed back to the terminal device.

In some embodiments, the access and mobility management function network element may obtain the public land mobile network identifier of the network served by the access and mobility management function network element. For example, if the terminal device is authorized to serve as the relay terminal device, the AMF network element may obtain the public land mobile network identifier of the network served by the AMF network element.

In a possible design method, the authorization method provided in this embodiment of this application may further include: S705: The terminal device sends a non-access stratum request message to the access and mobility management function network element. Accordingly, the access and mobility management function network element receives the non-access stratum request message from the terminal device.

Optionally, the non-access stratum request message may include the relay service code.

Optionally, the non-access stratum request message may further include a proximity-based services key identifier and a nonce. For example, the proximity-based services key identifier may be generated and sent to the relay terminal device by the remote terminal device, and sent by the relay terminal device to the access and mobility management function network element.

For example, if the terminal device is the remote terminal device, the non-access stratum request message may be referred to as a non-access stratum relay key request message. If the terminal device is the relay terminal device, the non-access stratum request message may be referred to as a non-access stratum remote key request message.

It should be noted that a sequence of performing S705 and S704 is not limited in this application. For example, S705 may be performed before S704.

In this way, in a process in which the terminal device triggers a key request, the AMF network element can verify whether the terminal device is authorized to serve as the remote terminal device or the relay terminal device, and the PCF network element can verify whether the terminal device is authorized to use the relay service code.

Optionally, the access and mobility management function network element may determine, based on the non-access stratum request message, whether the terminal device is the relay terminal device or the remote terminal device.

For example, the AMF network element may determine, based on a type of the non-access stratum request message or an information element included in the non-access stratum request message, whether the terminal device is the relay terminal device or the remote terminal device.

It should be noted that the AMF network element may not determine whether the terminal device is the relay terminal device or the remote terminal device; and after receiving the non-access stratum request message, verifies, based on the type of the non-access stratum request message or the information element included in the non-access stratum request message, whether the terminal device is authorized to serve as the remote terminal device or the relay terminal device (corresponding to S704), or directly sends the authorization request message (corresponding to S701).

It should be noted that the non-access stratum request message may be referred to as a non-access stratum key request message. A name of the non-access stratum request message is not limited in this application.

S702: The policy control function network element determines, based on the proximity-based services authorization information of the terminal device, whether the terminal device is authorized to use the relay service code.

Optionally, the proximity-based services authorization information may be determined by the policy control function network element based on the identifier of the terminal device and/or the context identifier of the terminal device.

For example, the proximity-based services authorization information may indicate a relay service with which the terminal device is authorized. For a specific implementation of the proximity-based services authorization information, refer to the descriptions in the foregoing fourth item. Details are not described herein again.

In some embodiments, assuming that the proximity-based services authorization information indicates that the terminal device is authorized with a relay service 1 and the relay service code received by the policy control function network element from the AMF network element identifies the relay service 1, the terminal device is authorized to use the relay service 1.

In some embodiments, assuming that the proximity-based services authorization information indicates that the terminal device is authorized with a relay service 1 and the relay service code received by the policy control function network element from the AMF network element identifies a relay service 2, the terminal device is not authorized to use the relay service 2.

In some embodiments, after the PCF network element receives the authorization request message, assuming that the authorization request message indicates that the terminal device is the remote terminal device, the PCF network element may directly verify whether the terminal device is authorized to use the relay service code; or may first verify whether the terminal device is authorized to serve as the remote terminal device, and if the terminal device is authorized to use the relay service code or the terminal device is authorized to serve as the remote terminal device, verify whether the terminal device serving as the remote terminal device is authorized to use the relay service code.

In some embodiments, after the PCF network element receives the authorization request message, assuming that the authorization request message indicates that the terminal device is the relay terminal device, the PCF network element may directly verify whether the terminal device is authorized to use the relay service code; or may first verify whether the terminal device is authorized to serve as the relay terminal device, and if the terminal device is authorized to use the relay service code or the terminal device is authorized to serve as the relay terminal device, verify whether the terminal device serving as the relay terminal device is authorized to use the relay service code.

It should be noted that whether the terminal device is authorized to serve as the relay terminal device may be verified by the AMF network element or the PCF network element. Alternatively, after the AMF network element performs verification, the PCF network element performs verification after receiving the authorization request message. This is not limited in this application.

In a possible design method, S702 may include: When the terminal device is authorized to serve as the remote terminal device or the relay terminal device, the policy control function network element determines, based on the proximity-based services authorization information of the terminal device, whether the terminal device is authorized to use the relay service code.

In this way, when it is determined that the terminal device can serve as the remote terminal device or the relay terminal device, the PCF network element determines whether the terminal device can provide or use the connection service identified by the relay service code, so that the PCF network element can be prevented from performing an unnecessary step. In this way, a resource waste is avoided.

For example, when the terminal device is authorized to serve as the remote terminal device, the PCF network element determines, based on the proximity-based services authorization information of the terminal device, whether the remote terminal device is authorized to use the connection service corresponding to the relay service code.

For another example, when the terminal device is authorized to serve as the relay terminal device, the PCF network element determines, based on the proximity-based services authorization information of the terminal device, whether the relay terminal device is authorized to provide the connection service corresponding to the relay service code, and may further determine whether the relay terminal device is authorized to relay the traffic in the public land mobile network corresponding to the public land mobile network identifier.

In some embodiments, the policy control function network element may obtain, based on the terminal indication information, proximity-based services authorization information corresponding to the terminal device serving as the remote terminal device or the relay terminal device. For example, the proximity-based services authorization information corresponding to the terminal device serving as the remote terminal device includes the RSC 1 and the RSC 2. The proximity-based services authorization information corresponding to the terminal device serving as the relay terminal device includes a PLMN ID 1, a PLMN ID 2, an RSC 3, and an RSC 4.

In a possible design method, the authorization request message indicates that the terminal device is the remote terminal device. That the policy control function network element determines, based on the proximity-based services authorization information of the terminal device, whether the terminal device is authorized to use the relay service code may include: The policy control function network element determines whether the proximity-based services authorization information includes the relay service code; and if the proximity-based services authorization information includes the relay service code, the terminal device is authorized to use the relay service code; or if the proximity-based services authorization information does not include the relay service code, the terminal device is not authorized to use the relay service code.

For example, the proximity-based services authorization information includes an RSC. The PCF network element may determine whether the RSC in the proximity-based services authorization information is consistent with the RSC received from the AMF network element. If the RSCs are consistent, the terminal device is authorized to use the relay service code; or if the RSCs are inconsistent, the terminal device is not authorized to use the relay service code.

For example, assuming that the authorization request message indicates that a terminal device 1 serves as the remote terminal device and proximity-based services authorization information of the terminal device 1 includes {the RSC 1 and the RSC 2} of the remote terminal device and {the RSC 3 and the RSC 4} of the relay terminal device, if the authorization request message includes the RSC 1, the PCF network element may determine that the terminal device 1 serving as the remote terminal device is authorized to use the RSC 1; or if the authorization request message includes an RSC 5, the PCF network element may determine that the terminal device 1 serving as the remote terminal device is not authorized to use the RSC 5.

It should be noted that the terminal device 1 serves as the remote terminal device, and the proximity-based services authorization information of the terminal device 1 may include only related information (which is {the RSC 1 and the RSC 2} of the remote terminal device) of the terminal device 1 serving as a remote end, and does not include related information (which is {the RSC 3 and the RSC 4} of the relay terminal device) of the terminal device 1 serving as the relay terminal device. This is not limited in this application, and the foregoing is merely an example of this application.

In a possible design method, the authorization request message further includes the public land mobile network identifier, and S702 may include: The policy control function network element determines, based on the proximity-based services authorization information, whether the terminal device is authorized to use the relay service code and whether the terminal device is authorized to relay the traffic in the public land mobile network corresponding to the public land mobile network identifier.

For example, the authorization request message indicates that the terminal device is the relay terminal device, and the PCF network element may determine, based on the proximity-based services authorization information, whether the relay terminal device is authorized to use the relay service code and whether the relay terminal device is authorized to relay the traffic in the public land mobile network corresponding to the public land mobile network identifier.

Optionally, the authorization request message indicates that the terminal device is the relay terminal device, and the PCF network element may determine, based on the proximity-based services authorization information, whether the relay terminal device is authorized to provide, in the PLMN corresponding to the PLMN ID, the connection service corresponding to the relay service code.

In a possible design method, that the policy control function network element determines, based on the proximity-based services authorization information, whether the terminal device is authorized to use the relay service code and whether the terminal device is authorized to relay the traffic in the public land mobile network corresponding to the public land mobile network identifier may include: The policy control function network element determines whether the proximity-based services authorization information includes the relay service code and the public land mobile network identifier. If the proximity-based services authorization information includes the relay service code and the public land mobile network identifier, the terminal device is authorized to use the relay service code and is authorized to relay the traffic in the public land mobile network corresponding to the public land mobile network identifier; if the proximity-based services authorization information does not include the relay service code, the terminal device is not authorized to use the relay service code; or if the proximity-based services authorization information does not include the public land mobile network identifier, the terminal device is not authorized to relay the traffic in the public land mobile network corresponding to the public land mobile network identifier.

Optionally, assuming that the authorization request message indicates that a terminal device 2 serves as the relay terminal device and the proximity-based services authorization information includes {an RSC 3 and an RSC 4} of the remote terminal device, {an RSC 1 and an RSC 2} of the relay terminal device, the PLMN ID 1, and the PLMN ID 2, if the authorization request message includes the RSC 1 and the PLMN ID 1, the PCF network element may determine that the terminal device 2 serving as the relay terminal device is authorized to use the RSC 1 and is authorized to relay the traffic in a PLMN corresponding to the PLMN ID 1; if the authorization request message includes the RSC 4 and a PLMN ID 3, the PCF network element may determine that the terminal device 2 serving as the relay terminal device is not authorized to use the RSC 4 and is not authorized to relay the traffic in a PLMN corresponding to the PLMN ID 3; or if the authorization request message includes the RSC 1 and a PLMN ID 3, the PCF network element may determine that the terminal device 2 serving as the relay terminal device is authorized to use the RSC 1 and is not authorized to relay the traffic in a PLMN corresponding to the PLMN ID 3.

In some embodiments, the policy control function network element may determine, depending on whether the proximity-based services authorization information includes the relay service code and the public land mobile network identifier, whether the terminal device is authorized to provide, in the PLMN corresponding to the PLMN ID, the connection service corresponding to the RSC.

Assuming that the authorization request message indicates that a terminal device 2 serves as the relay terminal device and the proximity-based services authorization information includes {an RSC 3 and an RSC 4} of the remote terminal device and {the PLMN ID 1 (an RSC 1 and an RSC 5) and the PLMN ID 2 (an RSC 2 and an RSC 6)} of the relay terminal device, if the authorization request message includes the RSC 1 and the PLMN ID 1, the PCF network element may determine that the terminal device 2 is authorized to provide, in a PLMN corresponding to the PLMN ID 1, a connection service corresponding to the RSC 1; or if the authorization request message includes the RSC 1 and the PLMN ID 2, the PCF network element may determine that the terminal device 2 is not authorized to provide, in a PLMN corresponding to the PLMN ID 2, a connection service corresponding to the RSC 1.

It should be noted that the terminal device 2 serves as the relay terminal device, and the proximity-based services authorization information that is of the terminal device 2 and that is used by the policy control function network element may include only related information (which is {the PLMN ID 1 (the RSC 1 and the RSC 5) and the PLMN ID 2 (the RSC 2 and the RSC 6)} of the relay terminal device) of the terminal device 2 serving as a relay, and does not include related information (which is {the RSC 3 and the RSC 4} of the remote terminal device) of the terminal device 2 serving as the remote terminal device. This is not limited in this application, and the foregoing is merely an example of this application.

In this way, whether the relay terminal device is authorized to serve the remote end in the PLMN corresponding to the PLMN ID and whether the relay terminal device is authorized to provide the relay service corresponding to the RSC can be verified.

In a possible design method, the authorization method provided in this embodiment of this application may further include: S703: The policy control function network element sends an authorization response message to the access and mobility management function network element. Accordingly, the access and mobility management function network element receives the authorization response message from the policy control function network element.

Optionally, the authorization response message may indicate being authorized or unauthorized, or the authorization response message may indicate an authorization success or an authorization failure.

Optionally, the authorization response message may indicate whether the terminal device is authorized to use the relay service code.

Optionally, that the authorization response message indicates whether the terminal device is authorized to use the relay service code may be specifically: indicating whether the terminal device is authorized to use the relay service code and whether the terminal device is authorized to relay the traffic in the public land mobile network corresponding to the public land mobile network identifier.

For example, when the terminal device is the remote terminal device, the authorization response message may indicate that the terminal device is authorized to use the relay service corresponding to the relay service code or the terminal device is not authorized to use the relay service corresponding to the relay service code.

For another example, when the terminal device is the relay terminal device, the authorization response message may indicate that the terminal device is authorized to use the relay service code and is authorized to relay the traffic in the public land mobile network corresponding to the public land mobile network identifier or indicate that the terminal device is not authorized to use the relay service code and/or is not authorized to relay the traffic in the public land mobile network corresponding to the public land mobile network identifier. Alternatively, the authorization response message may indicate that the terminal device is authorized to provide, in the PLMN corresponding to the PLMN ID, the relay service corresponding to the relay service code, or the terminal device is not authorized to provide, in the PLMN corresponding to the PLMN ID, the relay service corresponding to the relay service code.

In a possible design method, when the authorization response message indicates that the terminal device is authorized to use the relay service code, the authorization method provided in this embodiment of this application may further include: S706: The access and mobility management function network element sends a proximity-based services request message to the authentication server function network element. Accordingly, the authentication server function network element receives the proximity-based services request message from the access and mobility management function network element.

Optionally, the proximity-based services request message may include the relay service code. The relay service code is obtained by the AMF network element from the terminal device.

For example, assuming that the terminal device is the remote terminal device, when the authorization response message indicates being authorized, the AMF network element sends a proximity-based services relay request message (namely, the proximity-based services request message) to the AUSF network element, where the proximity-based services relay request message includes the relay service code. Optionally, the AUSF network element may generate a P-KID by using the relay service code, and may further generate a proximity-based services root key.

In this way, after an authorization check on the terminal device succeeds (that is, the terminal device is authorized to use the relay service code), the AMF network element triggers a P-KID derivation process to the AUSF network element, so that it can be ensured that the AUSF network element derives a P-KID corresponding to the authorized terminal device, and does not derive a P-KID corresponding to an unauthorized terminal device, and security can be improved.

It should be noted that the proximity-based services request message may be referred to as a proximity-based services key request message. A name of the proximity-based services request message is not limited in this application.

In some embodiments, the non-access stratum request message includes the proximity-based services key identifier. When the authorization response message indicates that the terminal device is authorized to use the relay service code and is authorized to relay the traffic in the public land mobile network corresponding to the public land mobile network identifier, the authorization method provided in this embodiment of this application may further include: S707: The access and mobility management function network element sends an authentication server function network element identifier get request message to the unified data management network element. Accordingly, the unified data management network element receives the authentication server function network element identifier get request message from the access and mobility management function network element.

Optionally, the authentication server function network element identifier get request message may include the proximity-based services key identifier.

For example, assuming that the terminal device is the relay terminal device, when the authorization response message indicates being authorized, the relay AMF network element may send the authentication server function network element identifier get request message to the remote UDM network element.

Optionally, after the authorization check on the terminal device succeeds, the AMF network element may request a key from the AUSF network element, so that it can be ensured that the authorized terminal device obtains the corresponding key and establishes a PC5 connection, the unauthorized terminal device cannot obtain the corresponding key, and security can be improved.

In some embodiments, when the authorization response message indicates that the terminal device is not authorized to use the relay service code and/or is not authorized to relay the traffic in the public land mobile network corresponding to the public land mobile network identifier, the authorization method provided in this embodiment of this application may further include: S708: The access and mobility management function network element sends a non-access stratum response message to the terminal device. Accordingly, the terminal device receives the non-access stratum response message from the access and mobility management function network element.

Optionally, the non-access stratum response message may indicate the request failure, for example, indicate a key request failure.

For example, assuming that the terminal device is the relay terminal device, when the authorization response message indicates being unauthorized, the relay AMF network element sends a non-access stratum remote key response message (namely, the non-access stratum response message) to the terminal device, where the non-access stratum remote key response message indicates the key request failure.

For another example, assuming that the terminal device is the remote terminal device, when the authorization response message indicates being unauthorized, the remote AMF network element sends a non-access stratum relay key response message (namely, the non-access stratum response message) to the terminal device, where the non-access stratum relay key response message indicates the key request failure.

In this way, if the terminal device is not authorized to use the relay service code and/or is not authorized to relay the traffic in the public land mobile network corresponding to the public land mobile network identifier, the terminal device is notified of the request failure.

It should be noted that a name of the non-access stratum response message is not limited in this application.

Based on the authorization method shown in FIG. 7, the PCF network element obtains the relay service code from the terminal device by interacting with the AMF network element, and determines, based on the proximity-based services authorization information of the terminal device, whether the terminal device is authorized to use the relay service code, where the relay service code identifies the connection service provided by the relay device for the remote device. In this way, whether the terminal device is authorized to use the relay service identified by the relay service code can be verified, so that security of establishing a relay communication connection is ensured.

For example, FIG. 8a is a schematic flowchart of still another authorization method according to an embodiment of this application. In FIG. 8a, an example in which an access and mobility management function network element determines whether a terminal device is authorized to use a relay service code is used for description. The method shown in FIG. 8a is applicable to the architectures shown in FIG. 1 to FIG. 4, and may be further applied to another network architecture and network architectures in various future forms. A corresponding name may alternatively be replaced with a name of a corresponding function in the another network architecture and the network architectures in the various future forms.

It should be noted that the method shown in FIG. 8a is applicable to a scenario in which a network element that serves a remote terminal device and a network element that serves a relay terminal device are the same or different. The terminal device may be the remote terminal device or the relay terminal device. The AMF network element may be referred to as a remote AMF network element or a relay AMF network element. A PCF network element may be referred to as a remote PCF network element or a relay PCF network element. An AUSF network element may be referred to as a remote AUSF network element or a relay AUSF network element. A UDM network element may be referred to as a remote UDM network element or a relay UDM network element.

As shown in FIG. 8a, the authorization method includes the following steps.

S801: The access and mobility management function network element obtains the relay service code of the terminal device.

For example, the relay service code may identify a connection service provided by a relay device for a remote device. For a specific implementation of the relay service code, refer to the descriptions in the foregoing first item. Details are not described herein again.

In a possible design method, S801 may include: The terminal device sends a non-access stratum request message to the access and mobility management function network element. Accordingly, the access and mobility management function network element receives the non-access stratum request message from the terminal device. For a specific implementation, refer to S705. Details are not described herein again.

Optionally, the non-access stratum request message may include the relay service code.

Optionally, the non-access stratum request message may further include a proximity-based services key identifier and a nonce. Alternatively, the non-access stratum request message may further include an SUCI and a nonce.

In this way, after receiving the non-access stratum request message, the access and mobility management function network element may perform S802 below to determine whether the terminal device is authorized to use the relay service code.

In this way, in a process in which the terminal device triggers a key request, the AMF network element can verify whether the terminal device is authorized to use the relay service code to provide or obtain a relay service.

It should be noted that the non-access stratum request message may be referred to as a non-access stratum key request message. A name of the non-access stratum request message is not limited in this application.

In a possible design method, S801 may include: The unified data management network element sends an authorization request message to the access and mobility management function network element. Accordingly, the access and mobility management function network element receives the authorization request message from the unified data management network element.

Optionally, the authorization request message is for requesting to verify whether the terminal device is authorized to use the relay service code. Optionally, the authorization request message may include a subscription permanent identifier and the relay service code that are of the terminal device.

For example, the subscription permanent identifier may be used by the access and mobility management function network element to obtain proximity-based services authorization information of the terminal device.

Optionally, the subscription permanent identifier may be determined by the unified data management network element based on the proximity-based services key identifier or the subscription concealed identifier.

For example, the unified data management network element may decrypt the subscription concealed identifier to obtain the subscription permanent identifier.

For example, the unified data management network element may obtain the subscription permanent identifier from a correspondence between the proximity-based services key identifier and the subscription permanent identifier based on the proximity-based services key identifier.

Optionally, an identifier of the access and mobility management function network element may be obtained by the UDM network element, based on the proximity-based services key identifier or the subscription concealed identifier, from a context that is of the terminal device and that is stored in the UDM network element.

For example, the UDM network element may obtain, based on the proximity-based services key identifier, an AMF network element that serves the terminal device.

For example, the UDM network element may obtain the subscription permanent identifier based on the subscription concealed identifier, obtain a security context of the terminal device based on the subscription permanent identifier, and obtain, from the security context, the AMF network element that serves the terminal device.

For example, the unified data management network element may send the authorization request message to an access and mobility management function network element determined based on the proximity-based services key identifier or the subscription concealed identifier.

In this way, after receiving the authorization request message, the access and mobility management function network element may perform S802 below to determine whether the terminal device is authorized to use the relay service code.

In some embodiments, that the unified data management network element sends the authorization request message to the access and mobility management function network element may include: When the terminal device is authorized to serve as the remote terminal device, the unified data management network element sends the authorization request message to the access and mobility management function network element.

In this way, when it is determined that the terminal device is authorized to serve as the remote terminal device, the UDM network element may request an authorization check from the AMF network element, and trigger the AMF network element to check whether the terminal device is authorized to use the relay service code. When it is determined that the terminal device is not authorized to serve as the remote terminal device, the UDM network element does not request an authorization check from the AMF network element, and does not trigger the AMF network element to check whether the terminal device is authorized to use the relay service code, so that a resource waste can be avoided.

Optionally, the UDM network element or the AMF network element may determine whether the terminal device is authorized to serve as the remote terminal device or the relay terminal device.

In a possible design method, the authorization method provided in this embodiment of this application may further include: The unified data management network element determines, based on proximity-based services subscription information of the terminal device, whether the terminal device is authorized to serve as the remote terminal device or the relay terminal device.

Optionally, the proximity-based services subscription information indicates an authorized proximity-based services service, for example, proximity-based services direct discovery, proximity-based services direct communication, or serving as the relay device.

In other words, the UDM network element may determine whether the terminal device is authorized to serve as the remote terminal device or the relay terminal device. For example, the remote UDM network element determines whether the terminal device is authorized to serve as the remote terminal device.

Optionally, the UDM network element may obtain the proximity-based services subscription information based on the subscription permanent identifier.

In a possible design method, the authorization method provided in this embodiment of this application may further include: S803: The access and mobility management function network element determines, based on proximity-based services subscription information of the terminal device, whether the terminal device is authorized to serve as the remote terminal device or the relay terminal device. For a specific implementation, refer to S704. Details are not described herein again.

In this way, the AMF network element may determine whether the terminal device is authorized to serve as the remote terminal device or the relay terminal device.

S802: The access and mobility management function network element determines, based on the proximity-based services authorization information of the terminal device, whether the terminal device is authorized to use the relay service code.

For example, the proximity-based services authorization information may be obtained by the access and mobility management function network element from the policy control function network element.

In some embodiments, assuming that the proximity-based services authorization information indicates that the terminal device is authorized with a relay service 1 and the relay service code received by the AMF network element from the terminal device or the UDM network element identifies the relay service 1, the terminal device is authorized to use the relay service code.

In some embodiments, assuming that the proximity-based services authorization information indicates that the terminal device is authorized with a relay service 2 and the relay service code received by the AMF network element from the terminal device or the UDM network element identifies a relay service 1, the terminal device is not authorized to use the relay service code.

In a possible design method, the authorization method provided in this embodiment of this application may further include: S804: The policy control function network element sends a communication message to the access and mobility management function network element. Accordingly, the access and mobility management function network element receives the communication message from the policy control function network element.

Optionally, the communication message may include the proximity-based services authorization information.

Optionally, the access and mobility management function network element may store the proximity-based services authorization information.

Optionally, the communication message may further include authorization indication information, and the authorization indication information may indicate that the proximity-based services authorization information is proximity-based services authorization information corresponding to the terminal device serving as a relay terminal device or a remote terminal device.

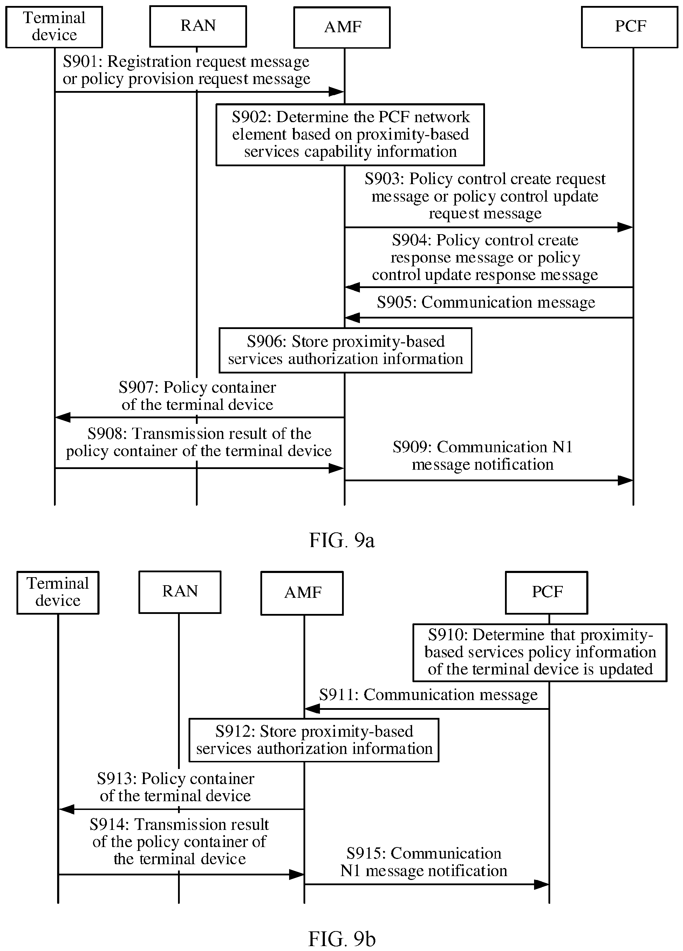

For example, the proximity-based services authorization information may be sent by the PCF network element to the AMF network element in a registration process of the terminal device or in a process in which the terminal device actively requests a policy, may be actively delivered by the PCF network element to the AMF network element after the PCF network element detects a policy update, or may be actively requested by the AMF network element. For a specific implementation process in which the AMF network element (for example, the remote AMF network element or the relay AMF network element) obtains the proximity-based services authorization information, refer to the following descriptions shown in FIG. 9a and FIG. 9b.

In some embodiments, the authorization method provided in this embodiment of this application may further include: The access and mobility management function network element sends an authorization information request message to the policy control function network element. Accordingly, the policy control function network element receives the authorization information request message from the access and mobility management function network element.

Optionally, the authorization information request message may be for requesting the proximity-based services authorization information of the terminal device. In this way, the proximity-based services authorization information may be actively requested by the AMF network element.

In a possible design method, S802 may include: When the terminal device is authorized to serve as the remote terminal device or the relay terminal device, the access and mobility management function network element determines, based on the proximity-based services authorization information of the terminal device, whether the terminal device is authorized to use the relay service code. For a specific implementation, refer to the corresponding implementation performed by the policy control function network element in S702. The policy control function network element only needs to be replaced with the access and mobility management function network element. Details are not described herein again.

In a possible design method, the terminal device is the remote terminal device. That the access and mobility management function network element determines, based on the proximity-based services authorization information of the terminal device, whether the terminal device is authorized to use the relay service code may include: The access and mobility management function network element determines whether the proximity-based services authorization information includes the relay service code. If the proximity-based services authorization information includes the relay service code, the terminal device is authorized to use the relay service code; or if the proximity-based services authorization information does not include the relay service code, the terminal device is not authorized to use the relay service code.

For example, a terminal device 1 serves as the remote terminal device, and proximity-based services authorization information of the terminal device 1 includes {an RSC 1 and an RSC 2} of the remote terminal device and {an RSC 3 and an RSC 4} of the relay terminal device. If the authorization request message includes the RSC 1, the access and mobility management function network element may determine that the terminal device 1 serving as the remote terminal device is authorized to use the RSC 1; or if the authorization request message includes an RSC 5, the access and mobility management function network element may determine that the terminal device 1 serving as the remote terminal device is not authorized to use the RSC 5.

It should be noted that the terminal device 1 serves as the remote terminal device, and the proximity-based services authorization information that is of the terminal device 1 and that is used by the access and mobility management function network element may include only related information (which is {the RSC 1 and the RSC 2} of the remote terminal device) of the terminal device 1 serving as a remote end, and does not include related information (which is {the RSC 3 and the RSC 4} of the relay terminal device) of the terminal device 1 serving as the relay terminal device. This is not limited in this application, and the foregoing is merely an example of this application.

In a possible design method, the terminal device is the relay terminal device, and S802 may include: The access and mobility management function network element determines, based on the proximity-based services authorization information, whether the terminal device is authorized to use the relay service code and whether the terminal device is authorized to relay traffic in a public land mobile network corresponding to a public land mobile network identifier.

In some embodiments, the terminal device is the relay terminal device, and the AMF network element may determine, based on the proximity-based services authorization information, whether the relay terminal device is authorized to provide, in the PLMN corresponding to the PLMN ID, the connection service corresponding to the relay service code.

In some embodiments, the access and mobility management function network element may obtain the public land mobile network identifier of a network served by the access and mobility management function network element.

Optionally, if the terminal device is authorized to serve as the relay terminal device, the AMF network element may obtain the public land mobile network identifier of the network served by the AMF network element.

In a possible design method, that the access and mobility management function network element determines, based on the proximity-based services authorization information, whether the terminal device is authorized to use the relay service code and whether the terminal device is authorized to relay the traffic in the public land mobile network corresponding to the public land mobile network identifier may include: The access and mobility management function network element determines whether the proximity-based services authorization information includes the relay service code and the public land mobile network identifier. If the proximity-based services authorization information includes the relay service code and the public land mobile network identifier, the terminal device is authorized to use the relay service code and is authorized to relay the traffic in the public land mobile network corresponding to the public land mobile network identifier; if the proximity-based services authorization information does not include the relay service code, the terminal device is not authorized to use the relay service code; or if the proximity-based services authorization information does not include the public land mobile network identifier, the terminal device is not authorized to relay the traffic in the public land mobile network corresponding to the public land mobile network identifier.

Optionally, assuming that a terminal device 2 serves as the relay terminal device and proximity-based services authorization information of the terminal device 2 includes {an RSC 3 and an RSC 4} of the remote terminal device, {an RSC 1 and an RSC 2} of the relay terminal device, a PLMN ID 1, and a PLMN ID 2, if the authorization request message includes the RSC 1 and the PLMN ID 1, the access and mobility management function network element may determine that the terminal device 2 serving as the relay terminal device is authorized to use the RSC 1 and is authorized to relay the traffic in a PLMN corresponding to the PLMN ID 1; if the authorization request message includes the RSC 4 and a PLMN ID 3, the access and mobility management function network element may determine that the terminal device 2 serving as the relay terminal device is not authorized to use the RSC 4 and is not authorized to relay the traffic in a PLMN corresponding to the PLMN ID 3; or if the authorization request message includes the RSC 1 and a PLMN ID 3, the access and mobility management function network element may determine that the terminal device 2 serving as the relay terminal device is authorized to use the RSC 1 and is not authorized to relay the traffic in a PLMN corresponding to the PLMN ID 3.

In some embodiments, the access and mobility management function network element may determine, depending on whether the proximity-based services authorization information includes the relay service code and the public land mobile network identifier, whether the terminal device is authorized to provide, in the PLMN corresponding to the PLMN ID, the connection service corresponding to the RSC.

Assuming that a terminal device 2 serves as the relay terminal device and the proximity-based services authorization information includes {an RSC 3 and an RSC 4} of the remote terminal device and {a PLMN ID 1 (an RSC 1 and an RSC 5) and a PLMN ID 2 (an RSC 2 and an RSC 6)} of the relay terminal device, if the authorization request message includes the RSC 1 and the PLMN ID 1, the access and mobility management function network element may determine that the terminal device 2 is authorized to provide, in a PLMN corresponding to the PLMN ID 1, a connection service corresponding to the RSC 1; or if the authorization request message includes the RSC 1 and the PLMN ID 2, the access and mobility management function network element may determine that the terminal device 2 is not authorized to provide, in a PLMN corresponding to the PLMN ID 2, a connection service corresponding to the RSC 1.

It should be noted that the terminal device 2 serves as the relay terminal device, and the proximity-based services authorization information that is of the terminal device 2 and that is used by the access and mobility management function network element may include only related information (which is {the PLMN ID 1 (the RSC 1 and the RSC 5) and the PLMN ID 2 (the RSC 2 and the RSC 6)} of the relay terminal device) of the terminal device 2 serving as a relay, and does not include related information (which is {the RSC 3 and the RSC 4} of the remote terminal device) of the terminal device 2 serving as the remote terminal device. This is not limited in this application, and the foregoing is merely an example of this application.

In this way, the AMF network element can verify whether the relay terminal device is authorized to serve the remote end in the PLMN corresponding to the PLMN ID and whether the relay terminal device is authorized to provide the relay service corresponding to the RSC.

In a possible design method, the authorization method provided in this embodiment of this application may further include: S805: When the terminal device serving as the remote terminal device is authorized to use the relay service code, the access and mobility management function network element sends a proximity-based services request message to the authentication server function network element. Accordingly, the authentication server function network element receives the proximity-based services request message from the access and mobility management function network element. For a specific implementation, refer to S706. Details are not described herein again.

Optionally, the proximity-based services request message may include the relay service code.

For example, the remote AMF network element sends a proximity-based services relay key request message (namely, the proximity-based services request message) to the remote AUSF network element.

In this way, after an authorization check on the terminal device succeeds (that is, the terminal device is authorized to use the relay service code), the AMF network element triggers a P-KID derivation process to the AUSF network element, so that it can be ensured that the AUSF network element derives a P-KID corresponding to the authorized terminal device, and does not derive a P-KID corresponding to an unauthorized terminal device.

It should be noted that a name of the proximity-based services request message is not limited in this application.

In a possible design method, the authorization method provided in this embodiment of this application may further include: S806: When the terminal device is authorized to use the relay service code and is authorized to relay the traffic in the public land mobile network corresponding to the public land mobile network identifier, the access and mobility management function network element sends an authentication server function network element identifier get request message or a key get request message to the unified data management network element. Accordingly, the unified data management network element receives the authentication server function network element identifier get request message or the key get request message from the access and mobility management function network element.

Optionally, the authentication server function network element identifier get request message may include the proximity-based services key identifier or the subscription concealed identifier. The key get request message may include the proximity-based services key identifier or the subscription concealed identifier.

Alternatively, optionally, the authentication server function network element identifier get request message may include the proximity-based services key identifier and the relay service code. The key get request message may include the proximity-based services key identifier and the relay service code.

Alternatively, optionally, the authentication server function network element identifier get request message may include the subscription concealed identifier and the relay service code. The key get request message may include the subscription concealed identifier and the relay service code.

For example, the relay AMF network element may send the authentication server function network element identifier get request message or the key get request message (which may also be referred to as a relay key get request message) to the remote UDM network element.

In this way, a corresponding key is obtained and a relay communication connection is established only when an authorization check on the terminal device succeeds (that is, the terminal device is authorized to use the relay service code and is authorized to relay the traffic in the public land mobile network corresponding to the public land mobile network identifier). In this way, security can be improved.

Optionally, the UDM network element may request the authorization check from the AMF network element when the AMF network element requests an AUSF network element instance identifier or requests to obtain the key.

In some embodiments, that the unified data management network element sends the authorization request message to the access and mobility management function network element may include: The UDM network element sends the authorization request message to the AMF network element when receiving the authentication server function network element identifier get request message or the key get request message from the AMF network element.

For example, the relay AMF network element determines whether the relay terminal device is authorized to provide the relay service corresponding to the relay service code. When the relay terminal device is authorized to provide the relay service corresponding to the relay service code, the relay AMF network element discovers the remote UDM network element, sends the authentication server function network element identifier get request message or the key get request message to the remote UDM network element, and triggers the remote UDM network element to send the authorization request message to the AMF network element, and the relay AMF network element determines whether the remote terminal device is authorized to use the relay service corresponding to the relay service code in the authorization request message.

In a possible design method, the authorization method provided in this embodiment of this application may further include: S807: When the terminal device is not authorized to use the relay service code and/or is not authorized to relay the traffic in the public land mobile network corresponding to the public land mobile network identifier, the access and mobility management function network element sends a non-access stratum response message to the terminal device. Accordingly, the terminal device receives the non-access stratum response message from the access and mobility management function network element. For a specific implementation, refer to S708. Details are not described herein again.

Optionally, the non-access stratum response message may indicate a request failure, for example, indicate a key request failure.

In a possible design method, the authorization method provided in this embodiment of this application may further include: The access and mobility management function network element sends an authorization response message to the unified data management network element. Accordingly, the unified data management network element receives the authorization response message from the access and mobility management function network element.

Optionally, the authorization response (Namf_UEAuthorization response) message may indicate whether the terminal device is authorized to use the relay service code.

For example, the remote AMF network element sends the authorization response message to the remote UDM network element, and the authorization response message may indicate whether the terminal device is authorized to use the relay service corresponding to the relay service code.

Optionally, corresponding to S801, the UDM network element sends the authorization request message to the AMF network element. After determining whether the terminal device is authorized to use the relay service code, the AMF network element sends the authorization response message to the UDM network element.

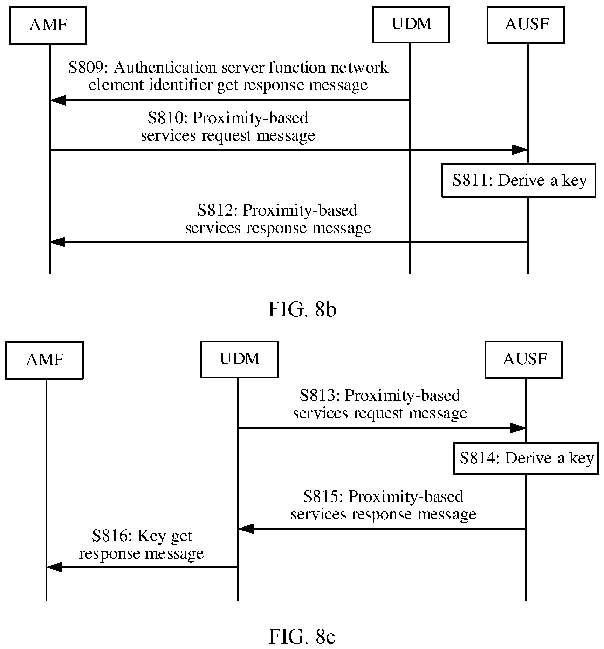

In some embodiments, when the authorization response message indicates that the terminal device is authorized to use the relay service code, after the UDM network element receives the authorization response message, the AMF network element directly requests the key from the AUSF network element. For details, refer to FIG. 8b. Alternatively, when the authorization response message indicates that the terminal device is authorized to use the relay service code, after the UDM network element receives the authorization response message, the UDM network element requests the key from the AUSF network element, and provides the key for the AMF network element. For details, refer to FIG. 8c.

FIG. 8b is a schematic flowchart of still another authorization method according to an embodiment of this application. In FIG. 8b, an example in which an AMF network element directly requests a key from an AUSF network element is used. The method shown in FIG. 8b is applicable to the architectures shown in FIG. 1 to FIG. 4, and may be further applied to another network architecture and network architectures in various future forms. A corresponding name may alternatively be replaced with a name of a corresponding function in the another network architecture and the network architectures in the various future forms. Similar to the method shown in FIG. 8a, the method shown in FIG. 8b is applicable to a scenario in which a network element that serves a remote terminal device and a network element that serves a relay terminal device are the same or different.

As shown in FIG. 8b, the authorization method includes the following steps.

S809: A unified data management network element sends an authentication server function network element identifier get response message to the access and mobility management function network element. Accordingly, the access and mobility management function network element receives the authentication server function network element identifier get response message from the unified data management network element.

Optionally, the authentication server function network element identifier get response message may include an authentication server function network element instance identifier, and may further include a subscription permanent identifier.

Optionally, the authentication server function network element instance identifier may identify the authentication server function network element. For example, a relay AMF network element may obtain a remote AUSF network element based on the authentication server function network element instance identifier.

For example, when the remote terminal device is authorized to use a relay service corresponding to a relay service code, the remote UDM network element sends the authentication server function network element identifier get response message to the relay AMF network element.

Optionally, S809 may include: When an authorization response message indicates that a terminal device is authorized to use the relay service code, the unified data management network element sends the authentication server function network element identifier get response message to the access and mobility management function network element.

S810: The access and mobility management function network element sends a proximity-based services request message to the authentication server function network element. Accordingly, the authentication server function network element receives the proximity-based services request message from the access and mobility management function network element.

For example, the proximity-based services request message may include a P-KID, the relay service code, and a nonce. Alternatively, the proximity-based services request message may include the subscription permanent identifier, the relay service code, and the nonce.

For example, the relay AMF network element sends the proximity-based services request message (which may also be referred to as a proximity-based services remote key request message) to the remote AUSF network element.

It should be noted that a name of the proximity-based services request message is not limited in this application.

Optionally, after receiving the subscription permanent identifier, the AMF network element may forward the subscription permanent identifier to the AUSF network element. The subscription permanent identifier may be used by the AUSF network element to obtain a corresponding intermediate key Kausf or ProSe root key.

It should be noted that the AUSF network element may obtain the intermediate key Kausf or the ProSe root key based on the subscription permanent identifier or the proximity-based services key identifier.

For example, the AMF network element may send, to the AUSF network element, the proximity-based services key identifier received from the terminal device, so that the AUSF network element obtains the intermediate key Kausf or the ProSe root key based on the proximity-based services key identifier.

S811: The authentication server function network element derives the key.

Optionally, the AUSF network element generates a freshness parameter, and derives a remote key K_{R} based on at least two of the intermediate key Kausf, the relay service code, the freshness parameter, and the nonce, or derives a remote key K_{R} based on at least two of the ProSe root key, the relay service code, the freshness parameter, and the nonce.

Optionally, the intermediate key Kausf may be obtained by the AUSF network element based on the subscription permanent identifier or the proximity-based services key identifier.

S812: The authentication server function network element sends a proximity-based services response message to the access and mobility management function network element. Accordingly, the access and mobility management function network element receives the proximity-based services response message from the authentication server function network element.

For example, the proximity-based services response message may include the key (for example, the remote key K_{R}) and the freshness parameter.

It should be noted that the proximity-based services response message may be referred to as a proximity-based services key response message. A name of the proximity-based services response message is not limited in this application.

Based on the method shown in FIG. 8b, the AMF network element can directly request the key from the AUSF network element, and the AUSF network element obtains the key, and sends the key to the AMF network element.

FIG. 8c is a schematic flowchart of still another authorization method according to an embodiment of this application. In FIG. 8c, an example in which a UDM network element requests a key from an AUSF network element and provides the key for an AMF network element is used. The method shown in FIG. 8c is applicable to the architectures shown in FIG. 1 to FIG. 4, and may be further applied to another network architecture and network architectures in various future forms. A corresponding name may alternatively be replaced with a name of a corresponding function in the another network architecture and the network architectures in the various future forms. Similar to the method shown in FIG. 8a, the method shown in FIG. 8c is applicable to a scenario in which a network element that serves a remote terminal device and a network element that serves a relay terminal device are the same or different.

As shown in FIG. 8c, the authorization method includes the following steps.

S813: The unified data management network element sends a proximity-based services request message to the authentication server function network element. Accordingly, the authentication server function network element receives the proximity-based services request message from the unified data management network element.

Optionally, the proximity-based services request message may include a subscription permanent identifier, a relay service code, and a nonce.

Optionally, the subscription permanent identifier is used by the AUSF network element to obtain an intermediate key Kausf or a ProSe root key, to generate the key, for example, a remote key K_{R}.

For example, a remote UDM network element sends the proximity-based services request message to a remote AUSF network element.

Optionally, S813 may include: When an authorization response message indicates that a terminal device is authorized to use the relay service code, the unified data management network element sends the proximity-based services request message to the authentication server function network element.

S814: The authentication server function network element derives the key.

For a specific implementation of S814, refer to S811. Details are not described herein again.

S815: The authentication server function network element sends a proximity-based services response message to the unified data management network element. Accordingly, the unified data management network element receives the proximity-based services response message from the authentication server function network element.

Optionally, the proximity-based services response message may include the key (for example, the remote key K_{R}) and a freshness parameter.

S816: The unified data management network element sends a key get response message to the access and mobility management function network element. Accordingly, the access and mobility management function network element sends the key get response message to the unified data management network element.

Optionally, the key get response message may include the key (for example, the remote key K_{R}) and the freshness parameter.

Based on the method shown in FIG. 8c, the UDM network element can request the key from the AUSF network element, the AUSF network element obtains the key, and sends the key to the UDM network element, and the UDM network element provides the key for the AMF network element.

Based on the method shown in FIG. 8a, the AMF network element obtains the relay service code of the terminal device, and determines, based on proximity-based services authorization information of the terminal device, whether the terminal device is authorized to use the relay service code, where the relay service code identifies a connection service provided by a relay device for a remote device. In this way, whether the terminal device is authorized to use a relay service identified by the relay service code can be verified, so that security of establishing a relay communication connection can be ensured.

For example, FIG. 9a is a schematic flowchart of still another authorization method according to an embodiment of this application. In FIG. 9a, descriptions are provided by using an example in which an AMF network element obtains proximity-based services authorization information in a registration process of a terminal device and in a process in which the terminal device actively requests a policy. The method shown in FIG. 9a may be used in combination with the methods shown in FIG. 8a to FIG. 8c or used separately.

It should be noted that the method shown in FIG. 9a is applicable to a scenario in which a network element that serves a remote terminal device and a network element that serves a relay terminal device are the same or different. The terminal device may be the remote terminal device or the relay terminal device. The AMF network element may be referred to as a remote AMF network element or a relay AMF network element. A PCF network element may be referred to as a remote PCF network element or a relay PCF network element.

As shown in FIG. 9a, the authorization method includes the following steps.

S901: The terminal device sends a registration request message or a policy provision request message to the access and mobility management function network element. Accordingly, the access and mobility management function network element receives the registration request message or the policy provision request message from the terminal device.

Optionally, the registration request message may include proximity-based services capability information.

Optionally, the proximity-based services capability information may indicate a proximity-based services capability supported by the terminal device.

For example, the proximity-based services capability information may include one or more of the following: a 5G proximity-based services direct discovery (5G ProSe direct discovery) capability, a 5G proximity-based services direct communication (5G ProSe direct communication) capability, a 5G proximity-based services layer-2 terminal device-to-network relay (5G ProSe layer-2 UE-to-network relay), a 5G proximity-based services layer-3 terminal device-to-network relay (5G ProSe layer-3 UE-to-network relay), a 5G proximity-based services layer-2 remote terminal device (5G ProSe layer-2 remote UE), and a 5G proximity-based services layer-3 remote terminal device (5G ProSe layer-3 remote UE).

Optionally, the policy provision request message may be for requesting the proximity-based services authorization information.

For example, the policy provision request message may include a policy container of the terminal device, and the policy container of the terminal device may include a 5G proximity-based services policy provision request.

It should be noted that the registration process of the terminal device corresponds to the registration request message, and the process in which the terminal device actively requests the policy corresponds to the policy provision request message. When there is no available proximity-based services policy information in the terminal device, or proximity-based services policy information in the terminal device is invalid, the terminal device may actively initiate the policy provision request.

S902: The access and mobility management function network element determines the PCF network element based on the proximity-based services capability information.

Optionally, the determined PCF network element supports providing of the proximity-based services authorization information.

For example, the AMF network element selects, based on the proximity-based services capability information, a PCF network element that supports distribution of the proximity-based services authorization information.

It should be noted that S902 may be performed in the registration process of the terminal device, and S902 is not performed in the process in which the terminal device actively requests the policy.

S903: The access and mobility management function network element sends a policy control create request message or a policy control update request message to the policy control function network element. Accordingly, the policy control function network element receives the policy control create request message or the policy control update request message from the access and mobility management function network element.

Optionally, the policy control create (Npcf_UEpolicyControl_Create) request message may include a subscription permanent identifier of the terminal device.

Optionally, the policy control create request message may further include but is not limited to a serving network name and/or the policy container of the terminal device.

Optionally, the policy control update (Npcf_UEPolicyControl_Update) request message may include the policy container of the terminal device.

In some embodiments, the policy container of the terminal device is provided by the terminal device. The policy container of the terminal device may include but is not limited to one or more of the following: a policy section identifier (policy section identifier, PSI), an operating system identifier, an indication indicating that the terminal device supports an access network discovery and selection policy (access network discovery & selection policy, ANDSP), and an indication of the 5G ProSe policy provision request.

It should be noted that the registration process of the terminal device corresponds to the policy control create request message, and the process in which the terminal device actively requests the policy corresponds to the policy control update request message.

S904: The policy control function network element sends a policy control create response message or a policy control update response message to the access and mobility management function network element. Accordingly, the access and mobility management function network element receives the policy control create response message or the policy control update response message from the policy control function network element.

Optionally, the policy control create (Npcf_UEpolicyControl_Create) response message may include a policy control request trigger parameter.

It should be noted that the registration process of the terminal device corresponds to the policy control create response message, and the process in which the terminal device actively requests the policy corresponds to the policy control update (Npcf_UEPolicyControl_Update) response message.

S905: The policy control function network element sends a communication message to the access and mobility management function network element. Accordingly, the access and mobility management function network element receives the communication message from the policy control function network element.

Optionally, the communication message may include the proximity-based services authorization information.

Optionally, the communication message may further include the policy container, and the policy container may include proximity-based services policy information.

For example, the proximity-based services policy information may be for performing a discovery procedure, establishing relay communication and direct communication, and the like.

In some embodiments, the PCF network element obtains information (for example, the proximity-based services authorization information) related to policy subscription and a latest PSI list from a UDR network element.

Optionally, in the registration process of the terminal device, the communication message may be referred to as a communication N1N2 message (Namf_Communication_N1N2Message). In the process in which the terminal device actively requests the policy, the communication message may be referred to as a communication N1N2 message transfer (Namf_Communication_N1N2MessageTransfer) message.

Optionally, the PCF network element may send corresponding proximity-based services authorization information depending on whether the terminal device is authorized to serve as the remote terminal device or the relay terminal device.

For example, if the terminal device is authorized to serve as the remote terminal device, the proximity-based services authorization information may include a relay service code. If the terminal device is authorized to serve as the relay terminal device, the proximity-based services authorization information may include a relay service code and a public land mobile network identifier. If the terminal device is authorized to serve as both the remote terminal device and the relay terminal device, the proximity-based services authorization information may include a relay service code that corresponds when the terminal device serves as a remote end, a relay service code that corresponds when the terminal device serves as a relay, and a public land mobile network identifier.

Optionally, the communication message may further include authorization indication information. For a specific implementation of the authorization indication information, refer to S804. Details are not described herein again.

S906: The access and mobility management function network element stores the proximity-based services authorization information.

It should be noted that, both the registration process of the terminal device and the process in which the terminal device actively requests the policy include S906 and S907 to S909 below.

S907: The access and mobility management function network element sends the policy container of the terminal device to the terminal device. Accordingly, the terminal device receives the policy container of the terminal device from the access and mobility management function network element.

S908: The terminal device sends a transmission result of the policy container of the terminal device to the access and mobility management function network element. Accordingly, the access and mobility management function network element receives the transmission result of the policy container of the terminal device from the terminal device.

S909: The access and mobility management function network element sends a communication N1 message notification to the policy control function network element. Accordingly, the policy control function network element receives the communication N1 message notification from the access and mobility management function network element.

Optionally, the communication N1 message notification (Namf_Communication_N1messageNotify) may be for notifying the PCF network element whether the terminal device receives the proximity-based services policy information.

S909 may be an optional step.

For example, FIG. 9b is a schematic flowchart of still another authorization method according to an embodiment of this application. In FIG. 9b, descriptions are provided by using an example in which a PCF network element actively sends proximity-based services authorization information to an AMF network element after detecting a policy update. The method shown in FIG. 9b may be used in combination with the methods shown in FIG. 8a to FIG. 8c or used separately. Similar to the method shown in FIG. 9a, the method shown in FIG. 9b is applicable to a scenario in which a network element that serves a remote terminal device and a network element that serves a relay terminal device are the same or different.

As shown in FIG. 9b, the authorization method includes the following steps.

S910: The policy control function network element determines that proximity-based services policy information of a terminal device is updated.

Optionally, the PCF network element receives new proximity-based services policy information from a UDR network element.

Optionally, after the terminal device registers with a network, the PCF network element detects that the proximity-based services policy information of the terminal device is updated.

S911: The policy control function network element sends a communication message to the access and mobility management function network element. Accordingly, the access and mobility management function network element receives the communication message from the policy control function network element.

Optionally, the communication message may include the proximity-based services authorization information of the terminal device. Optionally, the communication message may further include a policy container, and the policy container may include the proximity-based services policy information. For a specific implementation of the communication message, refer to S905. Details are not described herein again.

Optionally, the communication message may be referred to as a communication N1N2 message transfer (Namf_Communication_N1N2MessageTransfer) message.

The method shown in FIG. 9b may further include S912 to S915. For implementations of S912 to S915, refer to S906 to S909. Details are not described herein again.

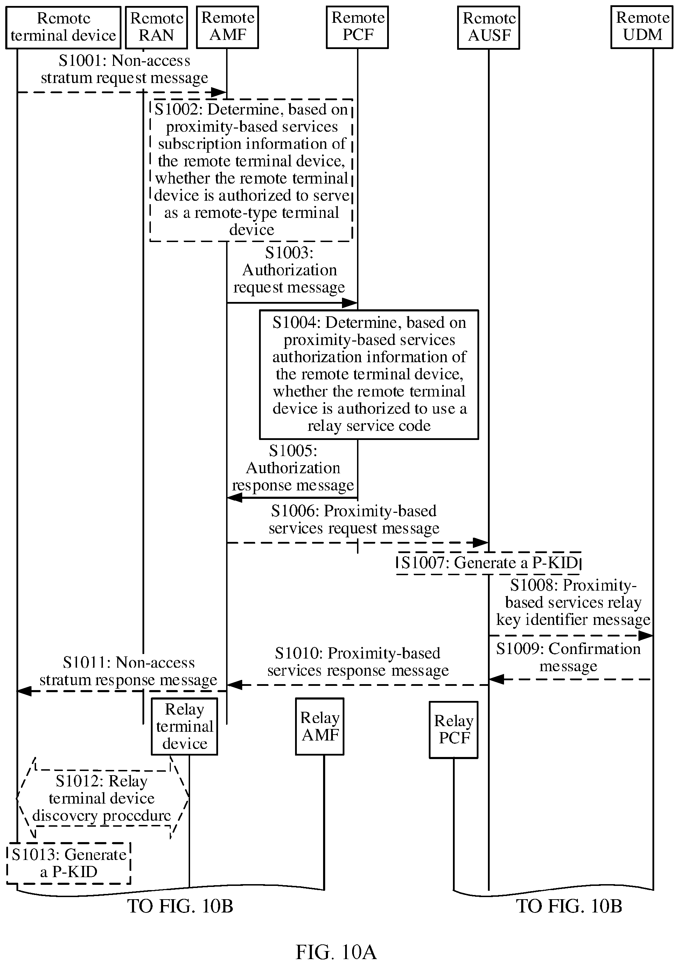

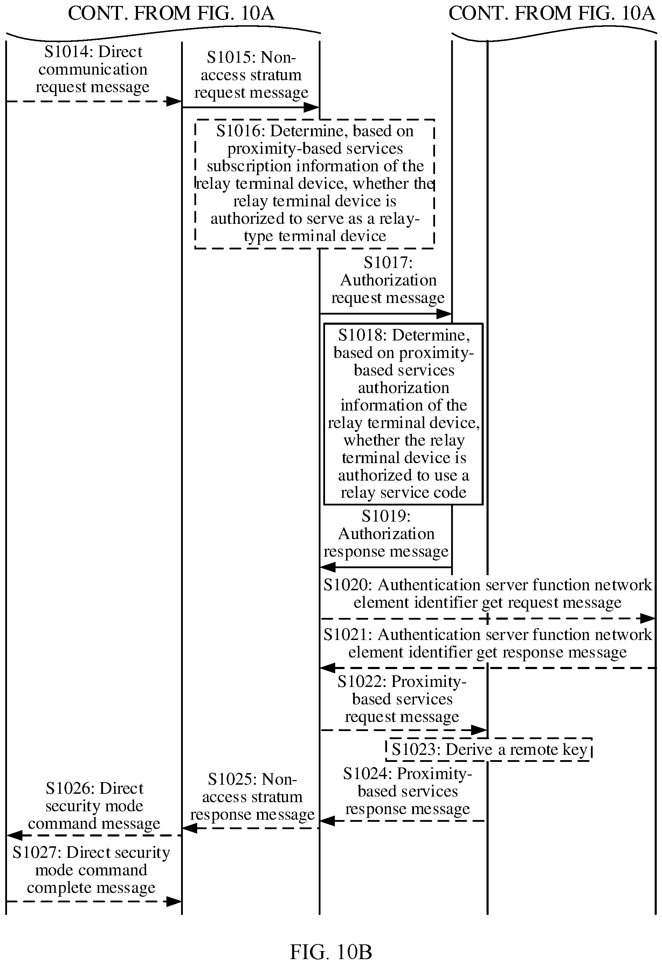

For example, FIG. 10A and FIG. 10B are a schematic flowchart of still another authorization method according to an embodiment of this application. In FIG. 10A and FIG. 10B, the method shown in FIG. 7 is specifically described by using an example in which a remote PCF network element verifies, in a process in which a terminal device triggers a key request, whether a remote terminal device is authorized to use a relay service code and a relay PCF network element verifies, in a process of establishing a relay communication connection, whether a relay terminal device is authorized to use a relay service code. In FIG. 10A and FIG. 10B, descriptions are provided in a case in which the method shown in FIG. 7 is applicable to the scenario shown in FIG. 5. The method shown in FIG. 7 is also applicable to the scenario shown in FIG. 6. Details are not described in this application again.

It should be noted that the method shown in FIG. 10A and FIG. 10B is applicable to a scenario in which a network element that serves the remote terminal device and a network element that serves the relay terminal device are the same or different. The remote PCF network element and the relay PCF network element may be a same PCF network element, and a remote AMF network element and a relay AMF network element may be a same AMF network element.

As shown in FIG. 10A and FIG. 10B, the authorization method includes the following steps.

S1001: The remote terminal device sends a non-access stratum request message to the remote AMF network element. Accordingly, the remote AMF network element receives the non-access stratum request message from the remote terminal device.

Optionally, the non-access stratum request message may include the relay service code.

Optionally, the non-access stratum request message may be referred to as a non-access stratum relay key request message.

In some embodiments, before S1001, the method provided in this embodiment of this application may further include: The remote terminal device registers with a network.

Optionally, the remote terminal device may obtain service authorization and proximity-based services policy information from the network.

For example, the relay service code may be obtained by the remote terminal device from the proximity-based services policy information.

S1002: The remote AMF network element determines, based on proximity-based services subscription information of the remote terminal device, whether the remote terminal device is authorized to serve as a remote-type terminal device.

For a specific implementation of S 1002, refer to the descriptions corresponding to the case in which the terminal device is the remote terminal device in S704. Details are not described herein again.

It should be noted that S1002 may be an optional step.

S1003: The remote AMF network element sends an authorization request message to the remote PCF network element. Accordingly, the remote PCF network element receives the authorization request message from the remote AMF network element.

For example, the authorization request message may be for requesting to verify whether the remote terminal device is authorized to use the relay service code.

For example, the authorization request message includes the relay service code from the remote terminal device. The remote AMF network element serves the remote terminal device.

In some embodiments, the authorization request message may further include one or more of the following: terminal indication information, an identifier of the remote terminal device, and a context identifier of the remote terminal device.

Optionally, the terminal indication information may indicate that the terminal device is the remote terminal device.

For example, the identifier of the remote terminal device or the context identifier of the remote terminal device may be for obtaining proximity-based services authorization information of the remote terminal device.

For example, the identifier of the remote terminal device may be an SUPI or an SUCI of the remote terminal device.

In some embodiments, the authorization request message may indicate that a terminal device that requests verification is the remote terminal device.

In some embodiments, the remote PCF network element may determine, based on the authorization request message, whether a type of the terminal device that requests the verification is the relay terminal device or the remote terminal device.

It should be noted that, for a specific implementation of the authorization request message, refer to the descriptions corresponding to the case in which the terminal device serves as the remote terminal device in S702. Details are not described herein again.

In a possible design method, S701 may include: When the terminal device is authorized to serve as the remote terminal device, the remote access and mobility management function network element sends the authorization request message to the remote policy control function network element.

In this way, when the terminal device is not authorized to serve as the remote terminal device, the remote AMF network element does not send the authorization request message to the remote PCF network element, so that the remote PCF network element can be prevented from determining whether the terminal device is authorized to use the relay service code. In this way, a resource waste can be wasted.

S1004: The remote PCF network element determines, based on the proximity-based services authorization information of the remote terminal device, whether the remote terminal device is authorized to use the relay service code.

Optionally, the proximity-based services authorization information may be determined by the remote policy control function network element based on the identifier of the remote terminal device and/or the context identifier of the remote terminal device.

It should be noted that, for a specific implementation of S1004, refer to the implementation corresponding to S702 when the terminal device is the remote terminal device and the authorization request message indicates that the terminal device is the remote terminal device. Details are not described herein again.

In this way, whether the remote terminal device is authorized to use a relay service corresponding to the RSC can be verified.

S1005: The remote PCF network element sends an authorization response message to the remote AMF network element. Accordingly, the remote AMF network element receives the authorization response message from the remote PCF network element.

Optionally, the authorization response message may indicate being authorized or unauthorized, or the authorization response message may indicate an authorization success or an authorization failure.

Optionally, the authorization response message may indicate whether the remote terminal device is authorized to use the relay service code. For a specific implementation of the authorization response message, refer to the implementation of the authorization response message in the case in which the terminal device is the remote terminal device in S703. Details are not described herein again.

S1006: When the authorization response message indicates that the remote terminal device is authorized to use the relay service code, the remote AMF network element sends a proximity-based services request message to a remote AUSF network element. Accordingly, the remote AUSF network element receives the proximity-based services request message from the remote AMF network element.

Optionally, the proximity-based services request message may include the relay service code. The relay service code is obtained by the remote AMF network element from the remote terminal device.

Optionally, the proximity-based services request message may be referred to as a proximity-based services relay key request message.

In this way, after an authorization check on the remote terminal device succeeds (that is, the remote terminal device is authorized to use the relay service code), the remote AMF network element triggers a P-KID derivation process to the remote AUSF network element, so that it can be ensured that the remote AUSF network element derives a P-KID corresponding to the authorized remote terminal device, and does not derive a P-KID corresponding to an unauthorized remote terminal device, and security can be improved.

For a specific implementation of S1006, refer to S706. Details are not described herein again.

It should be noted that, for specific implementations of S1007 to S1009, refer to the implementations corresponding to S505 to S507. Details are not described herein again.

S1010: The remote AUSF network element sends a proximity-based services response message to the remote AMF network element. Accordingly, the remote AMF network element receives the proximity-based services response message from the remote AUSF network element.

Optionally, the proximity-based services response message may be referred to as a proximity-based services relay key response message. This is not limited in this application.

S1011: The remote AMF network element sends a non-access stratum response message to the remote terminal device. Accordingly, the remote terminal device receives the non-access stratum response message from the remote AMF network element.

When the authorization response message indicates that the remote terminal device is not authorized to use the relay service code, the non-access stratum response message may indicate a request failure, for example, indicate a key request failure.

For example, when the authorization response message indicates that the remote terminal device is not authorized to use the relay service code, S1006 to S1010 may not be performed, and S1011 may be directly performed.

In this way, if the remote terminal device is not authorized to use the relay service code, the remote terminal device is notified of the key request failure, so that security can be improved.

When the authorization response message indicates that the remote terminal device is authorized to use the relay service code, the non-access stratum response message may indicate a request success, for example, indicate a key request success.

For example, when the authorization response message indicates that the remote terminal device is authorized to use the relay service code, S1006 to S1011 may be performed.

It should be noted that, for implementations of S1012 to S1014, refer to S510 to S512. Details are not described herein again.

For example, in a relay terminal device discovery procedure, the remote terminal device generates the P-KID, and sends a direct communication request message to the relay terminal device.

S1015: The relay terminal device sends a non-access stratum request message to the relay AMF network element. Accordingly, the relay AMF network element receives the non-access stratum request message from the relay terminal device.

Optionally, the non-access stratum request message may be referred to as a NAS remote key request message.

Optionally, the non-access stratum request message may include the relay service code.

Optionally, the non-access stratum request message may further include the proximity-based services key identifier and a nonce.

S1016: The relay AMF network element determines, based on proximity-based services subscription information of the relay terminal device, whether the relay terminal device is authorized to serve as a relay-type terminal device.

For a specific implementation of S1016, refer to the descriptions corresponding to the case in which the terminal device is the relay terminal device in S704. Details are not described herein again.

It should be noted that S1016 may be an optional step.

S1017: The relay AMF network element sends an authorization request message to the relay PCF network element. Accordingly, the relay PCF network element receives the authorization request message from the relay AMF network element.

For example, the authorization request message may be for requesting to verify whether the relay terminal device is authorized to use the relay service code.

For example, the authorization request message includes the relay service code from the relay terminal device. The relay AMF network element serves the relay terminal device.

In some embodiments, the authorization request message may further include one or more of the following: terminal indication information, an identifier of the relay terminal device, a context identifier of the relay terminal device, and a public land mobile network identifier.

Optionally, the terminal indication information may indicate that the terminal device is the relay terminal device.

For example, the identifier of the relay terminal device or the context identifier of the relay terminal device may be for obtaining proximity-based services authorization information of the relay terminal device.

For example, the identifier of the relay terminal device may be an SUPI or an SUCI of the relay terminal device.

Optionally, the public land mobile network identifier may be obtained by the relay access and mobility management function network element based on a network served by the relay access and mobility management function network element.

In some embodiments, the authorization request message may indicate that the terminal device that requests the verification is the relay terminal device.

In some embodiments, the relay PCF network element may determine, based on the authorization request message, whether the type of the terminal device that requests the verification is the relay terminal device or the remote terminal device.

It should be noted that for a specific implementation of the authorization request message, refer to the descriptions corresponding to the case in which the terminal device serves as the relay terminal device in S702. Details are not described herein again.

In a possible design method, S701 may include: When the relay terminal device is authorized to serve as a relay-type terminal device, the relay access and mobility management function network element sends the authorization request message to the relay policy control function network element.

In this way, when the relay terminal device is not authorized to serve as the relay terminal device, the relay AMF network element does not send the authorization request message to the relay PCF network element, so that the relay PCF network element can be prevented from determining whether the relay terminal device is authorized to use the relay service code. In this way, a resource waste can be wasted.

S1018: The relay PCF network element determines, based on the proximity-based services authorization information of the relay terminal device, whether the relay terminal device is authorized to use the relay service code.

Optionally, the proximity-based services authorization information may be determined by the relay policy control function network element based on the identifier of the relay terminal device and/or the context identifier of the relay terminal device.

In a possible design method, the authorization request message further includes the public land mobile network identifier, and S1018 may include: The relay policy control function network element determines, based on the proximity-based services authorization information, whether the relay terminal device is authorized to use the relay service code and whether the relay terminal device is authorized to relay traffic in a public land mobile network corresponding to the public land mobile network identifier. For a specific implementation, refer to the corresponding descriptions in S702. Details are not described herein again.

Optionally, the authorization request message indicates that the terminal device is the relay terminal device, and the relay PCF network element may determine, based on the proximity-based services authorization information, whether the relay terminal device is authorized to provide, in the PLMN corresponding to the PLMN ID, a connection service corresponding to the relay service code.

In a possible design method, that the relay policy control function network element determines, based on the proximity-based services authorization information, whether the relay terminal device is authorized to use the relay service code and whether the relay terminal device is authorized to relay the traffic in the public land mobile network corresponding to the public land mobile network identifier may include: The relay policy control function network element determines whether the proximity-based services authorization information includes the relay service code and the public land mobile network identifier. If the proximity-based services authorization information includes the relay service code and the public land mobile network identifier, the relay terminal device is authorized to use the relay service code and is authorized to relay the traffic in the public land mobile network corresponding to the public land mobile network identifier; if the proximity-based services authorization information does not include the relay service code, the relay terminal device is not authorized to use the relay service code; or if the proximity-based services authorization information does not include the public land mobile network identifier, the relay terminal device is not authorized to relay the traffic in the public land mobile network corresponding to the public land mobile network identifier. For a specific implementation, refer to the corresponding descriptions in S702. Details are not described herein again.

In some embodiments, the relay policy control function network element may determine, depending on whether the proximity-based services authorization information includes the relay service code and the public land mobile network identifier, whether the relay terminal device is authorized to provide, in the PLMN corresponding to the PLMN ID, the connection service corresponding to the RSC. For a specific implementation, refer to the corresponding descriptions in S702. Details are not described herein again.

In this way, whether the relay terminal device is authorized to serve a remote end in the PLMN corresponding to the PLMN ID and whether the relay terminal device is authorized to provide a relay service corresponding to the RSC can be verified.

It should be noted that, for a specific implementation of S1018, refer to the implementation corresponding to S702 when the terminal device is the relay terminal device and the authorization request message indicates that the terminal device is the relay terminal device. Details are not described herein again.

S 1019: The relay PCF network element sends an authorization response message to the relay AMF network element. Accordingly, the relay AMF network element receives the authorization response message from the relay PCF network element.

Optionally, the authorization response message may indicate being authorized or unauthorized, or the authorization response message may indicate an authorization success or an authorization failure.

Optionally, the authorization response message may indicate whether the relay terminal device is authorized to use the relay service code.

Optionally, that the authorization response message indicates whether the relay terminal device is authorized to use the relay service code may be specifically: indicating whether the relay terminal device is authorized to use the relay service code and whether the relay terminal device is authorized to relay the traffic in the public land mobile network corresponding to the public land mobile network identifier.

For a specific implementation of the authorization response message, refer to the implementation of the authorization response message in the case in which the terminal device is the relay terminal device in S703. Details are not described herein again.

S1020: When the authorization response message indicates that the relay terminal device is successfully authorized, the relay access and mobility management function network element sends an authentication server function network element identifier get request message to a remote unified data management network element. Accordingly, the remote unified data management network element receives the authentication server function network element identifier get request message from the relay access and mobility management function network element.

Optionally, the authentication server function network element identifier get request message may include the proximity-based services key identifier.

For example, that the relay terminal device is successfully authorized may mean that the relay terminal device is authorized to use the relay service code and is authorized to relay the traffic in the public land mobile network corresponding to the public land mobile network identifier.

Optionally, after an authorization check on the relay terminal device succeeds, the relay AMF network element may request a key from the remote AUSF network element, so that it can be ensured that the authorized relay terminal device obtains the corresponding key and establishes a PC5 connection, an unauthorized relay terminal device cannot obtain the corresponding key, and security can be improved.

S1021: The remote UDM network element sends an authentication server function network element identifier get response message to the relay AMF network element. Accordingly, the relay AMF network element receives the authentication server function network element identifier get response message from the remote UDM network element.

For example, the authentication server function network element identifier get response message may include an AUSF instance ID of an AUSF that serves the remote terminal device.

S1022: The relay AMF network element sends a proximity-based services request message to the remote AUSF network element. Accordingly, the remote AUSF network element receives the proximity-based services request message from the relay AMF network element.

Optionally, the proximity-based services request message may include the relay service code. The relay service code is obtained by the remote AMF network element from the remote terminal device.

Optionally, the proximity-based services request message may be referred to as a proximity-based services remote key request message.

Optionally, the proximity-based services request message may further include the P-KID and/or the nonce.

In this way, after the authorization check on the relay terminal device succeeds, the relay AMF network element triggers a remote key derivation process to the remote AUSF network element, so that security can be improved.

S1023: The remote AUSF network element derives a remote key.

For a specific implementation of S1023, refer to S517. Details are not described herein again.

S1024: The remote AUSF network element sends a proximity-based services response message to the relay AMF network element. Accordingly, the relay AMF network element receives the proximity-based services response message from the remote AUSF network element.

For example, the proximity-based services response message may include the key (for example, the remote key K_{R}) and a freshness parameter.

It should be noted that the proximity-based services response message may be referred to as a proximity-based services remote key response message. A name of the proximity-based services response message is not limited in this application.

S1025: The relay AMF network element sends a non-access stratum response message to the relay terminal device. Accordingly, the relay terminal device receives the non-access stratum response message from the relay AMF network element.

When the authorization response message indicates that the relay terminal device fails to be authorized, the non-access stratum response message may indicate a request failure, for example, indicate a key request failure.

For example, that the relay terminal device fails to be authorized may mean that the relay terminal device is not authorized to use the relay service code and/or is not authorized to relay the traffic in the public land mobile network corresponding to the public land mobile network identifier.

For example, when the authorization response message indicates that the relay terminal device is not authorized to use the relay service code and/or is not authorized to relay the traffic in the public land mobile network corresponding to the public land mobile network identifier, S1020 to S1024 may not be performed, and S1025 may be directly performed.

In this way, if the relay terminal device is not authorized to use the relay service code and/or is not authorized to relay the traffic in the public land mobile network corresponding to the public land mobile network identifier, the relay terminal device is notified of the key request failure, so that security can be improved.

When the authorization response message indicates that the relay terminal device is authorized to use the relay service code and is authorized to relay the traffic in the public land mobile network corresponding to the public land mobile network identifier, the non-access stratum response message may indicate a request success, for example, indicate a key request success.

For example, when the authorization response message indicates that the relay terminal device is authorized to use the relay service code, S1020 to S1024 may be performed.

Optionally, the non-access stratum response message may include the remote key and the freshness parameter.

It should be noted that, for specific implementations of S1026 and S1027, refer to S520 and S521. Details are not described herein again.

Based on the method shown in FIG. 10A and FIG. 10B, the remote PCF network element obtains the relay service code from the remote terminal device by interacting with the remote AMF network element, and determines, based on the proximity-based services authorization information of the remote terminal device, whether the remote terminal device is authorized to use the relay service code. The relay PCF network element obtains the relay service code from the relay terminal device by interacting with the relay AMF network element, and determines, based on the proximity-based services authorization information of the relay terminal device, whether the relay terminal device is authorized to use the relay service code, where the relay service code identifies the connection service provided by a relay device for a remote device. In this way, whether the terminal device is authorized to use the relay service identified by the relay service code can be verified, so that security of establishing the relay communication connection is ensured.

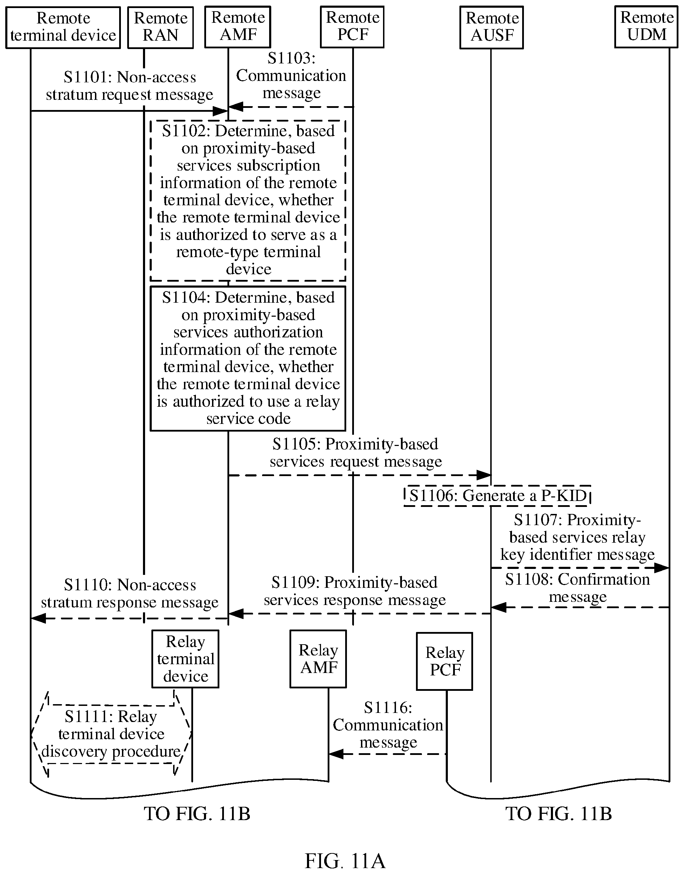

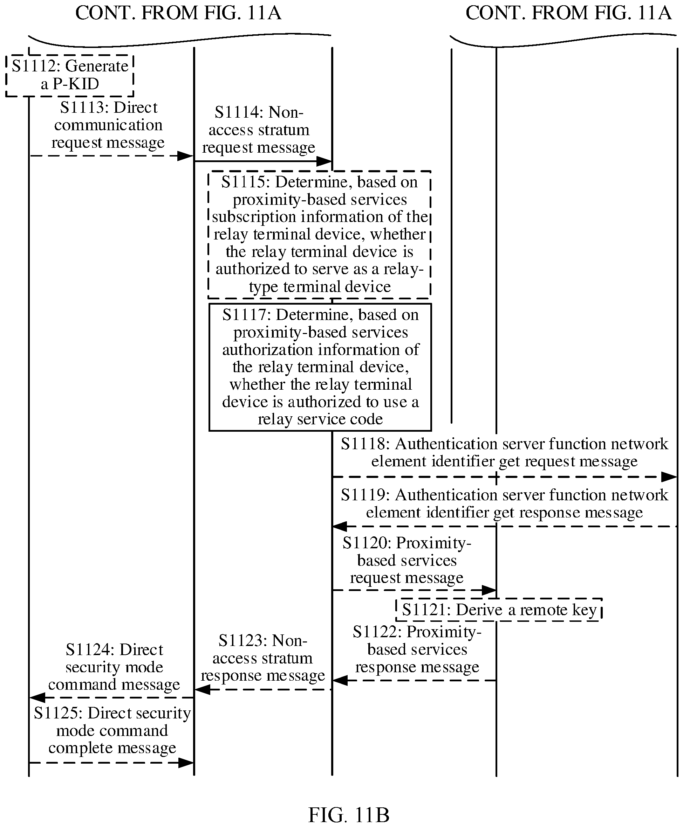

For example, FIG. 11A and FIG. 11B are a schematic flowchart of still another authorization method according to an embodiment of this application. In FIG. 11A and FIG. 11B, the method shown in FIG. 8a is specifically described by using an example in which a remote AMF network element verifies, in a process in which a terminal device triggers a key request, whether a remote terminal device is authorized to use a relay service code and a relay AMF network element verifies, in a process of establishing a relay communication connection, whether a relay terminal device is authorized to use a relay service code. In FIG. 11A and FIG. 11B, descriptions are provided in a case in which the method shown in FIG. 8a is applicable to the scenario shown in FIG. 5. The method shown in FIG. 8a is also applicable to the scenario shown in FIG. 6. Details are not described in this application again.

It should be noted that the method shown in FIG. 11A and FIG. 11B is applicable to a scenario in which a network element that serves the remote terminal device and a network element that serves the relay terminal device are the same or different. A remote PCF network element and a relay PCF network element may be a same PCF network element, and the remote AMF network element and the relay AMF network element may be a same AMF network element.

As shown in FIG. 11A and FIG. 11B, the authorization method includes the following steps.

For specific implementations of S 1101 and S1102, refer to S 1001 and S1002. Details are not described herein again.

S1103: The remote policy control function network element sends a communication message to the remote access and mobility management function network element. Accordingly, the remote access and mobility management function network element receives the communication message from the remote policy control function network element.

Optionally, the communication message may include proximity-based services authorization information.

Optionally, the remote access and mobility management function network element may store the proximity-based services authorization information.

Optionally, the communication message may further include authorization indication information, and the authorization indication information may indicate that the proximity-based services authorization information is proximity-based services authorization information corresponding to the terminal device serving as the remote terminal device.

For example, the proximity-based services authorization information may be sent by the remote PCF network element to the remote AMF network element in a registration process of the remote terminal device or in a process in which the remote terminal device actively requests a policy, may be actively delivered by the remote PCF network element to the remote AMF network element after the remote PCF network element detects a policy update, or may be actively requested by the remote AMF network element. For a specific implementation, refer to S804 and the descriptions shown in FIG. 9a and FIG. 9b. Details are not described herein again.

It should be noted that an execution sequence of S1103 is not limited in this application, and S1103 may be performed at any moment before S1104.

S1104: The remote AMF network element determines, based on the proximity-based services authorization information of the remote terminal device, whether the remote terminal device is authorized to use the relay service code.

Optionally, the proximity-based services authorization information may be obtained by the remote access and mobility management function network element from the remote policy control function network element.

It should be noted that, for a specific implementation of S1104, refer to the implementation corresponding to S802 when the terminal device is the remote terminal device and an authorization request message indicates that the terminal device is the remote terminal device. Details are not described herein again.

In this way, whether the remote terminal device is authorized to use a relay service corresponding to the RSC can be verified.

S1105: When the remote terminal device is authorized to use the relay service code, the remote AMF network element sends a proximity-based services request message to a remote AUSF network element. Accordingly, the remote AUSF network element receives the proximity-based services request message from the remote AMF network element.

Optionally, the proximity-based services request message may include the relay service code. The relay service code is obtained by the remote AMF network element from the remote terminal device.

Optionally, the proximity-based services request message may be referred to as a proximity-based services relay key request message.

In this way, after an authorization check on the remote terminal device succeeds (that is, the remote terminal device is authorized to use the relay service code), the remote AMF network element triggers a P-KID derivation process to the remote AUSF network element, so that it can be ensured that the remote AUSF network element derives a P-KID corresponding to the authorized remote terminal device, and does not derive a P-KID corresponding to an unauthorized remote terminal device, and security can be improved.

For a specific implementation of S1105, refer to S805. Details are not described herein again.

It should be noted that, for specific implementations of S1106 to S1108, refer to the implementations corresponding to S505 to S507. Details are not described herein again.

S1109: The remote AUSF network element sends a proximity-based services response message to the remote AMF network element. Accordingly, the remote AMF network element receives the proximity-based services response message from the remote AUSF network element.

Optionally, the proximity-based services response message may be referred to as a proximity-based services relay key response message. This is not limited in this application.

S1110: The remote AMF network element sends a non-access stratum response message to the remote terminal device. Accordingly, the remote terminal device receives the non-access stratum response message from the remote AMF network element.

When the remote terminal device is not authorized to use the relay service code, the non-access stratum response message may indicate a request failure, for example, indicate a key request failure.

For example, when the remote terminal device is not authorized to use the relay service code, S1105 to S1109 may not be performed, and S1110 may be directly performed.

In this way, if the remote terminal device is not authorized to use the relay service code, the remote terminal device is notified of the key request failure, so that security can be improved.

When the remote terminal device is authorized to use the relay service code, the non-access stratum response message may indicate a request success, for example, indicate a key request success.

For example, when the remote terminal device is authorized to use the relay service code, S1105 to S1109 may be performed.

It should be noted that, for implementations of S1111 to S1113, refer to S510 to S512. Details are not described herein again.

For example, in a relay terminal device discovery procedure, the remote terminal device generates a P-KID, and sends a direct communication request message to the relay terminal device.

S1114: The relay terminal device sends a non-access stratum request message to the relay AMF network element. Accordingly, the relay AMF network element receives the non-access stratum request message from the relay terminal device.

For a specific implementation of S1114, refer to S1015. Details are not described herein again.

S1115: The relay AMF network element determines, based on proximity-based services subscription information of the relay terminal device, whether the relay terminal device is authorized to serve as a relay-type terminal device.

For a specific implementation of S1115, refer to the descriptions corresponding to the case in which the terminal device is the relay terminal device in S704. Details are not described herein again.

It should be noted that S1115 may be an optional step.

S1116: The relay policy control function network element sends a communication message to the relay access and mobility management function network element. Accordingly, the relay access and mobility management function network element receives the communication message from the relay policy control function network element.

Optionally, the communication message may include proximity-based services authorization information.

Optionally, the relay access and mobility management function network element may store the proximity-based services authorization information.

Optionally, the communication message may further include authorization indication information, and the authorization indication information may indicate that the proximity-based services authorization information is proximity-based services authorization information corresponding to the terminal device serving as the relay terminal device.

For example, the proximity-based services authorization information may be sent by the relay PCF network element to the relay AMF network element in a registration process of the relay terminal device or in a process in which the relay terminal device actively requests a policy, may be actively delivered by the relay PCF network element to the relay AMF network element after the relay PCF network element detects a policy update, or may be actively requested by the relay AMF network element. For a specific implementation, refer to S804 and the descriptions shown in FIG. 9a and FIG. 9b. Details are not described herein again.

It should be noted that an execution sequence of S1116 is not limited in this application. For example, S1116 may be performed at any moment before S1117.

S1117: The relay AMF network element determines, based on the proximity-based services authorization information of the relay terminal device, whether the relay terminal device is authorized to use the relay service code.

Optionally, the proximity-based services authorization information may be obtained by the relay access and mobility management function network element from the relay policy control function network element.

In a possible design method, the terminal device is a relay terminal device, and S1117 may include: The relay AMF network element determines, based on the proximity-based services authorization information, whether the relay terminal device is authorized to use the relay service code and whether the relay terminal device is authorized to relay traffic in a public land mobile network corresponding to a public land mobile network identifier. For a specific implementation, refer to the implementation corresponding to S802. Details are not described herein again.

In a possible design method, that the relay AMF network element determines, based on the proximity-based services authorization information, whether the relay terminal device is authorized to use the relay service code and whether the relay terminal device is authorized to relay the traffic in the public land mobile network corresponding to the public land mobile network identifier may include: The relay access and mobility management function network element determines whether the proximity-based services authorization information includes the relay service code and the public land mobile network identifier. If the proximity-based services authorization information includes the relay service code and the public land mobile network identifier, the relay terminal device is authorized to use the relay service code and is authorized to relay the traffic in the public land mobile network corresponding to the public land mobile network identifier; if the proximity-based services authorization information does not include the relay service code, the relay terminal device is not authorized to use the relay service code; or if the proximity-based services authorization information does not include the public land mobile network identifier, the relay terminal device is not authorized to relay the traffic in the public land mobile network corresponding to the public land mobile network identifier. For a specific implementation, refer to the implementation corresponding to S802. Details are not described herein again.

It should be noted that, for a specific implementation of S1117, refer to the implementation corresponding to S802 when the terminal device is the relay terminal device and the authorization request message indicates that the terminal device is the relay terminal device. Details are not described herein again.

In some embodiments, the relay access and mobility management function network element may determine, depending on whether the proximity-based services authorization information includes the relay service code and the public land mobile network identifier, whether the relay terminal device is authorized to provide, in the PLMN corresponding to the PLMN ID, a connection service corresponding to the RSC. For a specific implementation, refer to the corresponding descriptions in S802. Details are not described herein again.

In this way, the relay AMF network element can verify whether the relay terminal device is authorized to serve a remote end in the PLMN corresponding to the PLMN ID and whether the relay terminal device is authorized to provide a relay service corresponding to the RSC.

S1118: When the relay terminal device is successfully authorized, the relay access and mobility management function network element sends an authentication server function network element identifier get request message to a remote unified data management network element. Accordingly, the remote unified data management network element receives the authentication server function network element identifier get request message from the relay access and mobility management function network element.

Optionally, for a specific implementation of the authentication server function network element identifier get request message, refer to S806. Details are not described herein again.

For example, that the relay terminal device is successfully authorized may mean that the relay terminal device is authorized to use the relay service code and is authorized to relay the traffic in the public land mobile network corresponding to the public land mobile network identifier.

Optionally, after an authorization check on the relay terminal device succeeds, the relay AMF network element may request a key from the remote AUSF network element so that it can be ensured that the authorized relay terminal device obtains the corresponding key and establishes a PC5 connection, an unauthorized relay terminal device cannot obtain the corresponding key, and security can be improved.

For implementations of S1119 to S1122, refer to the descriptions corresponding to S1021 to S1024. Details are not described herein again.

S1123: The relay AMF network element sends a non-access stratum response message to the relay terminal device. Accordingly, the relay terminal device receives the non-access stratum response message from the relay AMF network element.

When the relay terminal device fails to be authorized, the non-access stratum response message may indicate a request failure, for example, indicate a key request failure.

For example, that the relay terminal device fails to be authorized may mean that the relay terminal device is not authorized to use the relay service code and/or is not authorized to relay the traffic in the public land mobile network corresponding to the public land mobile network identifier.

For example, when the relay terminal device is not authorized to use the relay service code and/or is not authorized to relay the traffic in the public land mobile network corresponding to the public land mobile network identifier, S1118 to S1122 may not be performed, and S1123 may be directly performed.

In this way, if the relay terminal device is not authorized to use the relay service code and/or is not authorized to relay the traffic in the public land mobile network corresponding to the public land mobile network identifier, the relay terminal device is notified of the key request failure, so that security can be improved.

When the relay terminal device is authorized to use the relay service code and is authorized to relay the traffic in the public land mobile network corresponding to the public land mobile network identifier, the non-access stratum response message may indicate a request success, for example, indicate a key request success.

For example, when an authorization response message indicates that the relay terminal device is authorized to use the relay service code, S1118 to S1122 may be performed.

Optionally, the non-access stratum response message may include a remote key and a freshness parameter.

It should be noted that, for specific implementations of S1124 and S1125, refer to S520 and S521. Details are not described herein again.

Based on the method shown in FIG. 11A and FIG. 11B, the remote AMF network element determines, based on the proximity-based services authorization information of the remote terminal device, whether the remote terminal device is authorized to use the relay service code. The relay AMF network element determines, based on the proximity-based services authorization information of the relay terminal device, whether the relay terminal device is authorized to use the relay service code, where the relay service code identifies the connection service provided by a relay device for a remote device. In this way, whether the terminal device is authorized to use the relay service identified by the relay service code can be verified, so that security of establishing the relay communication connection is ensured.

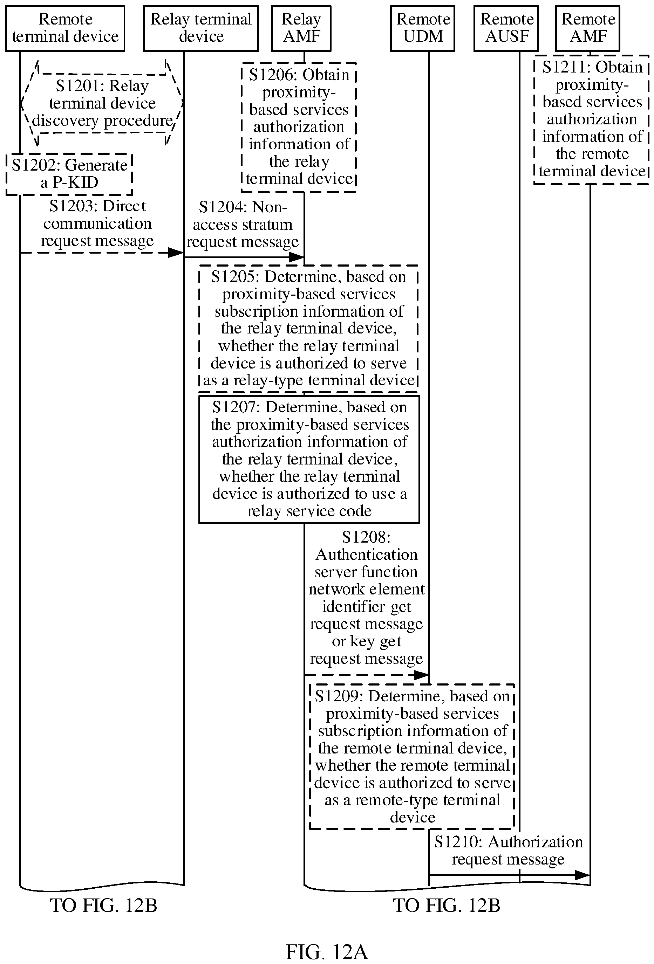

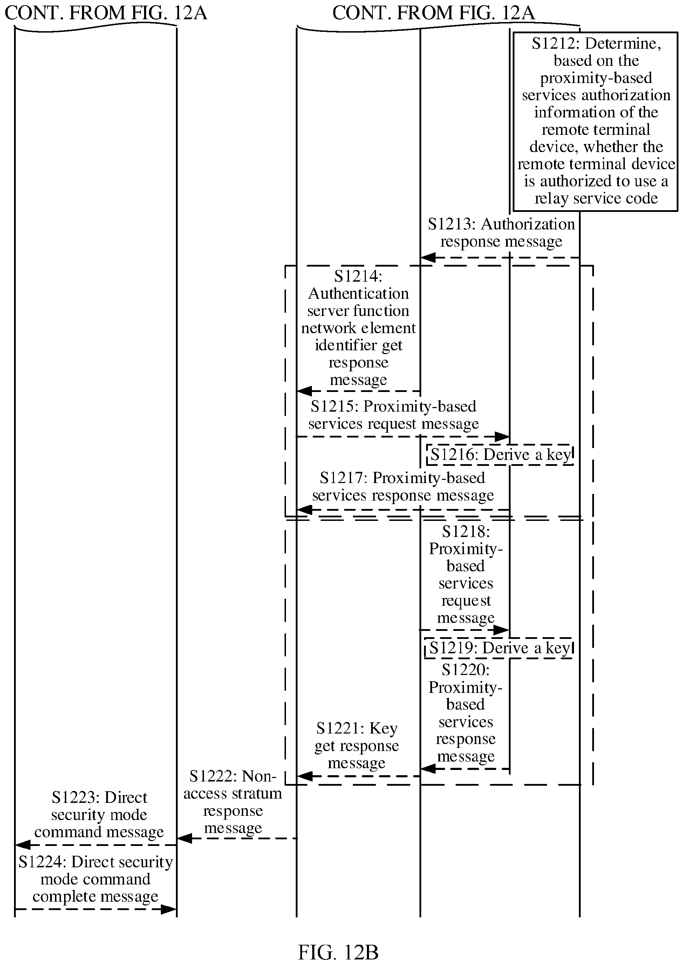

For example, FIG. 12A and FIG. 12B are a schematic flowchart of still another authorization method according to an embodiment of this application. In FIG. 12A and FIG. 12B, the method shown in FIG. 8a is specifically described by using an example in which in a process of establishing a relay communication connection, a remote AMF network element verifies whether a remote terminal device is authorized to use a relay service code and a relay AMF network element verifies whether a relay terminal device is authorized to use a relay service code.

It should be noted that the method shown in FIG. 12A and FIG. 12B is applicable to a scenario in which a network element that serves the remote terminal device and a network element that serves the relay terminal device are the same or different. A remote PCF network element and a relay PCF network element may be a same PCF network element, and the remote AMF network element and the relay AMF network element may be a same AMF network element.

As shown in FIG. 12A and FIG. 12B, the authorization method includes the following steps.

For specific implementations of S1201 to S1203, respectively refer to S510 to S512. Details are not described herein again.

For example, in a relay terminal device discovery procedure, the remote terminal device generates a P-KID, and sends a direct communication request message to the relay terminal device.

For specific implementations of S1204 and S1205, respectively refer to S1114 and S1115. Details are not described herein again.

It should be noted that S1205 may be an optional step.

S1206: The relay access and mobility management function network element obtains proximity-based services authorization information of the relay terminal device.

For example, the proximity-based services authorization information may be sent by the relay PCF network element to the relay AMF network element in a registration process of the relay terminal device or in a process in which the relay terminal device actively requests a policy, may be actively delivered by the relay PCF network element to the relay AMF network element after the relay PCF network element detects a policy update, or may be actively requested by the relay AMF network element. For a specific implementation, refer to S804 and the descriptions shown in FIG. 9a and FIG. 9b. Details are not described herein again.

It should be noted that an execution sequence of S1206 is not limited in this application. For example, S1206 may be performed at any moment before S1207.

S1207: The relay AMF network element determines, based on the proximity-based services authorization information of the relay terminal device, whether the relay terminal device is authorized to use the relay service code.

For a specific implementation of S1207, refer to S1117. Details are not described herein again.

S1208: When the relay terminal device is successfully authorized, the relay access and mobility management function network element sends an authentication server function network element identifier get request message or a key get request message to a remote unified data management network element. Accordingly, the remote unified data management network element receives the authentication server function network element identifier get request message or the key get request message from the relay access and mobility management function network element.

For example, that the relay terminal device is successfully authorized may mean that the relay terminal device is authorized to use the relay service code and is authorized to relay traffic in a public land mobile network corresponding to a public land mobile network identifier.

Optionally, the authentication server function network element identifier get request message may include a proximity-based services key identifier or a subscription concealed identifier. Alternatively, the authentication server function network element identifier get request message may include a subscription concealed identifier and the relay service code.

Optionally, the key get request message may include the proximity-based services key identifier and the relay service code. Alternatively, the key get request message may include the subscription concealed identifier and the relay service code.

For example, the relay AMF network element may send the authentication server function network element identifier get request message or the key get request message (which may also be referred to as a relay key get request message) to the remote UDM network element.

In this way, a corresponding key is obtained and the relay communication connection is established only when an authorization check on a terminal device succeeds (that is, the terminal device is authorized to use the relay service code and is authorized to relay the traffic in the public land mobile network corresponding to the public land mobile network identifier). In this way, security can be improved. S1209: The remote unified data management network element determines, based on proximity-based services subscription information of the remote terminal device, whether the remote terminal device is authorized to serve as a remote-type terminal device.

Optionally, the UDM network element may obtain the proximity-based services subscription information based on the proximity-based services key identifier or a subscription permanent identifier.

It should be noted that S1209 may be an optional step.

S1210: The remote unified data management network element sends an authorization request message to the remote access and mobility management function network element. Accordingly, the remote access and mobility management function network element receives the authorization request message from the remote unified data management network element.

Optionally, the authorization request message is for requesting to verify whether the remote terminal device is authorized to use the relay service code. Optionally, the authorization request message may include the subscription permanent identifier and the relay service code that are of the remote terminal device.

For example, the subscription permanent identifier may be used by the remote access and mobility management function network element to obtain proximity-based services authorization information of the remote terminal device.

Optionally, the subscription permanent identifier may be determined by the remote unified data management network element based on the proximity-based services key identifier or the subscription concealed identifier.

It should be noted that for a specific implementation of S1210, refer to the implementation in which the unified data management network element sends the authorization request message to the access and mobility management function network element in S801. The unified data management network element may be replaced with the remote unified data management network element, and the access and mobility management function network element may be replaced with the remote access and mobility management function network element. Details are not described herein again.

S1211: The remote access and mobility management function network element obtains the proximity-based services authorization information of the remote terminal device.

For example, the proximity-based services authorization information may be sent by the remote PCF network element to the remote AMF network element in a registration process of the remote terminal device or in a process in which the remote terminal device actively requests a policy, may be actively delivered by the remote PCF network element to the remote AMF network element after the remote PCF network element detects a policy update, or may be actively requested by the remote AMF network element. For a specific implementation, refer to S804 and the descriptions shown in FIG. 9a and FIG. 9b. Details are not described herein again.

It should be noted that an execution sequence of S1211 is not limited in this application. For example, S1211 only needs to be performed before S1212.

S1212: The remote AMF network element determines, based on the proximity-based services authorization information of the remote terminal device, whether the remote terminal device is authorized to use the relay service code.

It should be noted that, for a specific implementation of S1212, refer to the descriptions corresponding to S1104. Details are not described herein again.

In this way, whether the remote terminal device is authorized to use a relay service corresponding to the RSC can be verified.

S1213: The remote AMF network element sends an authorization response message to the remote UDM network element. Accordingly, the remote UDM network element receives the authorization response message from the remote AMF network element.

Optionally, the authorization response message may indicate whether the remote terminal device is authorized to use the relay service corresponding to the relay service code.

In some embodiments, when the authorization response message indicates that the remote terminal device is authorized to use the relay service code, after the remote UDM network element receives the authorization response message, the remote AMF network element directly requests the key from a remote AUSF network element. The authorization method provided in this embodiment of this application may include S1214 to S1217. For a specific implementation, refer to FIG. 8b. Details are not described herein again.

Alternatively, when the authorization response message indicates that the remote terminal device is authorized to use the relay service code, after the remote UDM network element receives the authorization response message, the remote UDM network element requests the key from a remote AUSF network element, and provides the key for the remote AMF network element. The authorization method provided in this embodiment of this application may include S1218 to S1221. For a specific implementation, refer to FIG. 8c. Details are not described herein again.

Optionally, if the relay access and mobility management function network element sends the authentication server function network element identifier get request message to the remote unified data management network element in S1208, the remote AMF network element may directly request the key from the remote AUSF network element. The authorization method provided in this embodiment of this application may include S1214 to S1217.

If the authentication server function network element identifier get request message in S1208 includes the proximity-based services key identifier, accordingly, a proximity-based services request message in S1215 includes the proximity-based services key identifier. If the authentication server function network element identifier get request message in S1208 includes the subscription concealed identifier, accordingly, a proximity-based services request message in S1215 includes the subscription permanent identifier.

Optionally, if the relay access and mobility management function network element sends the key get request message to the remote unified data management network element in S1208, the remote UDM network element may request the key from the remote AUSF network element, and provide the key for the remote AMF network element. The authorization method provided in this embodiment of this application may include S1218 to S1221.

If the key get request message in S1208 includes the proximity-based services key identifier, accordingly, a proximity-based services request message in S1218 includes the proximity-based services key identifier. If the key get request message in S1208 includes the subscription concealed identifier, accordingly, the proximity-based services request message in S1218 includes the subscription permanent identifier.

S1222: The relay AMF network element sends a non-access stratum response message to the relay terminal device. Accordingly, the relay terminal device receives the non-access stratum response message from the relay AMF network element.

When the relay terminal device fails to be authorized, the non-access stratum response message may indicate a request failure, for example, indicate a key request failure.

For example, that the relay terminal device fails to be authorized may mean that the relay terminal device is not authorized to use the relay service code and/or is not authorized to relay the traffic in the public land mobile network corresponding to the public land mobile network identifier.

For example, when the relay terminal device is not authorized to use the relay service code and/or is not authorized to relay the traffic in the public land mobile network corresponding to the public land mobile network identifier, S1208 to S1221 may not be performed, and S1222 may be directly performed.

In this way, if the relay terminal device is not authorized to use the relay service code and/or is not authorized to relay the traffic in the public land mobile network corresponding to the public land mobile network identifier, the relay terminal device is notified of the key request failure, so that security can be improved.

When the relay terminal device is authorized to use the relay service code and is authorized to relay the traffic in the public land mobile network corresponding to the public land mobile network identifier, the non-access stratum response message may indicate a request success, for example, indicate a key request success.

For example, when an authorization response message indicates that the relay terminal device is authorized to use the relay service code, S1208 to S1221 may be performed.

Optionally, the non-access stratum response message may include a remote key and a freshness parameter.

It should be noted that, for specific implementations of S1223 and S1224, refer to S520 and S521. Details are not described herein again.

Based on the method shown in FIG. 12A and FIG. 12B, the remote AMF network element determines, based on the proximity-based services authorization information of the remote terminal device, whether the remote terminal device is authorized to use the relay service code. The relay AMF network element determines, based on the proximity-based services authorization information of the relay terminal device, whether the relay terminal device is authorized to use the relay service code, where the relay service code identifies a connection service provided by a relay device for a remote device. In this way, whether the terminal device is authorized to use the relay service identified by the relay service code can be verified, so that security of establishing the relay communication connection is ensured.

In this application, unless otherwise specified, for same or similar parts in embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

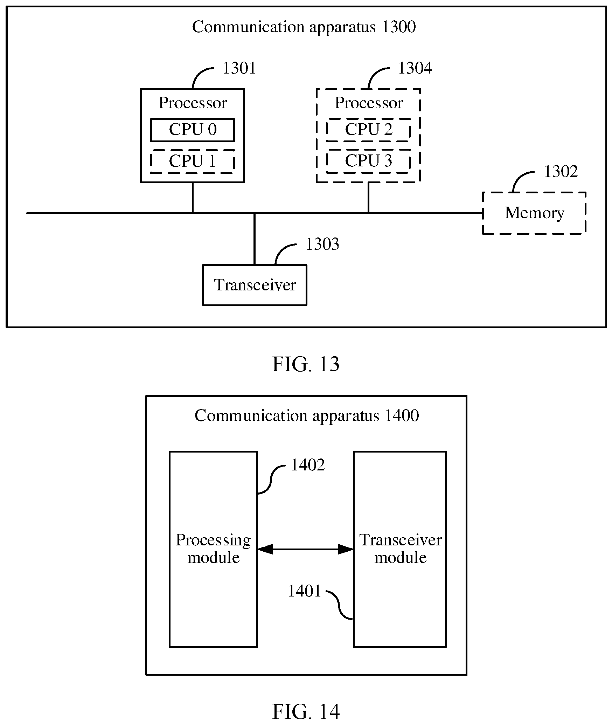

With reference to FIG. 1 to FIG. 12B, the foregoing describes in detail the authorization methods provided in embodiments of this application. With reference to FIG. 13 to FIG. 15, the following describes in detail communication apparatuses provided in embodiments of this application.

FIG. 13 is a diagram of a structure of a communication apparatus that may be configured to perform the authorization methods provided in embodiments of this application. The communication apparatus 1300 may be an access and mobility management function network element, a policy control function network element, or a unified data management network element, or may be a chip or another component having a corresponding function that is used in the access and mobility management function network element, the policy control function network element, or the unified data management network element. As shown in FIG. 13, the communication apparatus 1300 may include a processor 1301. Optionally, the communication apparatus 1300 may further include one or more of a memory 1302 and a transceiver 1303. The processor 1301 and the one or more of the memory 1302 and the transceiver 1303 may be coupled, for example, may be connected through a communication bus, or the processor 1301 may be used independently.

The following specifically describes each component of the communication apparatus 1300 with reference to FIG. 13.

The processor 1301 is a control center of the communication apparatus 1300, and may be one processor or may be a collective term of a plurality of processing elements. For example, the processor 1301 is one or more central processing units (central processing units, CPUs), may be an application specific integrated circuit (application specific integrated circuit, ASIC), or may be one or more integrated circuits configured to implement embodiments of this application, for example, one or more microprocessors (digital signal processors, DSPs) or one or more field programmable gate arrays (field programmable gate arrays, FPGAs).

The processor 1301 may perform various functions of the communication apparatus 1300 by running or executing a software program stored in the memory 1302 and invoking data stored in the memory 1302.

During specific implementation, in an embodiment, the processor 1301 may include one or more CPUs, for example, a CPU 0 and a CPU 1 shown in FIG. 13.

During specific implementation, in an embodiment, the communication apparatus 1300 may alternatively include a plurality of processors, for example, the processor 1301 and a processor 1304 shown in FIG. 13. Each of the processors may be a single-core processor (single-CPU), or may be a multi-core processor (multi-CPU). The processor herein may be one or more communication devices, circuits, and/or processing cores configured to process data (for example, computer program instructions).

Optionally, the memory 1302 may be a read-only memory (read-only memory, ROM) or another type of static storage communication device that can store static information and instructions, or a random access memory (random access memory, RAM) or another type of dynamic storage communication device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage communication device, or any other medium that can be for carrying or storing expected program code in a form of instructions or a data structure and that can be accessed by a computer, but is not limited thereto. The memory 1302 may be integrated with the processor 1301, or may exist independently and is coupled to the processor 1301 through an input/output port (not shown in FIG. 13) of the communication apparatus 1300. This is not specifically limited in this embodiment of this application.

For example, the input port may be configured to implement the receiving function performed by the access and mobility management function network element, the policy control function network element, or the unified data management network element in any one of the foregoing method embodiments, and the output port may be configured to implement the sending function performed by the access and mobility management function network element, the policy control function network element, or the unified data management network element in any one of the foregoing method embodiments.

The memory 1302 may be configured to store a software program for executing the solutions in this application, and the processor 1301 controls the execution. For the specific implementation, refer to the following method embodiments. Details are not described herein again.

Optionally, the transceiver 1303 is configured to communicate with another communication apparatus. In addition, the transceiver 1303 may include a receiver and a transmitter (not separately shown in FIG. 13). The receiver is configured to implement a receiving function, and the transmitter is configured to implement a sending function. The transceiver 1303 may be integrated with the processor 1301, or may exist independently and is coupled to the processor 1301 through the input/output port (not shown in FIG. 13) of the communication apparatus 1300. This is not specifically limited in this embodiment of this application.

It should be noted that, the structure of the communication apparatus 1300 shown in FIG. 13 does not constitute a limitation on the communication apparatus. An actual communication apparatus may include more or fewer components than those shown in the figure, combine some components, or have different component arrangement.

The processor 1301 in the communication apparatus 1300 shown in FIG. 13 may invoke application program code stored in the memory 1302, to instruct the policy control function network element to perform the actions of the policy control function network element in FIG. 5 to FIG. 12B.

The processor 1301 in the communication apparatus 1300 shown in FIG. 13 may invoke application program code stored in the memory 1302, to instruct the access and mobility management function network element to perform the actions of the access and mobility management function network element in FIG. 5 to FIG. 12B.

The processor 1301 in the communication apparatus 1300 shown in FIG. 13 may invoke application program code stored in the memory 1302, to instruct the unified data management network element to perform the actions of the unified data management network element in FIG. 5 to FIG. 12B.

When the communication apparatus is the policy control function network element, the communication apparatus 1300 may perform any one or more possible design manners related to the policy control function network element in the foregoing method embodiments. When the communication apparatus is the access and mobility management function network element, the communication apparatus 1300 may perform any one or more possible design manners related to the access and mobility management function network element in the foregoing method embodiments. When the communication apparatus is the unified data management network element, the communication apparatus 1300 may perform any one or more possible design manners related to the unified data management network element in the foregoing method embodiments.

It should be noted that all related content of the steps in the foregoing method embodiments may be cited in function descriptions of corresponding function modules. Details are not described herein again.

FIG. 14 is a diagram of a structure of another communication apparatus according to an embodiment of this application. For ease of description, FIG. 14 shows only main components of the communication apparatus.

The communication apparatus 1400 includes a transceiver module 1401 and a processing module 1402. The communication apparatus 1400 may be the policy control function network element or the access and mobility management function network element in the foregoing method embodiments. The transceiver module 1401 may also be referred to as a transceiver unit, and is configured to implement the receiving and sending functions performed by the policy control function network element or the access and mobility management function network element in any one of the foregoing method embodiments.

It should be noted that the transceiver module 1401 may include a receiving module and a sending module (not shown in FIG. 14). The receiving module is configured to receive data and/or signaling from another device, and the sending module is configured to send data and/or signaling to the another device. A specific implementation of the transceiver module is not specifically limited in this application. The transceiver module may consist of a transceiver circuit, a transceiver, or a communication interface.

The processing module 1402 may be configured to implement the processing function performed by the policy control function network element or the access and mobility management function network element in any one of the foregoing method embodiments. The processing module 1402 may be a processor.

In this embodiment, the communication apparatus 1400 is presented in a form of function modules obtained through division in an integrated manner. The "module" herein may be a specified ASIC, a circuit, a processor and a memory that execute one or more software or firmware programs, an integrated logic circuit, and/or another device that can provide the foregoing functions. In a simple embodiment, a person skilled in the art may figure out that the communication apparatus 1400 may be in the form of the communication apparatus 1300 shown in FIG. 13.

For example, the processor 1301 in the communication apparatus 1300 shown in FIG. 13 may invoke computer-executable instructions stored in the memory 1302, so that the authorization methods in the foregoing method embodiments are performed.

Specifically, functions/implementation processes of the transceiver module 1401 and the processing module 1402 in FIG. 14 may be implemented by the processor 1301 in the communication apparatus 1300 shown in FIG. 13 by invoking the computer-executable instructions stored in the memory 1302. Alternatively, a function/an implementation process of the processing module 1402 in FIG. 14 may be implemented by the processor 1301 in the communication apparatus 1300 shown in FIG. 13 by invoking the computer-executable instructions stored in the memory 1302, and a function/an implementation process of the transceiver module 1401 in FIG. 14 may be implemented by using the transceiver 1303 in the communication apparatus 1300 shown in FIG. 13.

The communication apparatus 1400 provided in this embodiment may perform the foregoing authorization methods. Therefore, for technical effects that can be obtained by the communication apparatus 1400, refer to the foregoing method embodiments. Details are not described herein again.

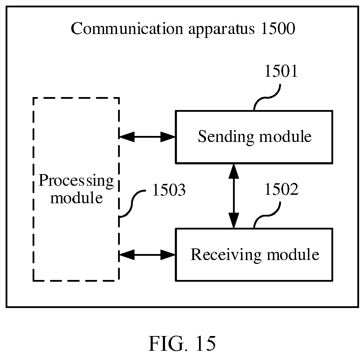

FIG. 15 is a diagram of a structure of still another communication apparatus according to an embodiment of this application. For ease of description, FIG. 15 shows only main components of the communication apparatus.

The communication apparatus 1500 includes a sending module 1501 and a receiving module 1502. The communication apparatus 1500 may be the access and mobility management function network element, the policy control function network element, or the unified data management network element in the foregoing method embodiments. The sending module 1501 may also be referred to as a sending unit, and is configured to implement a sending function performed by the access and mobility management function network element, the policy control function network element, or the unified data management network element in any one of the foregoing method embodiments.

It should be noted that the receiving module 1502 and the sending module 1501 may be separately disposed, or may be integrated into one module, namely, a transceiver module. Specific implementations of the receiving module 1502 and the sending module 1501 are not specifically limited in this application. The transceiver module may consist of a transceiver circuit, a transceiver, or a communication interface.

Optionally, the communication apparatus 1500 may further include a processing module 1503. The processing module 1503 may be configured to implement the processing function performed by the access and mobility management function network element, the policy control function network element, or the unified data management network element in any one of the foregoing method embodiments. The processing module 1503 may be a processor. In this embodiment, the communication apparatus 1500 is presented in a form of function modules obtained through division in an integrated manner. The "module" herein may be a specified ASIC, a circuit, a processor and a memory that execute one or more software or firmware programs, an integrated logic circuit, and/or another device that can provide the foregoing functions. In a simple embodiment, a person skilled in the art may figure out that the communication apparatus 1500 may be in the form of the communication apparatus 1300 shown in FIG. 13.

For example, the processor 1301 in the communication apparatus 1300 shown in FIG. 13 may invoke computer-executable instructions stored in the memory 1302, so that the authorization methods in the foregoing method embodiments are performed.

Specifically, functions/implementation processes of the receiving module 1502, the sending module 1501, and the processing module 1503 in FIG. 15 may be implemented by the processor 1301 in the communication apparatus 1300 shown in FIG. 13 by invoking the computer-executable instructions stored in the memory 1302. Alternatively, a function/an implementation process of the processing module 1503 in FIG. 15 may be implemented by the processor 1301 in the communication apparatus 1300 shown in FIG. 13 by invoking the computer-executable instructions stored in the memory 1302, and functions/implementation processes of the receiving module 1502 and the sending module 1501 in FIG. 15 may be implemented by using the transceiver 1303 in the communication apparatus 1300 shown in FIG. 13. The communication apparatus 1500 provided in this embodiment may perform the foregoing authorization methods. Therefore, for technical effects that can be obtained by the communication apparatus 1500, refer to the foregoing method embodiments. Details are not described herein again.

In a possible design solution, the communication apparatus 1400 shown in FIG. 14 is applicable to the communication system shown in FIG. 1, and performs the functions of the policy control function network element in the authorization methods shown in FIG. 7, FIG. 10A, and FIG. 10B.

The transceiver module 1401 is configured to receive an authorization request message from an access and mobility management function network element, where the authorization request message includes a relay service code from a terminal device, the authorization request message is for requesting to verify whether the terminal device is authorized to use the relay service code, and the relay service code identifies a connection service provided by a relay device for a remote device.

The processing module 1402 is configured to determine, based on proximity-based services authorization information of the terminal device, whether the terminal device is authorized to use the relay service code, where the proximity-based services authorization information indicates a relay service with which the terminal device is authorized.

It should be noted that all related content of the steps in the foregoing method embodiments may be cited in function descriptions of corresponding function modules. Details are not described herein again.

Optionally, the communication apparatus 1400 may further include a storage module (not shown in FIG. 14). The storage module stores a program or instructions. When the processing module 1402 executes the program or the instructions, the communication apparatus 1400 is enabled to perform the functions of the policy control function network element in the authorization methods shown in FIG. 7, FIG. 10A, and FIG. 10B.

It should be noted that the communication apparatus 1400 may be the policy control function network element, or may be a chip (system) or another component or assembly that may be disposed in the policy control function network element. This is not limited in this application.

In addition, for technical effects of the communication apparatus 1400, refer to the technical effects of the authorization methods shown in FIG. 7, FIG. 10A, and FIG. 10B. Details are not described herein again.

In a possible design solution, the communication apparatus 1500 shown in FIG. 15 is applicable to the communication system shown in FIG. 1, and performs the functions of the access and mobility management function network element in the authorization methods shown in FIG. 7, FIG. 10A, and FIG. 10B.

The receiving module 1502 is configured to receive a non-access stratum request message from a terminal device, where the non-access stratum request message includes a relay service code, and the relay service code identifies a connection service provided by a relay device for a remote device.

The sending module 1501 is configured to send an authorization request message to a policy control function network element in response to the non-access stratum request message, where the authorization request message includes the relay service code, and the authorization request message is for requesting to verify whether the terminal device is authorized to use the relay service code.

The receiving module 1502 is further configured to receive an authorization response message from the policy control function network element, where the authorization response message indicates whether the terminal device is authorized to use the relay service code.

In a possible design manner, the processing module 1503 is configured to determine, based on proximity-based services subscription information of the terminal device, whether the terminal device is authorized to serve as a remote terminal device or a relay terminal device.

It should be noted that all related content of the steps in the foregoing method embodiments may be cited in function descriptions of corresponding function modules. Details are not described herein again.

Optionally, the communication apparatus 1500 may further include a storage module (not shown in FIG. 15). The storage module stores a program or instructions. When the processing module 1503 executes the program or the instructions, the communication apparatus 1500 is enabled to perform the functions of the access and mobility management function network element in the authorization methods shown in FIG. 7, FIG. 10A, and FIG. 10B.

It should be noted that the communication apparatus 1500 may be the access and mobility management function network element, or may be a chip (system) or another component or assembly that may be disposed in the access and mobility management function network element. This is not limited in this application.

In addition, for technical effects of the communication apparatus 1500, refer to the technical effects of the authorization methods shown in FIG. 7, FIG. 10A, and FIG. 10B. Details are not described herein again.

In another possible design solution, the communication apparatus 1400 shown in FIG. 14 is applicable to the communication system shown in FIG. 1, and performs the functions of the access and mobility management function network element in the authorization methods shown in FIG. 8a to FIG. 9b, FIG. 11A, FIG. 11B, FIG. 12A, and FIG. 12B.

The transceiver module 1401 is configured to obtain a relay service code of a terminal device, where the relay service code identifies a connection service provided by a relay device for a remote device.

The processing module 1402 is configured to determine, based on proximity-based services authorization information of the terminal device, whether the terminal device is authorized to use the relay service code, where the proximity-based services authorization information indicates a relay service with which the terminal device is authorized.

It should be noted that all related content of the steps in the foregoing method embodiments may be cited in function descriptions of corresponding function modules. Details are not described herein again.

Optionally, the communication apparatus 1400 may further include a storage module (not shown in FIG. 14). The storage module stores a program or instructions. When the processing module 1402 executes the program or the instructions, the communication apparatus 1400 is enabled to perform the functions of the access and mobility management function network element in the authorization methods shown in FIG. 8a to FIG. 9b, FIG. 11A, FIG. 11B, FIG. 12A, and FIG. 12B.

It should be noted that the communication apparatus 1400 may be the access and mobility management function network element, or may be a chip (system) or another component or assembly that may be disposed in the access and mobility management function network element. This is not limited in this application.

In addition, for technical effects of the communication apparatus 1400, refer to the technical effects of the authorization methods shown in FIG. 8a to FIG. 9b, FIG. 11A, FIG. 11B, FIG. 12A, and FIG. 12B. Details are not described herein again.

In another possible design solution, the communication apparatus 1500 shown in FIG. 15 is applicable to the communication system shown in FIG. 1, and performs the functions of the unified data management network element in the authorization methods shown in FIG. 8a to FIG. 9b, FIG. 11A, FIG. 11B, FIG. 12A, and FIG. 12B.

The receiving module 1502 is configured to receive an authentication server function network element identifier get request message from an access and mobility management function network element, where the authentication server function network element identifier get request message includes a proximity-based services key identifier and a relay service code, or the authentication server function network element identifier get request message includes a subscription concealed identifier and a relay service code; and the relay service code identifies a connection service provided by a relay device for a remote device.

The sending module 1501 is configured to send an authorization request message to an access and mobility management function network element determined based on the proximity-based services key identifier or the subscription concealed identifier, where the authorization request message includes the relay service code, and the authorization request message is for requesting to verify whether a terminal device is authorized to use the relay service code.

The receiving module 1502 is further configured to receive an authorization response message from the access and mobility management function network element determined based on the proximity-based services key identifier or the subscription concealed identifier, where the authorization response message indicates whether the terminal device is authorized to use the relay service code.

In a possible design manner, the processing module 1503 is configured to determine, based on proximity-based services subscription information of the terminal device, whether the terminal device is authorized to serve as a remote terminal device.

It should be noted that all related content of the steps in the foregoing method embodiments may be cited in function descriptions of corresponding function modules. Details are not described herein again.

Optionally, the communication apparatus 1500 may further include a storage module (not shown in FIG. 15). The storage module stores a program or instructions. When the processing module 1503 executes the program or the instructions, the communication apparatus 1500 is enabled to perform the functions of the unified data management network element in the authorization methods shown in FIG. 8a to FIG. 9b, FIG. 11A, FIG. 11B, FIG. 12A, and FIG. 12B.

It should be noted that the communication apparatus 1500 may be the unified data management network element, or may be a chip (system) or another component or assembly that may be disposed in the unified data management network element. This is not limited in this application.

In addition, for technical effects of the communication apparatus 1500, refer to the technical effects of the authorization methods shown in FIG. 8a to FIG. 9b, FIG. 11A, FIG. 11B, FIG. 12A, and FIG. 12B. Details are not described herein again.

In a possible design solution, the communication apparatus 1500 shown in FIG. 15 is applicable to the communication system shown in FIG. 1, and performs the functions of the policy control function network element in the authorization methods shown in FIG. 8a to FIG. 9b, FIG. 11A, FIG. 11B, FIG. 12A, and FIG. 12B.

The receiving module 1502 is configured to receive a policy control create request message or a policy control update request message from an access and mobility management function network element, where the policy control create request message includes a subscription permanent identifier of a terminal device and a policy container of the terminal device, the policy control update request message includes the policy container of the terminal device, and the policy container of the terminal device includes one or more of the following: a policy section identifier, an operating system identifier, an indication indicating that the terminal device supports an access network discovery and selection policy, and an indication of a proximity-based services policy provision request.

The sending module 1501 is configured to send a policy control create response message or a policy control update response message to the access and mobility management function network element, where the policy control create response message includes a policy control request trigger parameter.

The sending module 1501 is configured to send a communication message to the access and mobility management function network element, where the communication message includes proximity-based services authorization information of the terminal device and the policy container of the terminal device, and the proximity-based services authorization information indicates a relay service with which the terminal device is authorized.

It should be noted that all related content of the steps in the foregoing method embodiments may be cited in function descriptions of corresponding function modules. Details are not described herein again.

Optionally, the communication apparatus 1500 may further include a processing module 1503 and a storage module (not shown in FIG. 15). The storage module stores a program or instructions. When the processing module 1503 executes the program or the instructions, the communication apparatus 1500 is enabled to perform the functions of the policy control function network element in the authorization methods shown in FIG. 8a to FIG. 9b, FIG. 11A, FIG. 11B, FIG. 12A, and FIG. 12B.

It should be noted that the communication apparatus 1500 may be the policy control function network element, or may be a chip (system) or another component or assembly that may be disposed in the policy control function network element. This is not limited in this application.

In addition, for technical effects of the communication apparatus 1500, refer to the technical effects of the authorization methods shown in FIG. 8a to FIG. 9b, FIG. 11A, FIG. 11B, FIG. 12A, and FIG. 12B. Details are not described herein again.

In another possible design solution, the communication apparatus 1400 shown in FIG. 14 is applicable to the communication system shown in FIG. 1, and performs the functions of the policy control function network element in the authorization methods shown in FIG. 8a to FIG. 9b, FIG. 11A, FIG. 11B, FIG. 12A, and FIG. 12B.

The processing module 1402 is configured to determine that proximity-based services policy information of a terminal device is updated.

The transceiver module 1401 is configured to send a communication message to an access and mobility management function network element, where the communication message includes proximity-based services authorization information and a policy container that are of the terminal device, the proximity-based services authorization information indicates a relay service with which the terminal device is authorized, the policy container may include proximity-based services policy information, and the proximity-based services policy information is used by the terminal device to obtain a proximity-based services communication service.

It should be noted that all related content of the steps in the foregoing method embodiments may be cited in function descriptions of corresponding function modules. Details are not described herein again.

Optionally, the communication apparatus 1400 may further include a storage module (not shown in FIG. 14). The storage module stores a program or instructions. When the processing module 1402 executes the program or the instructions, the communication apparatus 1400 is enabled to perform the functions of the policy control function network element in the authorization methods shown in FIG. 8a to FIG. 9b, FIG. 11A, FIG. 11B, FIG. 12A, and FIG. 12B.

It should be noted that the communication apparatus 1400 may be the policy control function network element, or may be a chip (system) or another component or assembly that may be disposed in the policy control function network element. This is not limited in this application.

In addition, for technical effects of the communication apparatus 1400, refer to the technical effects of the authorization methods shown in FIG. 8a to FIG. 9b, FIG. 11A, FIG. 11B, FIG. 12A, and FIG. 12B. Details are not described herein again.

In a possible design solution, the communication apparatus 1500 shown in FIG. 15 is applicable to the communication system shown in FIG. 1, and performs the functions of the policy control function network element in the authorization methods shown in FIG. 8a to FIG. 9b, FIG. 11A, FIG. 11B, FIG. 12A, and FIG. 12B.

The receiving module 1502 is configured to receive an authorization information request message from an access and mobility management function network element, where the authorization information request message is for requesting proximity-based services authorization information of a terminal device.

The sending module 1501 is configured to send a communication message to the access and mobility management function network element, where the communication message includes the proximity-based services authorization information of the terminal device, the proximity-based services authorization information indicates a relay service with which the terminal device is authorized, and proximity-based services policy information is used by the terminal device to obtain a proximity-based services communication service.

It should be noted that all related content of the steps in the foregoing method embodiments may be cited in function descriptions of corresponding function modules. Details are not described herein again.

Optionally, the communication apparatus 1500 may further include a processing module 1503 and a storage module (not shown in FIG. 15). The storage module stores a program or instructions. When the processing module 1503 executes the program or the instructions, the communication apparatus 1500 is enabled to perform the functions of the policy control function network element in the authorization methods shown in FIG. 8a to FIG. 9b, FIG. 11A, FIG. 11B, FIG. 12A, and FIG. 12B.

It should be noted that the communication apparatus 1500 may be the policy control function network element, or may be a chip (system) or another component or assembly that may be disposed in the policy control function network element. This is not limited in this application.

In addition, for technical effects of the communication apparatus 1500, refer to the technical effects of the authorization methods shown in FIG. 8a to FIG. 9b, FIG. 11A, FIG. 11B, FIG. 12A, and FIG. 12B. Details are not described herein again.

An embodiment of this application provides a communication system. The communication system includes an access and mobility management function network element and a policy control function network element. Alternatively, the communication system may include an access and mobility management function network element and a unified data management network element, and may further include a policy control function network element.

The access and mobility management function network element is configured to perform the actions of the access and mobility management function network element in the foregoing method embodiments. For a specific execution method and process, refer to the foregoing method embodiments. Details are not described herein again.

The policy control function network element is configured to perform the actions of the policy control function network element in the foregoing method embodiments. For a specific execution method and process, refer to the foregoing method embodiments. Details are not described herein again.

The unified data management network element is configured to perform the actions of the unified data management network element in the foregoing method embodiments. For a specific execution method and process, refer to the foregoing method embodiments. Details are not described herein again.

An embodiment of this application provides a chip system. The chip system includes a logic circuit and an input/output port. The logic circuit may be configured to implement the processing function in the authorization methods provided in embodiments of this application, and the input/output port may be configured to implement the receiving and sending functions in the authorization methods provided in embodiments of this application.

For example, the input port may be configured to implement the receiving function in the authorization methods provided in embodiments of this application, and the output port may be configured to implement the sending function in the authorization methods provided in embodiments of this application.

For example, the processor in the communication apparatus 1300 may be configured to perform, for example, but not limited to, baseband-related processing, and the transceiver in the communication apparatus 1300 may be configured to perform, for example, but not limited to, radio frequency receiving and sending. The foregoing devices may be separately disposed on chips independent of each other, or at least some or all of the devices may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, more and more devices may be integrated on a same chip. For example, the digital baseband processor may be integrated on a same chip with a plurality of application processors (for example, but not limited to a geometric processor and a multimedia processor). Such a chip may be referred to as a system-on-chip (system-on-chip). Whether the devices are separately disposed on different chips or integrated and disposed on one or more chips usually depends on a specific requirement of a product design. Specific implementation forms of the devices are not limited in embodiments of the present invention.

In a possible design, the chip system further includes a memory, and the memory is configured to store program instructions and data for implementing the functions in the authorization methods provided in embodiments of this application.

The chip system may consist of a chip, or may include the chip and another discrete device.

An embodiment of this application provides a computer-readable storage medium. The computer-readable storage medium includes a computer program or instructions. When the computer program or the instructions are run on a computer, the authorization methods provided in embodiments of this application are enabled to be performed.

An embodiment of this application provides a computer program product. The computer program product includes a computer program or instructions. When the computer program or the instructions are run on a computer, the authorization methods provided in embodiments of this application are enabled to be performed.

It should be understood that the processor in embodiments of this application may be a central processing unit (central processing unit, CPU). The processor may alternatively be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between associated objects, but may also indicate an "and/or" relationship. For details, refer to the context for understanding.

In this application, "at least one" means one or more, and "a plurality of" means two or more. "At least one of the following" or a similar expression thereof refers to any combination of these items, including a singular item or any combination of plural items. For example, at least one of a, b, or c may indicate: a, b, c, a-b, a-c, b-c, or a-b-c, where a, b, and c may be singular or plural.

It should be understood that, in various embodiments of this application, sequence numbers of the foregoing processes do not mean an execution sequence. The execution sequence of the processes should be determined based on functions and internal logic of the processes, and should not constitute any limitation on an implementation process of embodiments of this application.

A person of ordinary skill in the art may be aware that, with reference to the units and algorithm steps in the examples described in embodiments disclosed in this specification, embodiments can be implemented by electronic hardware or a combination of computer software and the electronic hardware. Whether the functions are performed by hardware or software depends on particular applications and design constraint conditions of the technical solutions. A person skilled in the art may use different methods to implement the functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions in this application essentially, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps in the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. An authorization method, comprising:
receiving an authorization request message from an access and mobility management function network element, wherein the authorization request message comprises a relay service code from a terminal device, the authorization request message is for requesting to verify whether the terminal device is authorized to use the relay service code, and the relay service code identifies a connection service provided by a relay device for a remote device; and
determining, based on proximity-based services authorization information of the terminal device, whether the terminal device is authorized to use the relay service code, wherein the proximity-based services authorization information indicates a relay service with which the terminal device is authorized.

2. The authorization method according to claim 1, wherein the authorization request message further comprises a public land mobile network identifier, the authorization request message indicates that the terminal device is a relay terminal device, and the determining, based on proximity-based services authorization information of the terminal device, whether the terminal device is authorized to use the relay service code comprises:
determining, based on the proximity-based services authorization information, whether the terminal device is authorized to use the relay service code and whether the terminal device is authorized to relay traffic in a public land mobile network corresponding to the public land mobile network identifier.

3. The authorization method according to claim 2, wherein the determining, based on the proximity-based services authorization information, whether the terminal device is authorized to use the relay service code and whether the terminal device is authorized to relay traffic in a public land mobile network corresponding to the public land mobile network identifier comprises:
determining whether the proximity-based services authorization information comprises the relay service code and the public land mobile network identifier, wherein if the proximity-based services authorization information comprises the relay service code and the public land mobile network identifier, the terminal device is authorized to use the relay service code and is authorized to relay the traffic in the public land mobile network corresponding to the public land mobile network identifier; if the proximity-based services authorization information does not comprise the relay service code, the terminal device is not authorized to use the relay service code; or if the proximity-based services authorization information does not comprise the public land mobile network identifier, the terminal device is not authorized to relay the traffic in the public land mobile network corresponding to the public land mobile network identifier.

4. The authorization method according to claim 1, wherein the authorization request message indicates that the terminal device is a remote terminal device, and the determining, based on proximity-based services authorization information of the terminal device, whether the terminal device is authorized to use the relay service code comprises:
determining whether the proximity-based services authorization information comprises the relay service code, wherein if the proximity-based services authorization information comprises the relay service code, the terminal device serving as the remote terminal device is authorized to use the relay service code; or if the proximity-based services authorization information does not comprise the relay service code, the terminal device serving as the remote terminal device is not authorized to use the relay service code.

5. The authorization method according to any one of claims 1 to 4, wherein the method further comprises:
sending an authorization response message to the access and mobility management function network element, wherein the authorization response message indicates whether the terminal device is authorized to use the relay service code.

6. The authorization method according to any one of claims 1 to 5, wherein the authorization request message further comprises one or more of the following: terminal indication information, an identifier of the terminal device, and a context identifier of the terminal device, and the terminal indication information indicates that the terminal device is the remote terminal device or the relay terminal device.

7. The authorization method according to any one of claims 1 to 6, wherein the proximity-based services authorization information is determined based on the identifier of the terminal device and/or the context identifier of the terminal device.

8. An authorization method, comprising:
receiving a non-access stratum request message from a terminal device, wherein the non-access stratum request message comprises a relay service code, and the relay service code identifies a connection service provided by a relay device for a remote device;
sending an authorization request message to a policy control function network element in response to the non-access stratum request message, wherein the authorization request message comprises the relay service code, and the authorization request message is for requesting to verify whether the terminal device is authorized to use the relay service code; and
receiving an authorization response message from the policy control function network element, wherein the authorization response message indicates whether the terminal device is authorized to use the relay service code.

9. The authorization method according to claim 8, wherein the authorization request message further comprises a public land mobile network identifier.

10. The authorization method according to claim 9, wherein that the authorization response message indicates whether the terminal device is authorized to use the relay service code is specifically: indicating whether the terminal device is authorized to use the relay service code and whether the terminal device is authorized to relay traffic in a public land mobile network corresponding to the public land mobile network identifier.

11. The authorization method according to claim 10, wherein the non-access stratum request message further comprises a proximity-based services key identifier; and when the authorization response message indicates that the terminal device is authorized to use the relay service code and is authorized to relay the traffic in the public land mobile network corresponding to the public land mobile network identifier, the method further comprises:
sending an authentication server function network element identifier get request message to a unified data management network element, wherein the authentication server function network element identifier get request message comprises the proximity-based services key identifier.

12. The authorization method according to claim 8, wherein when the authorization response message indicates that the terminal device is authorized to use the relay service code, the method further comprises:
sending a proximity-based services request message to an authentication server function network element, wherein the proximity-based services request message comprises the relay service code.

13. The authorization method according to claim 9 or 10, wherein when the authorization response message indicates that the terminal device is not authorized to use the relay service code and/or is not authorized to relay the traffic in the public land mobile network corresponding to the public land mobile network identifier, the method further comprises:
sending a non-access stratum response message to the terminal device, wherein the non-access stratum response message indicates a request failure.

14. The authorization method according to any one of claims 8 to 13, wherein when the terminal device is a relay terminal device, the method further comprises:
determining, based on proximity-based services subscription information of the terminal device, whether the terminal device is authorized to serve as the relay terminal device.

15. The authorization method according to any one of claims 8 to 13, wherein when the terminal device is a remote terminal device, the method further comprises:
determining, based on proximity-based services subscription information of the terminal device, whether the terminal device is authorized to serve as the remote terminal device.

16. The authorization method according to claim 14 or 15, wherein the method further comprises:
determining, based on the non-access stratum request message, whether the terminal device is the relay terminal device or the remote terminal device.

17. The authorization method according to any one of claims 8 to 16, wherein the authorization request message further comprises one or more of the following: terminal indication information, an identifier of the terminal device, and a context identifier of the terminal device, and the terminal indication information indicates that the terminal device is the remote terminal device or the relay terminal device.

18. An authorization method, comprising:
obtaining a relay service code of a terminal device, wherein the relay service code identifies a connection service provided by a relay device for a remote device; and
determining, based on proximity-based services authorization information of the terminal device, whether the terminal device is authorized to use the relay service code, wherein the proximity-based services authorization information indicates a relay service with which the terminal device is authorized.

19. The authorization method according to claim 18, wherein the terminal device is a remote terminal device, and the determining, based on proximity-based services authorization information of the terminal device, whether the terminal device is authorized to use the relay service code comprises:
determining whether the proximity-based services authorization information comprises the relay service code, wherein if the proximity-based services authorization information comprises the relay service code, the terminal device serving as the remote terminal device is authorized to use the relay service code; or if the proximity-based services authorization information does not comprise the relay service code, the terminal device serving as the remote terminal device is not authorized to use the relay service code.

20. The authorization method according to claim 19, wherein the method further comprises:
when the terminal device serving as the remote terminal device is authorized to use the relay service code, sending a proximity-based services request message to an authentication server function network element, wherein the proximity-based services request message comprises the relay service code.

21. The authorization method according to claim 18, wherein the terminal device serves as a relay terminal device, and the determining, based on proximity-based services authorization information of the terminal device, whether the terminal device is authorized to use the relay service code comprises:
determining, based on the proximity-based services authorization information, whether the terminal device is authorized to use the relay service code and whether the terminal device is authorized to relay traffic in a public land mobile network corresponding to a public land mobile network identifier, wherein the public land mobile network identifier is an identifier of a network served by an access and mobility management function network element.

22. The authorization method according to claim 21, wherein the determining, based on the proximity-based services authorization information, whether the terminal device is authorized to use the relay service code and whether the terminal device is authorized to relay traffic in a public land mobile network corresponding to a public land mobile network identifier comprises:
determining whether the proximity-based services authorization information comprises the relay service code and the public land mobile network identifier, wherein if the proximity-based services authorization information comprises the relay service code and the public land mobile network identifier, the terminal device is authorized to use the relay service code and is authorized to relay the traffic in the public land mobile network corresponding to the public land mobile network identifier; if the proximity-based services authorization information does not comprise the relay service code, the terminal device is not authorized to use the relay service code; or if the proximity-based services authorization information does not comprise the public land mobile network identifier, the terminal device is not authorized to relay the traffic in the public land mobile network corresponding to the public land mobile network identifier.

23. The authorization method according to claim 21 or 22, wherein the method further comprises:
when the terminal device is authorized to use the relay service code and is authorized to relay the traffic in the public land mobile network corresponding to the public land mobile network identifier, sending an authentication server function network element identifier get request message or a key get request message to a unified data management network element, wherein the authentication server function network element identifier get request message comprises a proximity-based services key identifier or a subscription concealed identifier, and the key get request message comprises the proximity-based services key identifier or the subscription concealed identifier.

24. The authorization method according to claim 21 or 22, wherein the method further comprises:
when the terminal device is not authorized to use the relay service code and/or is not authorized to relay the traffic in the public land mobile network corresponding to the public land mobile network identifier, sending a non-access stratum response message to the terminal device, wherein the non-access stratum response message indicates a request failure.

25. The authorization method according to any one of claims 18 to 24, wherein the obtaining a relay service code of a terminal device comprises:
receiving a non-access stratum request message from the terminal device, wherein the non-access stratum request message comprises the relay service code.

26. The authorization method according to any one of claims 18 to 24, wherein the obtaining a relay service code of a terminal device comprises:
receiving an authorization request message from the unified data management network element, wherein the authorization request message comprises the relay service code, and the authorization request message is for requesting to verify whether the terminal device is authorized to use the relay service code.

27. The authorization method according to any one of claims 18 to 26, wherein the method further comprises:
determining, based on proximity-based services subscription information of the terminal device, whether the terminal device is authorized to serve as the relay terminal device.

28. The authorization method according to claim 27, wherein the determining, based on proximity-based services authorization information of the terminal device, whether the terminal device is authorized to use the relay service code comprises:
when the terminal device is authorized to serve as the remote terminal device or the relay terminal device, determining, based on the proximity-based services authorization information of the terminal device, whether the terminal device is authorized to use the relay service code.

29. The authorization method according to any one of claims 18 to 28, wherein the method further comprises:
sending an authorization response message to the unified data management network element, wherein the authorization response message indicates whether the terminal device is authorized to use the relay service code.

30. The authorization method according to any one of claims 18 to 29, wherein the method further comprises:
receiving a communication message from a policy control function network element, wherein the communication message comprises the proximity-based services authorization information.

31. The authorization method according to any one of claims 18 to 30, wherein the method further comprises:
sending an authorization information request message to the policy control function network element, wherein the authorization information request message is for requesting the proximity-based services authorization information of the terminal device.

32. An authorization method, comprising:
receiving an authentication server function network element identifier get request message from an access and mobility management function network element, wherein the authentication server function network element identifier get request message comprises a proximity-based services key identifier and a relay service code, or the authentication server function network element identifier get request message comprises a subscription concealed identifier and a relay service code; and the relay service code identifies a connection service provided by a relay device for a remote device;
sending an authorization request message to an access and mobility management function network element determined based on the proximity-based services key identifier or the subscription concealed identifier, wherein the authorization request message comprises the relay service code, and the authorization request message is for requesting to verify whether a terminal device is authorized to use the relay service code; and
receiving an authorization response message from the access and mobility management function network element determined based on the proximity-based services key identifier or the subscription concealed identifier, wherein the authorization response message indicates whether the terminal device is authorized to use the relay service code.

33. The authorization method according to claim 32, wherein the method further comprises:
determining, based on proximity-based services subscription information of the terminal device, whether the terminal device is authorized to serve as a remote terminal device.

34. The authorization method according to claim 33, wherein the sending an authorization request message to an access and mobility management function network element determined based on the proximity-based services key identifier or the subscription concealed identifier comprises:
when the terminal device is authorized to serve as the remote terminal device, sending the authorization request message to the access and mobility management function network element determined based on the proximity-based services key identifier or the subscription concealed identifier.

35. The authorization method according to any one of claims 32 to 34, wherein when the authorization response message indicates that the terminal device is authorized to use the relay service code, the method further comprises:
sending an authentication server function network element identifier get response message to the access and mobility management function network element, wherein the authentication server function network element identifier get response message comprises an authentication server function network element instance identifier.

36. The authorization method according to any one of claims 32 to 34, wherein when the authorization response message indicates that the terminal device is authorized to use the relay service code, the method further comprises:
sending a proximity-based services request message to an authentication server function network element, wherein the proximity-based services request message comprises the subscription permanent identifier, the relay service code, and a nonce.

37. The authorization method according to claim 36, wherein the method further comprises:
receiving a proximity-based services response message from the authentication server function network element, wherein the proximity-based services response message comprises a key and a freshness parameter; and
sending a key get response message to the access and mobility management function network element, wherein the key get response message comprises the key and the freshness parameter.

38. A communication apparatus, wherein the communication apparatus comprises a unit or a module configured to perform the method according to any one of claims 1 to 37.

39. A communication apparatus, wherein the communication apparatus comprises a processor, and the processor is configured to perform the authorization method according to any one of claims 1 to 37.

40. A computer-readable storage medium, wherein the computer-readable storage medium stores a computer program or instructions; and when the computer program or the instructions are run on a computer, the authorization method according to any one of claims 1 to 37 is enabled to be performed.

41. A computer program product, wherein the computer program product comprises a computer program or instructions; and when the computer program or the instructions are run on a computer, the authorization method according to any one of claims 1 to 37 is enabled to be performed.
